(19) Europäisches Patentamt
European Patent Office
Office européen des brevets

(11) **EP 4 660 681 A1**

(12) **EUROPEAN PATENT APPLICATION**
published in accordance with Art. 153(4) EPC

(43) Date of publication:
**10.12.2025 Bulletin 2025/50**

(51) International Patent Classification (IPC):
**G02B 15/14** (2006.01)

(21) Application number: **24858532.5**

(22) Date of filing: **26.08.2024**

(86) International application number:
**PCT/CN2024/114613**

(87) International publication number:
**WO 2025/044996 (06.03.2025 Gazette 2025/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **31.08.2023 CN 202311129967**

(71) Applicant: **Huawei Technologies Co., Ltd.
Shenzhen, Guangdong 518129 (CN)**

(72) Inventors:
• ZHANG, Yi
  Shenzhen, Guangdong 518129 (CN)
• ZHANG, Kaiyuan
  Shenzhen, Guangdong 518129 (CN)

(74) Representative: **Grünecker Patent- und
Rechtsanwälte
PartG mbB
Leopoldstraße 4
80802 München (DE)**

(54) **LENS ASSEMBLY, CAMERA MODULE, AND ELECTRONIC DEVICE**

(57)    A lens assembly (10), a camera module (110), and an electronic device (100) are provided, and relate to the field of camera technologies. The lens assembly (10) may include a first lens element unit (101) and a second lens element unit (102) that are arranged along an optical axis from an object side to an image side, and the second lens element unit (102) may move along the optical axis toward the image side, to switch the lens assembly (10) between an infinity state and a macro state, so that the lens assembly (10) can implement a telephoto function and a macro function. In addition, focal powers of the first lens element unit (101) and the second lens element unit (102) and a focal power of a first lens element (11) closest to the object side are properly allocated, to increase an amount of admitted light, so that the lens assembly has a wide-aperture feature, implements a long-focus telephoto function and a macro function with a high definition and a high magnification rate, and ensures high-quality imaging in a distant image-shooting scene and high-definition imaging in a close-up image-shooting scene.

[FIG. 2]

**Description**

This application claims priority to Chinese Patent Application 202311129967.5, filed with the China National Intellectual Property Administration on August 31, 2023 and entitled "LENS ASSEMBLY, CAMERA MODULE, AND ELECTRONIC DEVICE", which is incorporated herein by reference in its entirety.

TECHNICAL FIELD

This application relates to the field of camera technologies, and in particular, to a lens assembly, a camera module, and an electronic device.

BACKGROUND

In recent years, with development of camera technologies, camera modules have become indispensable functional components in electronic products such as mobile phones, tablet computers, notebook computers, and wearable devices. As electronic devices evolve toward multi-functionality, image-shooting effect of the electronic devices and image-shooting requirements for the electronic devices increasingly rival those of single-lens reflex cameras. Therefore, functional effect of the camera modules gradually becomes one of important characteristics of the electronic devices.

Currently, the camera module usually includes a lens assembly and an image sensor. The lens assembly usually includes a plurality of lens elements that are sequentially arranged along an optical axis. Light passes through the lens assembly and is then projected onto the image sensor, to implement photoelectric conversion and further implement imaging. Therefore, performance of the lens assembly directly determines imaging performance of the camera module. A wide-aperture design facilitates functions of a camera, such as night photography, snapshot, video, and background blurring. In addition, in different image-shooting scenes, for example, when image shooting is performed on a distant object in a dark or night image-shooting environment, the lens assembly needs a wide aperture, so that an amount of admitted light can be increased to achieve better image-shooting effect and satisfy an image-shooting requirement for a distant infinity scene. In a close-up image-shooting scene, for example, when image shooting is performed on a close-up object like a flower, a doll, or an insect, a wide-aperture lens assembly has higher definition, and can achieve image-shooting effect of details of such object in a close-up macro scene.

Therefore, a wide-aperture lens assembly is urgently needed to meet a high-quality image-shooting requirement for a distant image-shooting scene, and further implement a high-resolution macro image-shooting function.

SUMMARY

Embodiments of this application provide a lens assembly, a camera module, and an electronic device. The lens assembly can implement a wide-aperture design, implement a telephoto image-shooting function, meet a high-quality imaging requirement for a distant image-shooting scene, also implement a macro image-shooting function with a high magnification rate and high resolution, and meet a high-definition imaging requirement for a close-up image-shooting scene.

A first aspect of embodiments of this application provides a lens assembly, including at least a first lens element unit and a second lens element unit that are sequentially arranged along an optical axis from an object side to an image side, where the first lens element unit and the second lens element unit each include a lens element with a focal power, the first lens element unit has a positive focal power, and the second lens element unit has a negative focal power. An architecture in which there are two lens element units is used, and focal powers of the first lens element unit and the second lens element unit are properly allocated, to help implement a wide-aperture design of the lens assembly.

The second lens element unit is movably disposed along the optical axis, and the second lens element unit moves toward the image side along the optical axis, so that the lens assembly switches from an infinity state to a macro state, and the lens assembly can have a telephoto image-shooting function and a macro image-shooting function. In addition, the wide-aperture design of the lens assembly can ensure a requirement of the lens assembly in a distant image-shooting scene, implement a long-focus telephoto function of the lens assembly, ensure high-quality imaging in the distant image-shooting scene, and improve resolution of the lens assembly in a close-up image-shooting scene. This helps implement a macro function with a high magnification rate and high resolution, and ensures high-definition imaging in the close-up image-shooting scene.

The lens element of the first lens element unit includes at least a first lens element, and the first lens element is located on a side that is of the first lens element unit and that is close to the object side. The first lens element satisfies a conditional expression: $|(R11+R12)/f1|>2.3$, where R11 is a curvature radius of an object side surface of the first lens element, R12 is a curvature radius of an image side surface of the first lens element, and f1 is a focal length of the first lens element. The first lens element is used as a lens element that has a focal power and that is closest to the object side in the first lens element unit and the second lens element unit, and light first passes through the first lens element when entering the first lens element unit and the second lens element unit. With reference to the foregoing architecture in which there are two lens element units, the first lens element unit meets the foregoing conditional expression, so that the focal power of the first lens element can be more properly allocated. This helps improve a refraction capability of the first lens element, increase an amount of admitted light of the lens assembly, and implement the wide-aperture design of the lens assembly.

The lens assembly satisfies a conditional expression: 0.75<fl/EFL1<1, where EFL1 is a focal length of the lens assembly in the infinity state. When the lens assembly has a long-focus feature in the distant image-shooting scene, it is ensured that the first lens element has a stronger refraction capability, and the focal power of the first lens element is more properly allocated. This further helps increase an aperture design of the lens assembly.

In a possible implementation, an f-number F#1 of the lens assembly in the infinity state satisfies a conditional expression: 1.0<F#1<2.5. A small f-number indicates a wide-aperture feature of the lens assembly. In this case, a large amount of admitted light of the lens assembly is ensured, the long-focus telephoto function can be achieved better, and high-quality imaging in the distant image-shooting scene is ensured.

In a possible implementation, an f-number F#2 of the lens assembly in the macro state satisfies a conditional expression: 1.0<F#2<3. The f-number is very small, and is close to the f-number in the infinity state. This significantly improves resolution of the lens assembly, can better implement the macro function, and implements high-definition imaging in the close-up image-shooting scene.

In a possible implementation, a magnification rate Mag of the lens assembly in the macro state satisfies a conditional expression: 0.15x<Mag<0.5x. The lens assembly has a high magnification rate, and can better meet a requirement of the close-up macro image-shooting scene, to further improve imaging quality and imaging effect of the lens assembly in the close-up image-shooting scene.

In a possible implementation, the lens assembly further satisfies a conditional expression: 0.1<|G1/EFL1|<0.9, where G1 is a focal length of the first lens element unit. The focal power of the first lens element unit is properly allocated, so that the first lens element unit has a large refraction capability. This helps increase an aperture of the lens assembly, and implements high-quality imaging of the lens assembly in the distant image-shooting scene.

In a possible implementation, the lens assembly further satisfies a conditional expression: 0.1<|G2/EFL1|<0.9, where G2 is a focal length of the second lens element unit. The focal power of the second lens element unit is properly allocated, so that the second lens element unit also has a large refraction capability. This also helps increase an aperture of the lens assembly, and implements high-quality imaging of the lens assembly in the distant image-shooting scene.

In a possible implementation, the lens assembly further satisfies a conditional expression: 0.15<|EFL2/TTL| <0.95, where TTL is a total track length of the lens assembly, and EFL2 is a focal length of the lens assembly in the macro state. The lens assembly has a small focal length in the macro state, so that the total track length TTL of the lens assembly is also small, and the lens assembly can implement a small-size design. This helps meet a thinning design requirement of a camera module and an electronic device.

In a possible implementation, the lens assembly further satisfies a conditional expression: 1.1<EFL1/EFL2<3.2, where EFL2 is the focal length of the lens assembly in the macro state. In this way, when the lens assembly has a better long-focus feature in the distant image-shooting scene, it can be ensured that the lens assembly has a higher magnification rate in the macro state. This helps implement close-up macro image-shooting effect with high-quality imaging and a high magnification rate in the distant image-shooting scene.

In a possible implementation, a refractive index Nd1 of the first lens element satisfies a conditional expression: 1.4<Nd1<1.85. The first lens element has a low refractive index, so that imaging quality can be effectively improved, an aperture of the lens assembly can be increased, and imaging quality is improved.

In a possible implementation, a molding material of the first lens element is glass or plastic. Both the glass and the plastic have low costs. This helps reduce costs of the lens assembly. In addition, the lens assembly has high design flexibility, which facilitates promotion and production.

In a possible implementation, a shape of the lens element includes at least one or a combination of the following: a circle, an ellipse, a track oval, and a square. This helps improve design flexibility of the lens element. The lens element in the shape of the track oval, the square, or the like may be formed by cutting a round lens element or an elliptical lens element. This helps reduce a size of the lens element and reduce space occupied by the lens element, and implement a small size and thinning design of the lens assembly.

In a possible implementation, the first lens element unit includes the first lens element, a second lens element, and a third lens element that are sequentially arranged along the optical axis from the object side to the image side. The first lens element has a positive focal power, the second lens element has a negative focal power, and the third lens element has a positive focal power. The second lens element unit includes a fourth lens element, a fifth lens element, and a sixth lens element that are sequentially arranged from the object side to the image side along the optical axis. The fourth lens element has a negative focal power, the fifth lens element has a positive focal power, and the sixth lens element has a negative focal power. An architecture in which three lens elements are used as one lens element unit is used, so that the formed lens assembly is simple, has a small size, and has low costs. In addition, a focal power of each lens element is properly allocated, to further increase an aperture of the lens assembly, and implement the wide-aperture design of the lens assembly.

A second aspect of embodiments of this application provides a camera module, including at least an image sensor and the lens assembly according to any one of the foregoing implementations, where the image sensor is located on a side that is of the lens assembly and that faces an image side.

The lens assembly is included. The lens assembly has a wide-aperture feature, and the lens assembly further has a telephoto function and a macro function. Therefore, high-quality imaging of a distant image-shooting scene can be implemented, and high resolution and a high magnification rate of a close-up image-shooting scene can also be implemented, thereby enriching image-shooting functions of the camera module, and ensuring high-quality imaging of the camera module in the distant image-shooting scene and the close-up image-shooting scene. In addition, the lens assembly has a small size and low costs. This helps implement a thinning design of the camera module.

A third aspect of embodiments of this application provides an electronic device, including at least a housing and the foregoing camera module, where the camera module is disposed on the housing.

The camera module is included. The camera module can meet a distant image-shooting requirement and an imaging requirement of close-up image-shooting, and implement high-quality imaging in distant and close-up image-shooting scenes. This helps improve performance of the electronic device, and can also meet a thinning design requirement of the electronic device.

BRIEF DESCRIPTION OF DRAWINGS

FIG. 1 is a diagram of a structure of an electronic device according to an embodiment of this application;
FIG. 2 is a diagram of a structure of a camera module in which a lens assembly is in an infinity state according to an embodiment of this application;
FIG. 3 is a diagram of a structure of a camera module in which a lens assembly is in a macro state according to an embodiment of this application;
FIG. 4 is a diagram of a simulated structure of a camera module in which a lens assembly is in an infinity state according to Embodiment 1 of this application;
FIG. 5 is a diagram of a simulated structure of a camera module in which a lens assembly is in a macro state according to Embodiment 1 of this application;
FIG. 6a is a curve diagram of a modulation transfer function for a lens assembly in an infinity state according to Embodiment 1 of this application;
FIG. 6b is a curve diagram of a modulation transfer function for a lens assembly in a macro state according to Embodiment 1 of this application;
FIG. 7 is a diagram of a simulated structure of a camera module in which a lens assembly is in an infinity state according to Embodiment 2 of this application;
FIG. 8 is a diagram of a simulated structure of a camera module in which a lens assembly is in a macro state according to Embodiment 2 of this application;
FIG. 9a is a curve diagram of a modulation transfer function for a lens assembly in an infinity state according to Embodiment 2 of this application;
FIG. 9b is a curve diagram of a modulation transfer function for a lens assembly in a macro state according to Embodiment 2 of this application;
FIG. 10 is a diagram of a simulated structure of a camera module in which a lens assembly is in an infinity state according to Embodiment 3 of this application;
FIG. 11 is a diagram of a simulated structure of a camera module in which a lens assembly is in a macro state according to Embodiment 3 of this application;
FIG. 12a is a curve diagram of a modulation transfer function for a lens assembly in an infinity state according to Embodiment 3 of this application;
FIG. 12b is a curve diagram of a modulation transfer function for a lens assembly in a macro state according to Embodiment 3 of this application;
FIG. 13 is a diagram of a simulated structure of a camera module in which a lens assembly is in an infinity state according to Embodiment 4 of this application;
FIG. 14 is a diagram of a simulated structure of a camera module in which a lens assembly is in a macro state according to Embodiment 4 of this application;
FIG. 15a is a curve diagram of a modulation transfer function for a lens assembly in an infinity state according to Embodiment 4 of this application;

FIG. 15b is a curve diagram of a modulation transfer function for a lens assembly in a macro state according to Embodiment 4 of this application;

FIG. 16 is a diagram of a simulated structure of a camera module in which a lens assembly is in an infinity state according to Embodiment 5 of this application;

FIG. 17 is a diagram of a simulated structure of a camera module in which a lens assembly is in a macro state according to Embodiment 5 of this application;

FIG. 18 is a diagram of a simulated structure of a camera module in which a lens assembly is in an infinity state according to Embodiment 6 of this application;

FIG. 19 is a diagram of a simulated structure of a camera module in which a lens assembly is in a macro state according to Embodiment 6 of this application;

FIG. 20 is a curve diagram of a modulation transfer function for a lens assembly in an infinity state according to Embodiment 6 of this application;

FIG. 21 is a diagram of a simulated structure of a camera module in which a lens assembly is in an infinity state according to Embodiment 7 of this application;

FIG. 22 is a diagram of a simulated structure of a camera module in which a lens assembly is in a macro state according to Embodiment 7 of this application;

FIG. 23 is a curve diagram of a modulation transfer function for a lens assembly in an infinity state according to Embodiment 7 of this application;

FIG. 24 is a diagram of a simulated structure of a camera module in which a lens assembly is in an infinity state according to Embodiment 8 of this application;

FIG. 25 is a diagram of a simulated structure of a camera module in which a lens assembly is in a macro state according to Embodiment 8 of this application;

FIG. 26 is a diagram of a simulated structure of a camera module in which a lens assembly is in an infinity state according to Embodiment 9 of this application;

FIG. 27 is a diagram of a simulated structure of a camera module in which a lens assembly is in a macro state according to Embodiment 9 of this application;

FIG. 28 is a curve diagram of a modulation transfer function for a lens assembly in an infinity state according to Embodiment 9 of this application;

FIG. 29 is a diagram of a simulated structure of a camera module in which a lens assembly is in an infinity state according to Embodiment 10 of this application;

FIG. 30 is a diagram of a simulated structure of a camera module in which a lens assembly is in a macro state according to Embodiment 10 of this application;

FIG. 31 is a curve diagram of a modulation transfer function for a lens assembly in an infinity state according to Embodiment 10 of this application;

FIG. 32 is a diagram of a simulated structure of a camera module in which a lens assembly is in an infinity state according to Embodiment 11 of this application;

FIG. 33 is a diagram of a simulated structure of a camera module in which a lens assembly is in a macro state according to Embodiment 11 of this application;

FIG. 34 is a diagram of a simulated structure of a camera module in which a lens assembly is in an infinity state according to Embodiment 12 of this application; and

FIG. 35 is a diagram of a simulated structure of a camera module in which a lens assembly is in a macro state according to Embodiment 12 of this application.

Reference numerals:

100: electronic device;
110: camera module;
10: lens assembly;
101: first lens element unit;
11: first lens element; 12: second lens element; 13: third lens element;
102: second lens element unit;
14: fourth lens element; 15: fifth lens element; 16: sixth lens element;
103: stop;
20: image sensor;
30: light filter;
120: housing;

130: speaker hole; and
140: data interface.

DESCRIPTION OF EMBODIMENTS

Terms used in implementations of this application are merely used to explain specific embodiments of this application, but are not intended to limit this application.

For ease of understanding, related technical terms in embodiments of this application are first explained and described.

Object side: With a lens assembly as a boundary, a side on which a photographed object is located is the object side. A surface that is of a lens element or an optical element and that faces the object side is an object side surface.

Image side: With a lens assembly as a boundary, a side on which an image of a photographed object is located is an image side. A surface that is of a lens element or an optical element and that faces the image side is an image side surface.

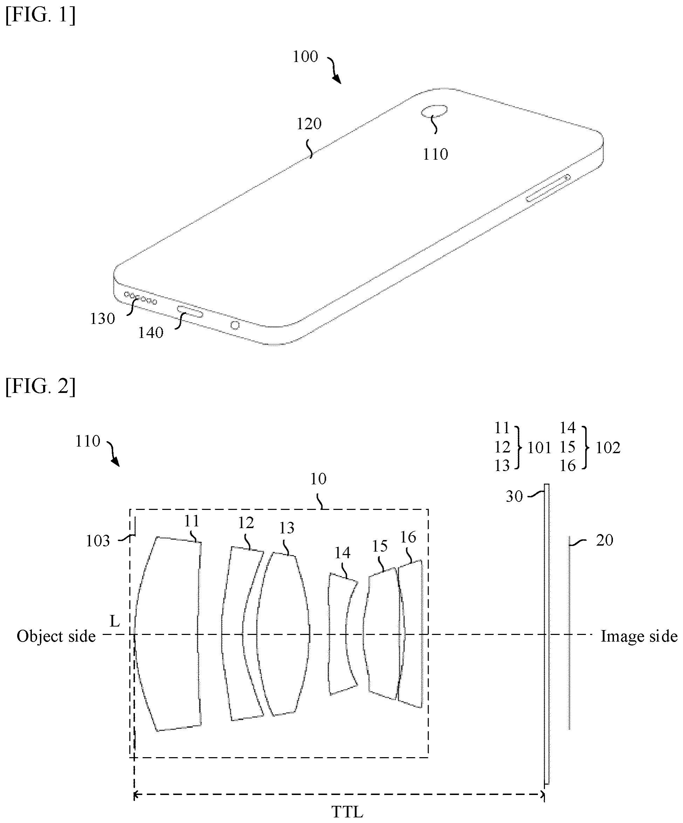

An optical axis refers to light passing through a center of each lens element of a lens assembly (refer to a virtual axis L in FIG. 2).

An imaging surface is a carrier plane that is located on image sides of all lens elements in a lens assembly and on which an image is formed after light sequentially passes through the lens elements in the lens assembly. In embodiments of this application, the imaging surface may be a photosensitive surface of an image sensor.

A half of image height (half of image height, IMH for short in embodiments of this application) is a half of a full-image height of an image formed by a lens assembly, and is a maximum radius of an imaging circle.

A focal power is equal to a difference between a convergence degree of an image-side light beam and a convergence degree of an object-side light beam, and may represent a capability of a lens element to refract incident parallel light beams.

A positive focal power indicates that a lens element has a positive focal length and has effect of converging light.

A negative focal power indicates that a lens element has a negative focal length and has effect of diverging light.

Abbe number, also referred to as a dispersion coefficient, is a difference ratio of refractive indexes of an optical material at different wavelengths, and indicates a dispersion degree of the material.

A refractive index is a ratio of a speed of light in vacuum (air) to a speed of light in a lens element material. A higher refractive index of the lens element indicates a stronger capability of refracting incident light. A higher refractive index indicates a thinner lens element. To be specific, in lens elements with same center thicknesses, a lens element with a higher refractive index has a thinner edge than a lens element with a lower refractive index in case of a same prescription and a same material.

A curvature radius is the reciprocal of a curvature. The curvature of a plane curve is a rotation rate of a tangent angle of a point on the curve to an arc length. The curvature is defined by the differential, indicating a degree that the curve deviates from a straight line.

Focal length, also referred to as a focal length, is usually expressed as an effective focal length (Effective Focal Length, EFL for short), to be distinguished from parameters such as a front focal length and a back focal length. The focal length or the effective focal length is a measure of how strongly an optical system converges or diverges light, and is a vertical distance between an optical center of a lens element or a lens element group and a focal plane when a clear image of a scene at infinity is formed on the focal plane through the lens element or the lens element group. From a practical perspective, the focal length may be understood as a distance between a center of the lens assembly and an imaging plane.

Infinity: When an object distance exceeds a specific value, a photographed object may be considered as being captured by the lens assembly from a light point at infinity in a form of parallel light beams. When the lens assembly is in an infinity ($\infty$) state, that is, the lens assembly is focused at "$\infty$", all scenes at infinity can be clearly imaged.

Macro refers to image-shooting at a short distance with a high magnification, making it possible to shoot an image that is the same size as or smaller than an actual object. In a macro state, a lens assembly has a magnification rate of 1x or higher, and a short minimum object distance. In the macro state, the lens assembly may have a focal length smaller than a focal length of the lens assembly in an infinity state, and has high resolution, so that the object is shot more clearly.

An aperture is an apparatus configured to control an amount of light entering a photosensitive surface in a camera module through the lens element or the lens element group, and is usually fastened in the camera module. A size of the aperture is expressed as an F# value.

A F-number F# is a relative value (a reciprocal of a relative aperture) obtained by dividing a focal length of the lens assembly by a diameter of a clear aperture of the lens assembly. As the f-number F# decreases, an amount of admitted light within a same unit of time increases, and a depth of field decreases. In this case, shot background content blurs, resulting in effect similar to that of a long-focus lens element.

An amount of admitted light is an amount of light transmitted to a photosensitive surface through the lens element or the lens element group (the lens assembly).

A target surface is a photosensitive surface of an image sensor. A larger target surface indicates a larger amount of light sensed by the image sensor and a larger image height of imaging.

A total track length (total track length, TTL for short) is also referred to as a total height or a total length, and is a total length, on an optical axis, from an object side surface of a lens element disposed closest to an object side in a lens assembly to an imaging plane, and is a main factor for forming a height of a camera module. In this application, as shown in FIG. 2, the total track length TTL may be a length, on the optical axis, from the object side surface of the lens element (for example, the first lens element 11) disposed closest to the object side to the photosensitive surface of the image sensor.

A modulation transfer function (modulation transfer function, MTF) is an evaluation quantity of system imaging quality.

An embodiment of this application provides an electronic device. The electronic device may include but is not limited to a mobile phone, a tablet computer (tablet personal computer), a notebook computer, a camera, an ultra-mobile personal computer (ultra-mobile personal computer, UMPC for short), a handheld computer, a walkie-talkie, a netbook, a POS terminal, a personal digital assistant (PDA), a wearable device, a virtual reality (virtual reality, VR for short) device (for example, VR glasses, and a VR helmet), an augmented reality (augmented reality, AR for short) device (for example AR glasses and an AR helmet), a vehicle-mounted device, and a surveillance camera device that can implement an image-shooting function.

In embodiments of this application, an example in which the electronic device is a mobile phone is used. The mobile phone may be a bar phone, or the mobile phone may be a foldable phone. Specifically, the following uses an example in which the electronic device is a bar phone for description.

FIG. 1 is a diagram of a structure of an electronic device according to an embodiment of this application.

Refer to FIG. 1. The electronic device 100 may include a housing 120 and a camera module 110. The housing 120 may be used as a main bearing mechanical part of the electronic device 100, and the camera module 110 may be disposed on the housing 120. For example, the housing 120 may have an accommodating cavity (not shown in the figure) inside. The camera module 110 may be assembled on the housing 120, and at least a part of the camera module 110 may be located in the accommodating cavity of the housing 120.

The camera module 110 is configured to implement an image-shooting function, for example, may be configured to: take a photo and record an image. An image-shooting scene of the camera module 110 may include various complex and diversified image-shooting application scenes, for example, different scenes such as an indoor scene, an outdoor scene, a portrait scene, and an environment scene.

The electronic device 100 may further include a display (not shown in the figure). The display may be fastened to one side of the housing 120, and a plane on which the display is located may be used as a display surface of the electronic device 100, to display an image and the like.

In this embodiment of this application, the side on which the display surface of the electronic device 100 is located is used as a front surface of the electronic device 100, and a side opposite to the front surface is used as a back surface of the electronic device 100. The camera module 110 may be a front-facing camera lens. For example, a light inlet of the camera module 110 may be located on the front surface of the electronic device 100, and is configured to take a selfie or perform image shooting on another object.

Alternatively, the camera module 110 may be a rear-facing camera lens. As shown in FIG. 1, a light inlet of the camera module 110 may be located on the back surface of the electronic device 100, and is configured to perform image shooting on another object, and certainly may also be configured to take a selfie.

The electronic device 100 may include one or more camera modules 110, to satisfy different image shooting requirements.

The electronic device 100 may further include another mechanical part. For example, still with reference to FIG. 1, the electronic device 100 may further include a speaker hole 130. The speaker hole 130 may be provided on the housing 120, and the speaker 130 may be used for playing an audio and the like of the electronic device 100. A sound-emitting device (not shown in the figure) may be further disposed in the accommodating cavity of the housing 120. The sound-emitting device may be configured to form a sound, and the sound-emitting device may be connected to the speaker hole 130, so that the sound can be propagated through the speaker hole 130.

The electronic device 100 may further have a data interface 140. The data interface 140 may be disposed on the housing 120. A control circuit board (not shown in the figure) may be further disposed in the accommodating cavity of the housing 120. The control circuit board may be connected to the data interface 140. The data interface 140 may be configured to supply power to the electronic device 100, or the data interface 140 may be configured to connect the electronic device 100 to a headset, an external multimedia device, or the like (for example, an external camera or an external projection device).

It may be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or different component arrangements may be used. For example, the electronic device 100 may further include components such as a sensor, a processor, a drive structure, and a flash.

The camera module usually includes a lens assembly and an image sensor. Light may enter the camera module through the lens assembly. Specifically, light reflected by a photographed object may pass through the lens assembly. The lens assembly is configured to form an optical image (an optical signal) of the photographed object, for example, the lens assembly may adjust and control a light path to form an optical image, and irradiate the optical image to the image sensor. The image sensor can implement a photoelectric conversion function. The image sensor receives the optical image and converts the optical image into an electrical signal for imaging and display.

Therefore, optical performance of the lens assembly greatly affects imaging quality and imaging effect of the camera module. As an image shooting requirement for a device like a mobile phone continuously increases, an aperture of the lens assembly and an applicable image shooting scene are increasingly required, and a wide-aperture design of the lens assembly can increase an overall amount of admitted light of the lens assembly, to facilitate functions such as night photography, background blurring, and snapshot. In addition, in an image shooting environment like a dark environment or a night, when image shooting is performed on a distant object, the wide aperture increases the amount of admitted light, so that a better image can be obtained through image shooting. In a close-up image-shooting scene, for example, when image shooting is performed on a close-up object like a flower, a doll, or an insect, a wide-aperture lens assembly has better definition, ensures good resolution, and can achieve clear imaging for details of the object.

Based on this, an embodiment of this application provides a lens assembly. An architecture in which there are two lens element units is used, and a lens element unit adjacent to an image side is movable, so that the lens assembly can switch from an infinity state to a macro state, and the lens assembly may implement telephoto and macro image-shooting functions. In addition, lens element units, focal powers of lens elements, and the like are properly allocated, so that the lens assembly has features of a wide aperture, a small size, low costs, and high resolution, thereby meeting a high-quality imaging requirement in a distant image-shooting scene. In addition, a macro function with a high magnification rate and high resolution can be implemented, to meet a high-definition imaging requirement in the close-up image-shooting scene.

The following describes in detail, with reference to the accompanying drawings, the lens assembly and a camera module including the lens assembly provided in embodiments of this application.

FIG. 2 is a diagram of a structure of a camera module in which a lens assembly is in an infinity state according to an embodiment of this application.

Refer to FIG. 2. The camera module 110 may include a lens assembly 10 and an image sensor 20. The image sensor 20 may be located on a side that is of the lens assembly 10 and that faces an image side, that is, the lens assembly 10 may be located between a photographed object and the image sensor 20. A photosensitive surface (which may also be referred to as an imaging surface) of the image sensor 20 may face the lens assembly 10.

Light reflected by the photographed object enters the camera module 110, and is imaged and irradiated on the photosensitive surface of the image sensor 20 after passing through the lens assembly 10. The photosensitive surface of the image sensor 20 receives an optical image, converts the optical image into an image electrical signal, and outputs the image electrical signal, to implement a function like photo taking or video recording of the camera module 110.

To ensure photo-sensitivity of the image sensor 20, the image sensor 20 may be located in an accommodating cavity inside a housing of the electronic device. The lens assembly 10 may be located on a side that is of the image sensor 20 and that faces a display, or the lens assembly 10 may be located on a side that is of the image sensor 20 and that is away from the display.

The image sensor 20 may be a charge-coupled device (charge-coupled device, CCD for short), or may be a complementary metal oxide semiconductor (complementary metal oxide semiconductor, CMOS for short). Alternatively, the image sensor 20 may be another device that can implement a photoelectric conversion function.

Still refer to FIG. 2. The camera module 110 may further include a light filter 30. The light filter 30 may be located between the lens assembly 10 and the image sensor 20. A dashed line L in FIG. 2 is used as an optical axis, and the lens assembly 10, the light filter 30, and the image sensor 20 are sequentially arranged along the optical axis L from an object side to an image side. Light entering the camera module 110 sequentially passes through the lens assembly 10 and the light filter 30, and then is irradiated on the photosensitive surface of the image sensor 20.

The light filter 30, having a light filtering function, allows light within a specific wavelength range to pass through, to filter out stray light that is not conducive to imaging. This helps improve imaging quality.

The camera module 110 may further include an image processor, a memory, and the like (not shown in the figure). The image sensor 20 may transmit an electrical signal obtained through conversion to the image processor, the memory, and the like for processing, and then transmit the processed electrical signal to the electronic device 100, to display an image of a photographed object through the display of the electronic device 100.

Certainly, in some other examples, the camera module 110 may further include another mechanical part, for example, a detection sensor, a drive structure, and a circuit board.

Still refer to FIG. 2. The lens assembly 10 may include at least a first lens element unit 101 and a second lens element unit 102 that are sequentially arranged along the optical axis L from the object side to the image side. The first lens element unit 101 may include a lens element with a focal power, and the second lens element unit 102 may also include a lens element with a focal power.

The lens assembly 10 may further include a lens barrel (not shown in the figure). The lens barrel may be used as a main bearing mechanical part of the lens assembly 10. The first lens element unit 101 and the second lens element unit 102 may be disposed in the lens barrel, and an optical axis of the lens assembly 10 may coincide with a central axis of the lens barrel. Light transmission holes may be provided at two opposite ends of the lens barrel along the optical axis, so that light can enter the lens barrel and pass through the lens assembly 10, and light passing through the lens assembly 10 can also be emitted to the image sensor 20.

The lens assembly 10 may further include a stop 103. The stop 103 may be located on a side that is of the first lens element unit 101 and that faces the object side. In other words, the stop 103 may be disposed closer to the object side than the first lens element unit 101 and the second lens element unit 102. The stop 103 may be fastened inside the lens barrel, for example, the stop 103 may be fastened to a lens element (for example, the first lens element 11) that is in the first lens element unit 101 and that is disposed closest to the object side.

Certainly, in some other examples, the stop 103 may alternatively be fastened outside the lens barrel. Light may first pass through the stop 103, and then is emitted after sequentially passing through the first lens element unit 101 and the second lens element unit 102. The stop 103 may limit an amount of light entering the lens assembly 10, to adjust intensity of the light, and may be used to control an amount of admitted light of the lens assembly 10.

There may be a plurality of lens elements in the first lens element unit 101, the plurality of lens elements may be sequentially arranged along the optical axis from the object side to the image side, and centers of the plurality of lens elements may overlap and are located on the optical axis.

For example, as shown FIG. 2, the first lens element unit 101 may include three lens elements with focal powers, for example, a first lens element 11, a second lens element 12, and a third lens element 13. The first lens element 11, the second lens element 12, and the third lens element 13 are sequentially arranged along the optical axis L from the object side to the image side. In other words, the first lens element 11 is a lens element that has a focal power and that is disposed closest to the object side in the first lens element unit 101. Alternatively, the first lens element 11 may be a lens element that has a focal power and that is disposed closest to the object side in the first lens element unit 101 and the second lens element unit 102.

Certainly, in some examples, there may alternatively be one lens element in the first lens element unit 101. For example, the first lens element unit 101 may include only the first lens element 11.

Correspondingly, there may alternatively be a plurality of lens elements in the second lens element unit 102, the plurality of lens elements are sequentially arranged along the optical axis from the object side to the image side, and centers of the plurality of lens elements may overlap and are located on the optical axis.

For example, still as shown in FIG. 2, the second lens element unit 102 may also include three lens elements with focal powers, for example, a fourth lens element 14, a fifth lens element 15, and a sixth lens element 16. The fourth lens element 14, the fifth lens element 15, and the sixth lens element 16 are sequentially arranged along the optical axis L from the object side to the image side. In other words, the sixth lens element 16 may be a lens element that has a focal power and that is disposed closest to the image side in the second lens element unit 102. Alternatively, the sixth lens element 16 may be a lens element that has a focal power and that is disposed closest to the image side in the first lens element unit 101 and the second lens element unit 102.

Certainly, in some examples, there may alternatively be one lens element in the second lens element unit 102. For example, the second lens element unit 102 may include only the sixth lens element 16.

In this embodiment of this application, the first lens element unit 101 includes three lens elements with focal powers, for example, the first lens element 11, the second lens element 12, and the third lens element 13. The second lens element unit 102 includes three lens elements with focal powers, for example, the fourth lens element 14, the fifth lens element 15, and the sixth lens element 16. An architecture in which one lens element unit includes three lens elements and there are two lens element units in total is used, so that the formed lens assembly 10 is simple, has a small size and low costs, is more likely to meet thinning requirements for the camera module and the electronic device, and is convenient in production, promotion, and implementation, to increase a yield rate of the lens assembly.

The first lens element unit 101 may have a positive focal power, and the second lens element unit 102 may have a negative focal power. Focal powers of the first lens element unit 101 and the second lens element unit 102 are properly allocated, to help implement a wide-aperture design of the lens assembly 10.

It should be noted that, when the first lens element unit 101 includes the plurality of lens elements, the plurality of lens elements may all have positive focal powers, or some of the plurality of lens elements may have positive focal powers, and some of the plurality of lens elements may have negative focal powers, so that the first lens element unit 101 obtained by combining the plurality of lens elements has a positive focal power.

For example, the first lens element 11 and the third lens element 13 in the first lens element unit 101 each may have a positive focal power, and the second lens element 12 may have a negative focal power. This helps better allocate focal powers of lens elements in the first lens element unit 101, thereby helping implement a wide-aperture design of the lens assembly 10.

Correspondingly, when the second lens element unit 102 includes the plurality of lens elements, the plurality of lens elements may all have negative focal powers, or some of the plurality of lens elements may have negative focal powers, and some of the plurality of lens elements may have positive focal powers, so that the second lens element unit 102 obtained by combining the plurality of lens elements has a negative focal power.

For example, the fourth lens element 14 and the sixth lens element 16 of the second lens element unit 102 each may have a negative focal power, and the fifth lens element 15 may have a positive focal power. This helps better allocate focal powers of lens elements in the second lens element unit 102, thereby implementing a wide-aperture design.

A curvature radius of an object side surface of the first lens element 11 is R11, a curvature radius of an image side surface of the first lens element 11 is R12, and a focal length of the first lens element 11 is f1. The first lens element 11 may satisfy a conditional expression: $|(R11+R12)/f1|>2.3$, and the first lens element 11 is used as a lens element that has a focal power and that is closest to the object side in the first lens element unit 101 and the second lens element unit 102, so that light first passes through the first lens element 11 when entering the first lens element unit 101 and the second lens element unit 102. With reference to the foregoing architecture in which there are two lens element units, the first lens element unit 101 satisfies the conditional expression, and the focal power of the first lens element 11 can be more properly allocated, to help improve a refraction capability of the first lens element 11, increase an amount of admitted light of the lens assembly 10, and implement a wide-aperture design of the lens assembly 10.

To meet requirements of a distant image-shooting scene and a close-up image-shooting scene, in this embodiment of this application, the second lens element unit 102 may be disposed in a movable manner, and the first lens element unit 101 may be fastened in an unmovable manner. The second lens element unit 102 moves to switch the lens assembly 10 between the infinity state and the macro state, to implement a telephoto function and a macro function. Specifically, the second lens element unit 102 may be movably disposed along the optical axis L. In other words, all lens elements of the second lens element unit 102 may move toward or away from the image side along the optical axis L.

For example, when the lens assembly 10 is in the infinity state, the lens assembly 10 has a telephoto function, and the lens assembly 10 may be configured to implement image shooting of a distant scene, especially telephoto image shooting in a dark or night environment like scenery, night, starry, galaxy, or aurora. As shown in FIG. 2, the second lens element unit 102 in the lens assembly 10 is disposed closer to the first lens element unit 101, and is disposed farther away from the image sensor 20 and the light filter 30. A wide-aperture design of the lens assembly 10 can increase an amount of admitted light, and improve imaging quality and imaging effect. In addition, the lens assembly 10 may have a long focal length, to implement a long-focus feature of the lens assembly 10, meet a requirement of a distant image-shooting scene, and ensure high-quality imaging effect in scenes such as a distant image-shooting scene.

When a focal length of the lens assembly 10 in the infinity state is EFL1, a range of a ratio of the focal length f1 of the first lens element 11 to the focal length EFL1 of the lens assembly 10 may be $0.75<f1/EFL1<1$. In this way, when the lens assembly 10 has a long-focus feature in the distant image-shooting scene, it is ensured that the first lens element 11 has a stronger refraction capability, and the focal power of the first lens element 11 is more properly allocated, to further help increase an aperture design of the lens assembly 10, and improve imaging quality and imaging effect of long-focus telephoto image-shooting.

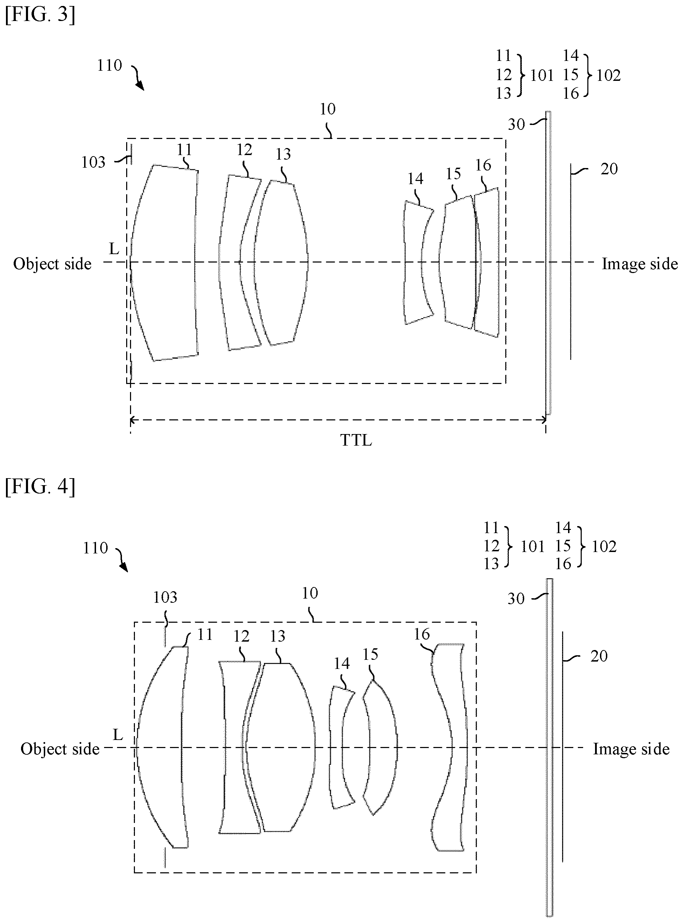

FIG. 3 is a diagram of a structure of a camera module in which a lens assembly is in a macro state according to an embodiment of this application.

When the lens assembly 10 is switched to the macro state, with reference to FIG. 2 and FIG. 3, the second lens element unit 102 may move along the optical axis L toward the image side, that is, move away from the first lens element unit 101, a distance between the second lens element unit 102 and the first lens element unit 101 on the optical axis L is increased, a focal length of the entire lens assembly 10 is reduced, and a magnification rate of the lens assembly 10 is increased, so that the lens assembly 10 can implement a macro function. In this way, the lens assembly 10 is switched from the infinity state to the macro state.

When the lens assembly 10 is in the macro state, the lens assembly 10 may be configured to implement image shooting of a close-up scene, for example, an image-shooting scene of a small object like a flower, a bird, a worm, an insect, or a fish. As shown in FIG. 3, the second lens element unit 102 in the lens assembly 10 is disposed closer to the image sensor 20 and the light filter 30, and is disposed farther away from the first lens element unit 101. A wide-aperture design of the lens assembly 10 can effectively increase an amount of admitted light in the macro state, increase resolution of the lens assembly 10, and facilitate implementation of a macro image-shooting function with a high magnification rate and high resolution, so that an image taken in the macro state can better present details, and enrich imaging effect to ensure high-definition imaging in a close-up image-shooting scene.

It may be understood that movement of the second lens element unit 102 can change a focal length of the lens assembly 10, or a focusing function of the lens assembly 10 may be implemented through movement of the second lens unit. This further helps implement high imaging quality.

To move the second lens element unit 102, for example, the camera module 110 may further include a lens element drive structure (not shown in the figure). For example, the lens element drive structure may be a drive chip, a drive motor, or the like. The lens element drive structure may be connected to the second lens element unit 102, and the lens element drive structure may drive a lens element of the second lens element unit 102 to move along the optical axis, to switch the lens assembly 10 between the infinity state and the macro state.

In this embodiment of this application, a movement track of the lens element in the second lens element unit 102 is not limited. For example, the lens element in the second lens element unit 102 may move along the optical axis in a straight line, or the lens element of the second lens element unit 102 may alternatively move relative to the optical axis while rotating around the optical axis.

It should be noted that, when the second lens element unit 102 includes a plurality of lens elements, a movement manner of all the lens elements in the second lens element unit 102 is not limited either. For example, all lens elements of the second lens element unit 102 may be used as a whole, and the lens element drive structure may drive the entire second lens element unit 102 to move along the optical axis.

Alternatively, there may be a plurality of lens element drive structures, one lens element drive structure may be connected to and cooperate with some lens elements in the second lens element unit 102, and the plurality of lens element drive structures may respectively drive corresponding lens elements to move along the optical axis. In this way, all lens elements of the second lens element unit 102 can move along the optical axis.

A mobile phone is used as an example to describe a scene in which the camera module 110 implements telephoto and macro image-shooting functions. For example, in a possible example, when a user enables an image-shooting function of the mobile phone (for example, starts a camera application on a display interface of a display of the mobile phone by tapping), and switches to a telephoto mode (for example, when the telephoto mode is selected on the display interface of the display) to perform image shooting, the lens assembly 10 is in the infinity state, so that the lens assembly 10 can implement high-quality image-shooting of a distant scene. When the user switches from the telephoto mode to the macro mode (for example, when the macro mode is selected on the display interface of the display) to perform image shooting, the lens element drive structure may drive the second lens element unit 102 to move in a direction from the optical axis to the image side, so that the lens assembly 10 is in the macro state, and the lens assembly 10 can implement high-quality image-shooting of a close-up scene.

Correspondingly, when the user enables the image-shooting function of the mobile phone and switches to the macro mode to perform image shooting, the lens assembly 10 is in the macro state, and the lens assembly 10 can implement high-quality image-shooting of a close-up scene. When the user switches from the macro mode to the telephoto mode to perform image shooting, the lens element drive structure may drive the second lens element unit 102 to move in a direction from the optical axis to the object side, so that the lens assembly 10 is in the infinity state, and the lens assembly 10 can implement high-quality image-shooting of a distant scene.

Alternatively, in another possible example, the camera module 110 may further implement automatic selection of an image-shooting mode. For example, when the user enables an image-shooting function of the mobile phone to perform image shooting, the camera module 110 may determine an applicable image-shooting mode based on current imaging effect of the image sensor 20. For example, when the camera module 110 determines that a current scene is applicable to image shooting in the telephoto mode, and the lens assembly 10 is currently in the macro state, the lens element drive structure may drive the second lens element unit 102 to move in the direction from the optical axis to the object side, so that the lens assembly 10 is in the infinity state.

Correspondingly, when the camera module 110 determines that the current scene is applicable to image-shooting in the macro mode, and the lens assembly 10 is currently in the infinity state, the lens element drive structure may drive the second lens element unit 102 to move in the direction from the optical axis to the image side, so that the lens assembly 10 is in the macro state.

In this embodiment of this application, an f-number of the lens assembly 10 in the infinity state is F#1, and a range of F#1 may be 1.0<F#1<2.5. The lens assembly 10 has a small f-number and has a feature of a wide aperture, to ensure that the lens assembly 10 has a high amount of admitted light, so that a long-focus telephoto function can be better implemented, and high-quality imaging in a distant image-shooting scene can be ensured.

An f-number of the lens assembly 10 in the macro state is F#2, and a range of F#2 may be 1.0<F#2<3. The f-number is very small and is close to the f-number in the infinity state. This significantly increases resolution of the lens assembly 10, can better implement a macro function, and implements high-definition imaging in a close-up image-shooting scene.

A magnification rate of the lens assembly 10 in the macro state is Mag, where the magnification rate Mag is a ratio of an image length to an object length. A range of the magnification rate Mag of the lens assembly 10 may be 0.15x<Mag<0.5x, and the lens assembly 10 has a high magnification rate. This can better meet a requirement of a close-up image-shooting scene, and further improve imaging quality and imaging effect of the lens assembly 10 in a close-up macro image-shooting scene.

A total track length TTL of the lens assembly 10 is used as an example. It may be understood that the total track length TTL of the lens assembly 10 may be a distance from the first lens element 11 to an imaging surface of the image sensor 20 on the optical axis L, and a total track length of the lens assembly 10 in the infinity state is consistent with a total track length of the lens assembly 10 in the macro state.

A focal length of the lens assembly 10 in the macro state is EFL2, and a range of a ratio of the focal length EFL2 of the lens assembly 10 in the macro state to the total track length TTL of the lens assembly 10 may be 0.15<|EFL2/TTL| <0.95. The lens assembly 10 has a small focal length in the macro state, so that the total track length TTL of the lens assembly 10 is also small. The lens assembly 10 can implement a small-size design, to help meet a thinning design requirement of the camera module and the electronic device.

A range of a ratio of a focal length EFL1 of the lens assembly 10 in the infinity state to the focal length EFL2 of the lens assembly 10 in the macro state may be 1.1<EFL1/EFL2<3.2, so that when the lens assembly 10 has a better long-focus feature in the distant image-shooting scene, it can be ensured that the lens assembly 10 has a higher magnification rate in the macro state. This helps implement close-up macro image-shooting effect with high-quality imaging and a high magnification rate in the distant image-shooting scene.

When a focal length of the first lens element unit 101 is G1, a range of a ratio of the focal length G1 of the first lens element unit 101 to the focal length EFL1 of the lens assembly 10 in the infinity state may be 0.1<|G1/EFL1|<0.9. A focal power of the first lens element unit 101 is properly allocated, so that when the lens assembly 10 has a long-focus feature, the first lens element unit 101 has a large refraction capability. This helps increase an aperture of the lens assembly 10, and implements high-quality imaging of the lens assembly 10 in the distant image-shooting scene.

When a focal length of the second lens element unit 102 is G2, a range of a ratio of the focal length G2 of the second lens element unit 102 to the focal length EFL1 of the lens assembly 10 in the infinity state may be 0.1<|G2/EFL1| <0.9. A focal power of the second lens element unit 102 is properly allocated, so that when the lens assembly 10 has a long-focus feature, the second lens element unit 102 also has a large refraction capability. This also helps increase an aperture of the lens assembly 10, and implements high-quality imaging of the lens assembly 10 in the distant image-shooting scene.

In this embodiment of this application, the lens elements included in the first lens element unit 101 and the second lens element unit 102 each may be an aspherical lens element. For example, the lens element may be an aspherical lens, and the aspherical lens element can reduce or eliminate a spherical aberration and a distortion aberration that are introduced by a spherical lens element. This can further help implement large-aperture performance of the lens assembly 10, and also help reduce a total length of the lens assembly 10.

A refractive index of the first lens element 11 is Nd1, and a value range of the refractive index Nd1 of the first lens element 11 may be 1.4<Nd1<1.85. The first lens element 11 has a low refractive index, so that imaging quality can be effectively improved, an aperture of the lens assembly 10 can be increased, and imaging quality is improved.

A molding material of the first lens element 11 may be plastic or glass. In other words, the first lens element 11 may be a plastic lens element or a glass lens element with low costs. This helps reduce costs of the lens assembly 10, has high design flexibility, facilitates promotion and production.

Molding materials of other lens elements in the first lens element unit 101 and the second lens element unit 102 may also be plastic or glass. For example, some lens elements are plastic lens elements, and some lens elements are glass lens elements.

The lens elements in the first lens element unit 101 and the second lens element unit 102 may be in a circular shape or an elliptical shape, have a wide application scope, and are easy to implement during production.

Alternatively, in some other examples, the shape of the lens element may be a track oval. For example, a lens element in a shape of a circle (or an ellipse) may be cut through ICUT cutting. To be specific, edges on two opposite sides of the lens element in the shape of a circle are cut off, so that a periphery of the lens element includes two opposite arc-shaped side walls and two opposite flat side walls, and an overall shape of the lens element is a track oval. Compared with the lens element in the shape of a circle, the lens element in the shape of a track oval can reduce a size of the lens element, and reduce space occupied by the lens element, so that the small-size designs of the lens assembly 10 and the camera module 110 can be achieved.

Alternatively, in some other examples, the shape of the lens element may be a square. For example, a lens element in a shape of a circle (or an ellipse) may be cut through SCUT cutting. To be specific, edges on a periphery of the lens element in the shape of a circle are cut, so that an overall shape of the lens element is a square, and the periphery of the lens element includes four flat side walls. The lens element in the shape of a square can also reduce a size of the lens element.

Certainly, in some other examples, the shape of the lens element may alternatively be another regular or irregular shape, and the lens element in another regular or irregular shape may be formed by cutting a lens element in the shape of a circle.

In this embodiment of this application, shapes of image side surfaces and object side surfaces of the plurality of lens elements in the lens assembly 10 are not limited. At least a part that is of the image side surface of the lens element and that corresponds to the optical axis may be convex or concave, and at least a part that is of the object side surface of the lens element and that corresponds to the optical axis may be convex or concave. Specific shapes may be selected and set according to on an actual requirement for lens element combination.

The following describes a structure and performance of the lens assembly provided in this application with reference to specific embodiments.

Embodiment 1

FIG. 4 is a diagram of a simulated structure of the camera module in which the lens assembly is in the infinity state according to Embodiment 1 of this application.

In this embodiment of this application, as shown in FIG. 4, the lens assembly 10 includes six lens elements with focal powers, and the first lens element unit 101 may include three lens elements with focal powers, for example, the first lens element 11, the second lens element 12, and the third lens element 13. The second lens element unit 102 may include three lens elements with focal powers, for example, the fourth lens element 14, the fifth lens element 15, and the sixth lens element 16. The first lens element 11, the second lens element 12, the third lens element 13, the fourth lens element 14, the fifth lens element 15, and the sixth lens element 16 are sequentially arranged along the optical axis L from the object side to the image side.

To be specific, in the camera module 110, the stop 103, the first lens element 11, the second lens element 12, the third lens element 13, the fourth lens element 14, the fifth lens element 15, the sixth lens element 16, the light filter 30, and the image sensor 20 are sequentially arranged along the optical axis L from the object side to the image side. Light entering the camera module 110 sequentially passes through the lens assembly 10 and the light filter 30 in the foregoing sequence and is irradiated onto the image sensor 20, and is finally imaged on the photosensitive surface of the image sensor 20.

The first lens element unit 101 has a positive focal power, and the second lens element unit 102 has a negative focal power.

Specifically, the first lens element 11 may have a positive focal power. At least a part that is of an object side surface of the first lens element 11 and that corresponds to the optical axis may be a convex surface, and at least a part that is of an image side surface of the first lens element 11 and that corresponds to the optical axis may be a convex surface.

The second lens element 12 may have a negative focal power. At least a part that is of an object side surface of the second lens element 12 and that corresponds to the optical axis may be a concave surface, and at least a part that is of an image side surface of the second lens element 12 and that corresponds to the optical axis may be a convex surface.

The third lens element 13 may have a positive focal power. At least a part that is of an object side surface of the third lens element 13 and that corresponds to the optical axis may be a convex surface, and at least a part that is of an image side surface of the third lens element 13 and that corresponds to the optical axis may be a concave surface.

The fourth lens element 14 may have a negative focal power. At least a part that is of an object side surface of the fourth lens element 14 and that corresponds to the optical axis may be a concave surface, and at least a part that is of an image side surface of the fourth lens element 14 and that corresponds to the optical axis may be a convex surface.

The fifth lens element 15 may have a positive focal power. At least a part that is of an object side surface of the fifth lens element 15 and that corresponds to the optical axis may be a concave surface, and at least a part that is of an image side surface of the fifth lens element 15 and that corresponds to the optical axis may be a concave surface.

The sixth lens element 16 may have a negative focal power. At least a part that is of an object side surface of the sixth lens element 16 and that corresponds to the optical axis may be a concave surface, and at least a part that is of an image side surface of the sixth lens element 16 and that corresponds to the optical axis may be a concave surface.

When the lens assembly 10 is in the infinity state, as shown in FIG. 4, the second lens element unit 102 is closer to the first lens element unit 101, and is farther away from the light filter 30 and the image sensor 20. When the lens assembly 10 switches from the infinity state to the macro state, the second lens element unit 102 moves toward the image side along the optical axis L.

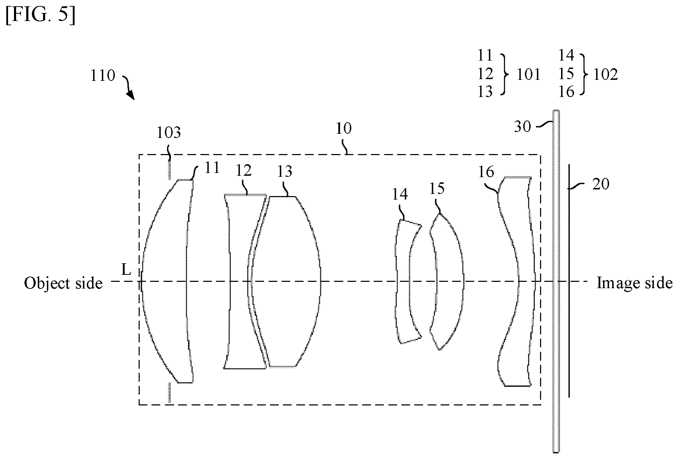

FIG. 5 is a diagram of a simulated structure of the camera module in which the lens assembly is in the macro state according to Embodiment 1 of this application.

As shown in FIG. 5, when the lens assembly 10 is in the macro state, the second lens element 12 is closer to the light filter 30 and the image sensor 20, and is farther away from the first lens element unit 101.

A curvature radius R11 of the object side surface of the first lens element 11 is equal to 5.57, a curvature radius R12 of the image side surface of the first lens element 11 is equal to 33.98, and a focal length f1 of the first lens element 11 is equal to 11.91. The first lens element 11 satisfies |(R11+R12)/f1|=3.32.

A focal length EFL1 of the lens assembly 10 in the infinity state is equal to 14.1, and a ratio f1/EFL1 of a focal length f1 of the first lens element 11 to the focal length EFL1 of the lens assembly 10 in the infinity state is equal to 0.83.

A refractive index Nd1 of the first lens element 11 is equal to 1.547.

A f-number F#1 of the lens assembly 10 in the infinity state is equal to 2.03. A f-number F#2 of the lens assembly 10 in the macro state is equal to 2.02.

A magnification rate Mag of the lens assembly 10 in the macro state is equal to 0.3 15x.

A focal length G1 of the first lens element unit 101 is equal to 7.38, and a ratio |G1/EFL1| of the focal length G1 of the first lens element unit 101 to the focal length EFL1 of the lens assembly 10 in the infinity state is equal to 0.52.

A focal length G2 of the second lens element unit 102 is equal to -6.02, and a ratio |G2/EFL1| of the focal length G2 of the second lens element unit 102 to the focal length EFL1 of the lens assembly 10 in the infinity state is equal to 0.43.

A focal length EFL2 of the lens assembly 10 in the macro state is equal to 8.46, a total track length TTL of the lens assembly 10 is equal to 14.72, and a ratio |EFL2/TTL| of the focal length EFL2 of the lens assembly 10 in the macro state to the total track length TTL of the lens assembly 10 is equal to 0.57.

A ratio EFL1/EFL2 of the focal length EFL1 of the lens assembly 10 in the infinity state to the focal length EFL2 of the lens assembly 10 in the macro state is equal to 1.67.

The following describes an example of optical parameters of each lens element in this embodiment.

Table 1.1 shows optical parameters of the lens elements in the camera module according to Embodiment 1 of this application.

| Lens element | Surface number | Surface profile | Curvature radius | Thickness | Material | Y semi-aperture |
|---|---|---|---|---|---|---|
| | Stop | - | - | -0.95 | - | 3.50 |
| L1 | S1 | Aspherical | 5.57 | 1.52 | 547.528 | 3.51 |
| | S2 | Aspherical | 33.98 | 1.51 | | 3.37 |
| L2 | S3 | Aspherical | -42.02 | 0.60 | 637.237 | 2.99 |
| | S4 | Aspherical | 6.08 | 0.16 | | 2.95 |
| L3 | S5 | Aspherical | 5.06 | 2.39 | 537.542 | 2.95 |
| | S6 | Aspherical | -5.50 | 0.52 | | 2.95 |
| L4 | S7 | Aspherical | -6.27 | 0.40 | 544.560 | 2.15 |
| | S8 | Aspherical | 91.64 | 0.97 | | 1.92 |
| L5 | S9 | Aspherical | -9.63 | 0.93 | 623.244 | 1.70 |
| | S10 | Aspherical | -6.30 | 1.89 | | 2.38 |
| L6 | S11 | Aspherical | -4.10 | 0.55 | 544.560 | 3.60 |
| | S12 | Aspherical | -14.54 | 2.73 | | 3.58 |
| IR | S13 | Spherical | - | 0.21 | 518.642 | 5.90 |
| | S14 | Spherical | - | 0.36 | | 5.90 |
| | Image plane | Spherical | - | - | - | 4.02 |

L1 is the first lens element 11, L2 is the second lens element 12, L3 is the third lens element 13, L4 is the fourth lens element 14, L5 is the fifth lens element 15, L6 is the sixth lens element 16, and IR is the light filter 30.

S0 is the stop 103, S1 and S2 are respectively an object side surface and an image side surface of the first lens element 11, S3 and S4 are respectively an object side surface and an image side surface of the second lens element 12, S5 and S6 are respectively an object side surface and an image side surface of the third lens element 13, S7 and S8 are respectively an object side surface and an image side surface of the fourth lens element 14, S9 and S10 are respectively an object side surface and an image side surface of the fifth lens element 15, S11 and S12 are respectively an object side surface and an image side surface of the sixth lens element 16, and S13 and S14 are respectively an object side surface and an image side surface of the light filter 30.

The thickness is a thickness of an optical element along the optical axis or a thickness of an air gap between optical elements. A thickness corresponding to a row on which the stop 103 is located is a distance from the stop 103 to the object side surface of the first lens element 11 along the optical axis; a thickness corresponding to a row on which the object side surface of the first lens element 11 is located is a thickness of the first lens element 11 along the optical axis; a thickness corresponding to a row on which the image side surface of the first lens element 11 is located is a distance from the image side surface of the first lens element 11 to the object side surface of the second lens element 12 along the optical axis; and so on.

The material refers to a refractive index and an Abbe number of a lens element. It should be noted that a notation combining the refractive index and the Abbe number is used for a value for the material in Table 1. To be specific, a sum of 1.000 and a product of 0.000 and a part that precedes a decimal point in the value of the material in the table is the refractive index of the lens element, and a product of 0.01 and a part that follows the decimal point in the value of the material in the table and is the Abbe number of the lens element. The first lens element 11 (L1) is used as an example. If a value of a material of the first lens element 11 is 547.528, a refractive index of the first lens element 11 is 1.547, and an Abbe number of the first lens element 11 is 52.8. This also applies to other lens elements.

The Y semi-aperture refers to a radius of the lens element.

Table 1.2 shows aspherical coefficients of the lens elements in the lens assembly according to Embodiment 1 of this application.

| | Curvature radius R | Conic coefficient K | A4 | A6 | A8 | A10 | A12 | A14 |
|---|---|---|---|---|---|---|---|---|
| S1 | 5.57 | -0.047524643 | -1. 10E-04 | 1.02E-04 | -2.66E-05 | 5.26E-06 | -5.83E-07 | 3.53E-08 |
| S2 | 33.98 | -99 | 1.08E-03 | 1.99E-04 | -1.01E-04 | 2.99E-05 | -5.42E-06 | 5.77E-07 |
| S3 | -42.02 | 33.84872116 | 7.02E-03 | -1.78E-03 | -7.67E-04 | 8.82E-04 | -4.10E-04 | 1.19E-04 |
| S4 | 6.08 | -0.004344105 | 1.24E-02 | -5.06E-03 | -7.87E-04 | 1.44E-03 | -4.45E-04 | -3.14E-05 |
| S5 | 5.06 | -0.008738199 | 3.62E-03 | -5.12E-03 | 2.46E-03 | -1.85E-03 | 1.48E-03 | -7.94E-04 |
| S6 | -5.50 | 0.13851722 | -9.27E-04 | 1.33E-03 | -1.45E-03 | 9.37E-04 | -3.97E-04 | 1.17E-04 |
| S7 | -6.27 | 0.157765978 | 5.11E-02 | -1.16E-02 | 4.15E-03 | -1.06E-02 | 1.77E-02 | -1.75E-02 |
| S8 | 91.64 | 0 | 5.38E-02 | -6.14E-03 | -6.07E-03 | 6.23E-03 | -3.16E-03 | 9.82E-04 |
| S9 | -9.63 | 19.09779584 | -1.99E-04 | -2.30E-02 | 6.59E-02 | -1.24E-01 | 1.58E-01 | -1.42E-01 |
| S10 | -6.30 | 4.978161443 | -6.66E-03 | 6.23E-05 | -4.03E-05 | 4.77E-06 | 0.00E+0 0 | 0.00E+0 0 |
| S11 | -4.10 | -0.981167095 | -4.26E-03 | 1.55E-03 | -6.67E-05 | 9.51E-07 | 0.00E+0 0 | 0.00E+0 0 |
| S12 | -14.54 | 8.955350272 | -1.94E-03 | 7.95E-05 | 4.88E-04 | -1.63E-04 | -1.55E-05 | 3.21E-05 |
| | A16 | A18 | A20 | A22 | A24 | A26 | A28 | A30 |
| S1 | -1.44E-09 | 6.76E-11 | -2.33E-12 | 0.00E+0 0 | 0.00E+0 0 | 0.00E+0 0 | 0.00E+0 0 | 0.00E+0 0 |
| S2 | -3.53E-08 | 1.14E-09 | -1.52E-11 | 0.00E+0 0 | 0.00E+0 0 | 0.00E+0 0 | 0.00E+0 0 | 0.00E+0 0 |
| S3 | -2.53E-05 | 4.43E-06 | -6.83E-07 | 8.90E-08 | -8.80E-09 | 5.90E-10 | -2.34E-11 | 4.13E-13 |
| S4 | 6.21E-05 | -2.14E-05 | 4.15E-06 | -5.14E-07 | 4.16E-08 | -2.12E-09 | 6.09E-11 | -7.43E-13 |
| S5 | 2.78E-04 | -6.66E-05 | 1.11E-05 | -1.30E-06 | 1.05E-07 | -5.51E-09 | 1.71E-10 | -2.38E-12 |
| S6 | -2.48E-05 | 3.80E-06 | -4.22E-07 | 3.36E-08 | -1.86E-09 | 6.76E-11 | -1.45E-12 | 1.39E-14 |
| S7 | 1.15E-02 | -5.30E-03 | 1.73E-03 | -4.02E-04 | 6.45E-05 | -6.81E-06 | 4.26E-07 | -1.19E-08 |
| S8 | -1.86E-04 | 1.95E-05 | -8.61E-07 | 0.00E+0 0 | 0.00E+0 0 | 0.00E+0 0 | 0.00E+0 0 | 0.00E+0 0 |
| S9 | 9.18E-02 | -4.34E-02 | 1.50E-02 | -3.71E-03 | 6.45E-04 | -7.45E-05 | 5.12E-06 | -1.58E-07 |
| S10 | 0.00E+00 | 0.00E+00 | 0.00E+00 | 0.00E+0 0 | 0.00E+0 0 | 0.00E+0 0 | 0.00E+0 0 | 0.00E+0 0 |
| S11 | 0.00E+00 | 0.00E+00 | 0.00E+00 | 0.00E+0 0 | 0.00E+0 0 | 0.00E+0 0 | 0.00E+0 0 | 0.00E+0 0 |
| S12 | -1.33E-05 | 3.17E-06 | -4.96E-07 | 5.23E-08 | -3.71E-09 | 1.69E-10 | -4.48E-12 | 5.26E-14 |

It can be learned from Table 1.2 that all lens elements in the lens assembly 10 are aspherical lens elements, that is, the lens assembly 10 includes 12 aspherical surfaces. An aspherical surface profile Z of each lens element in the lens assembly 10 may be calculated according to the following aspherical surface formula:

$$Z = \frac{cr^2}{1+\sqrt{1-(1+k)c^2r^2}} + \sum_{i=1}^{n} A_I E_I(x, y)$$

The parameter c=1/R, R represents a curvature radius, r represents a distance from a point on an optical surface to the optical axis, Z represents an aspherical sagittal height of the point along the optical axis, k represents a quadratic coefficient of the surface, and i represents an aspherical coefficient term, where i is 30 in this embodiment. Ai represents an aspherical coefficient.

Table 1.3 shows focal lengths of the lens elements and the lens element units in the lens assembly according to Embodiment 1 of this application.

| f1/mm | f2/mm | f3/mm | f4/mm | f5/mm | f6/mm |
|---|---|---|---|---|---|
| 11.91 | -8.23 | 5.31 | -10.73 | 26.26 | -10.68 |

Herein, f1, f2, f3, f4, f5 and f6 are respectively focal lengths of the first lens element 11, the second lens element 12, the third lens element 13, the fourth lens element 14, the fifth lens element 15, and the sixth lens element 16.

The lens assembly 10 uses the foregoing architecture in which there are two lens element units. Focal powers of the two lens element units and the focal power of the first lens element are properly allocated, and a quantity of lens elements, and a focal length, a thickness, a refractive index, an Abbe number, and the like of each lens element are combined, so that features such as a wide aperture, a small size, low costs, and high resolution of the lens assembly 10 can be implemented. For optical parameters of the lens assembly 10 including the foregoing lens elements, refer to Table 1.4.

Table 1.4 shows optical parameters of the lens assembly according to Embodiment 1 of this application.

| | F# | EFL/mm | Mag | IMH/mm | TTL/mm | G1/mm | G2/mm |
|---|---|---|---|---|---|---|---|
| Infinity state | 2.03 | 14.1 | - | 4 | 14.72 | 7.38 | -6.02 |
| Macro state | 2.02 | 8.46 | 0.315x | | | | |

It can be learned from Table 1.4 that the lens assembly 10 provided in Embodiment 1 of this application has features of a wide aperture and a small total track length, can implement a long-focus telephoto function to ensure high-quality imaging in a scene like a distant image-shooting scene, and can also implement a macro function with a high magnification rate and high resolution to ensure high-definition imaging in a scene like a close-up image-shooting scene.

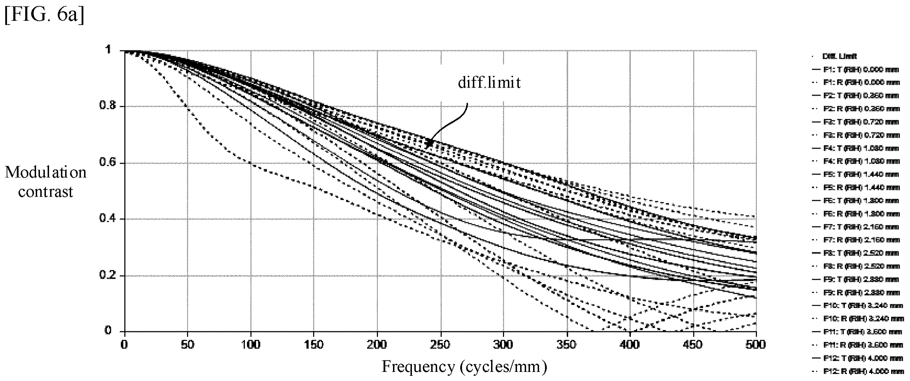

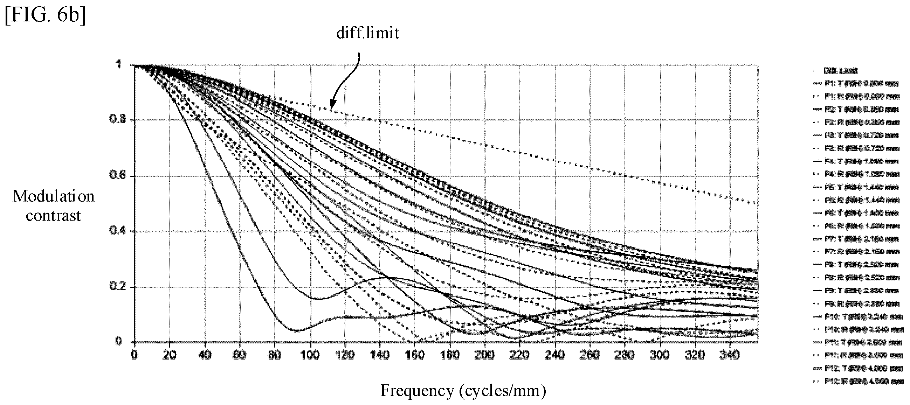

FIG. 6a is a curve diagram of a modulation transfer function for the lens assembly in the infinity state according to Embodiment 1 of this application. FIG. 6b is a curve diagram of a modulation transfer function for the lens assembly in the macro state according to Embodiment 1 of this application.

In FIG. 6a and FIG. 6b, horizontal coordinates represent different frequencies, vertical coordinates represent modulation contrasts, solid lines in the figure represent sagittal fields, and dashed lines in the figure represent tangential fields. In the figure, diff.limit represents a modulation transfer function of an imaging system for an infinitesimal object point. A curve closer to the diff.limit curve indicates better imaging quality. It can be learned from FIG. 6a and FIG. 6b that the lens assembly provided in this embodiment can implement high-quality imaging in both the infinity state and the macro state.

Embodiment 2

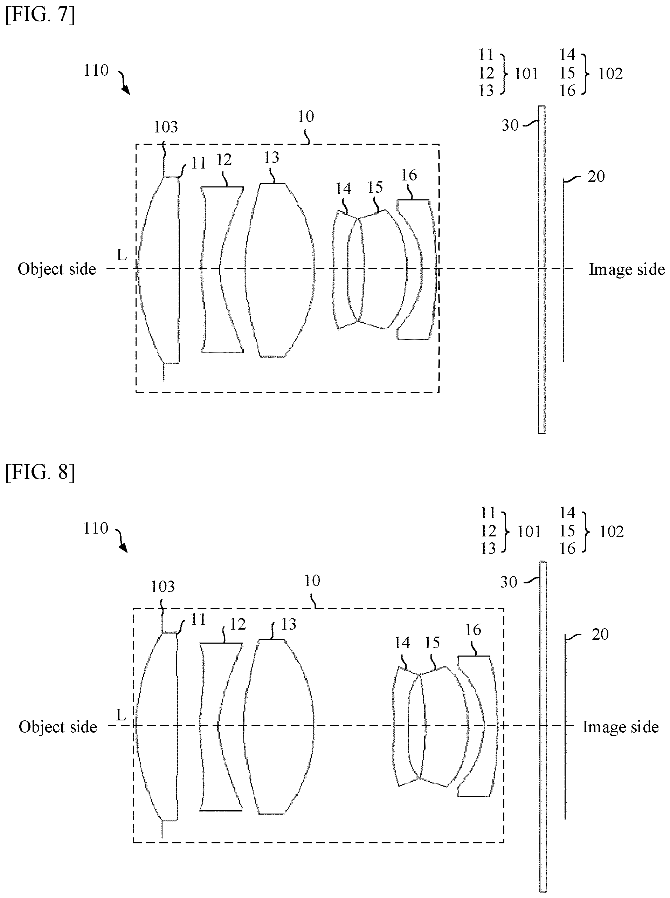

FIG. 7 is a diagram of a simulated structure of the camera module in which the lens assembly is in the infinity state according to Embodiment 2 of this application.

In this embodiment of this application, as shown in FIG. 7, the lens assembly 10 includes six lens elements with focal powers, and the first lens element unit 101 may include three lens elements with focal powers, for example, the first lens element 11, the second lens element 12, and the third lens element 13. The second lens element unit 102 may include three lens elements with focal powers, for example, the fourth lens element 14, the fifth lens element 15, and the sixth lens element 16. The first lens element 11, the second lens element 12, the third lens element 13, the fourth lens element 14, the fifth lens element 15, and the sixth lens element 16 are sequentially arranged along the optical axis L from the object side to the image side.

To be specific, in the camera module 110, the stop 103, the first lens element 11, the second lens element 12, the third lens element 13, the fourth lens element 14, the fifth lens element 15, the sixth lens element 16, the light filter 30, and the image sensor 20 are sequentially arranged along the optical axis L from the object side to the image side. Light entering the camera module 110 sequentially passes through the lens assembly 10 and the light filter 30 in the foregoing sequence and is irradiated onto the image sensor 20, and is finally imaged on the photosensitive surface of the image sensor 20.

The first lens element unit 101 has a positive focal power, and the second lens element unit 102 has a negative focal power.

Specifically, the first lens element 11 may have a positive focal power. At least a part that is of an object side surface of the first lens element 11 and that corresponds to the optical axis may be a convex surface, and at least a part that is of an image side surface of the first lens element 11 and that corresponds to the optical axis may be a concave surface.

The second lens element 12 may have a negative focal power. At least a part that is of an object side surface of the second lens element 12 and that corresponds to the optical axis may be a convex surface, and at least a part that is of an image side surface of the second lens element 12 and that corresponds to the optical axis may be a convex surface.

The third lens element 13 may have a positive focal power. At least a part that is of an object side surface of the third lens element 13 and that corresponds to the optical axis may be a convex surface, and at least a part that is of an image side surface of the third lens element 13 and that corresponds to the optical axis may be a concave surface.

The fourth lens element 14 may have a negative focal power. At least a part that is of an object side surface of the fourth lens element 14 and that corresponds to the optical axis may be a concave surface, and at least a part that is of an image side surface of the fourth lens element 14 and that corresponds to the optical axis may be a concave surface.

The fifth lens element 15 may have a positive focal power. At least a part that is of an object side surface of the fifth lens element 15 and that corresponds to the optical axis may be a concave surface, and at least a part that is of an image side surface of the fifth lens element 15 and that corresponds to the optical axis may be a concave surface.

The sixth lens element 16 may have a negative focal power. At least a part that is of an object side surface of the sixth lens element 16 and that corresponds to the optical axis may be a concave surface, and at least a part that is of an image side surface of the sixth lens element 16 and that corresponds to the optical axis may be a concave surface.

When the lens assembly 10 is in the infinity state, as shown in FIG. 7, the second lens element unit 102 is closer to the first lens element unit 101, and is farther away from the light filter 30 and the image sensor 20. When the lens assembly 10 switches from the infinity state to the macro state, the second lens element unit 102 moves toward the image side along the optical axis L.

FIG. 8 is a diagram of a simulated structure of the camera module in which the lens assembly is in the macro state according to Embodiment 2 of this application.

As shown in FIG. 8, when the lens assembly 10 is in the macro state, the second lens element 12 is closer to the light filter 30 and the image sensor 20, and is farther away from the first lens element unit 101.

A curvature radius R11 of the object side surface of the first lens element 11 is equal to 7.91, a curvature radius R12 of the image side surface of the first lens element 11 is equal to -62.18, and a focal length f1 of the first lens element 11 is equal to 12.96. The first lens element 11 satisfies |(R11+R12)/f1|=4.2.

A focal length EFL1 of the lens assembly 10 in the infinity state is equal to 15.2, and a ratio f1/EFL1 of a focal length f1 of the first lens element 11 to the focal length EFL1 of the lens assembly 10 in the infinity state is equal to 0.85.

A refractive index Nd1 of the first lens element 11 is equal to 1.544.

An f-number F#1 of the lens assembly 10 in the infinity state is equal to 1.98. An f-number F#2 of the lens assembly 10 in the macro state is equal to 1.96.

A magnification rate Mag of the lens assembly 10 in the macro state is equal to 0.3x.

A focal length G1 of the first lens element unit 101 is equal to 8.27, and a ratio |G1/EFL1| of the focal length G1 of the first lens element unit 101 to the focal length EFL1 of the lens assembly 10 in the infinity state is equal to 0.54.

A focal length G2 of the second lens element unit 102 is equal to -7.98, and a ratio |G2/EFL1| of the focal length G2 of the second lens element unit 102 to the focal length EFL1 of the lens assembly 10 in the infinity state is equal to 0.53.

A focal length EFL2 of the lens assembly 10 in the macro state is equal to 9.7, a total track length TTL of the lens assembly 10 is equal to 17.3, and a ratio |EFL2/TTL| of the focal length EFL2 of the lens assembly 10 in the macro state to the total track length TTL of the lens assembly 10 is equal to 0.56.

A ratio EFL1/EFL2 of the focal length EFL1 of the lens assembly 10 in the infinity state to the focal length EFL2 of the lens assembly 10 in the macro state is equal to 1.57.

The following describes an example of optical parameters of each lens element in this embodiment.

Table 2.1 shows optical parameters of the lens elements in the camera module according to Embodiment 2 of this application.

| Lens element | Surface number | Surface profile | Curvature radius | Thickness | Material | Y semi-aperture |
|---|---|---|---|---|---|---|
|  | Stop | - | - | -1.01 | - | 3.84 |
| L1 | S1 | Aspherical | 7.91 | 1.65 | 544.560 | 3.85 |
| L1 | S2 | Aspherical | -62.18 | 0.91 | 544.560 | 3.72 |
| L2 | S3 | Aspherical | 6.78 | 0.74 | 633.242 | 3.42 |
| L2 | S4 | Aspherical | 3.04 | 1.03 | 633.242 | 3.40 |
| L3 | S5 | Aspherical | 6.74 | 2.85 | 544.560 | 3.52 |
| L3 | S6 | Aspherical | -5.89 | 0.78 | 544.560 | 3.57 |
| L4 | S7 | Aspherical | -6.59 | 0.56 | 544.560 | 2.45 |
| L4 | S8 | Aspherical | -13.00 | 0.66 | 544.560 | 2.11 |

(continued)

| Lens element | Surface number | Surface profile | Curvature radius | Thickness | Material | Y semi-aperture |
|---|---|---|---|---|---|---|
| L5 | S9 | Aspherical | -10.31 | 1.74 | 550.507 | 2.12 |
| | S10 | Aspherical | -5.41 | 0.63 | | 2.48 |
| L6 | S11 | Aspherical | -3.62 | 0.55 | 536.556 | 2.47 |
| | S12 | Aspherical | -28.52 | 4.18 | | 2.89 |
| IR | S13 | Spherical | - | 0.21 | 518.642 | 6.79 |
| | S14 | Spherical | - | 0.78 | | 6.79 |
| | Image plane | Spherical | - | - | - | 3.80 |

L1 is the first lens element 11, L2 is the second lens element 12, L3 is the third lens element 13, L4 is the fourth lens element 14, L5 is the fifth lens element 15, L6 is the sixth lens element 16, and IR is the light filter 30.

For specific illustration of S0 to S14, refer to Embodiment 1. Details are not described in this embodiment again.

For meanings of parameters such as the curvature radius, the thickness, the material, and the Y semi-aperture, also refer to Embodiment 1. Details are not described again in this embodiment.

Table 2.2 shows aspherical coefficients of the lens elements in the lens assembly according to Embodiment 2 of this application.

| | Curvature radius R | Conic coefficient K | A4 | A6 | A8 | A10 | A12 | A14 |
|---|---|---|---|---|---|---|---|---|
| S1 | 7.91 | 0 | 3.04E-04 | 4.57E-05 | -4.76E-05 | 1.33E-05 | -2.05E-06 | 2.00E-07 |
| S2 | -62.18 | 0 | 1.78E-03 | -2.75E-04 | -6.44E-05 | 4.59E-05 | -1.09E-05 | 1.45E-06 |
| S3 | 6.78 | 0 | -1.18E-02 | 1.54E-04 | -2.84E-04 | 3.71E-04 | -1.68E-04 | 4.80E-05 |
| S4 | 3.04 | -1 | -1.61E-02 | -2.06E-04 | 4.49E-04 | 5.69E-05 | -7.46E-05 | 2.51E-05 |
| S5 | 6.74 | 0 | -2.71E-03 | -6.28E-04 | 2.49E-04 | -1.03E-04 | 4.58E-05 | -1.43E-05 |
| S6 | -5.89 | 0 | -1.99E-04 | 3.37E-04 | -3.08E-04 | 1.48E-04 | -4.57E-05 | 9.87E-06 |
| S7 | -6.59 | 0 | 3.77E-02 | -4.84E-03 | -5.69E-05 | -1.48E-03 | 2.66E-03 | -2.20E-03 |
| S8 | -13.00 | 0 | 4.80E-02 | -3.72E-03 | -3.07E-03 | 2.09E-03 | -6.23E-04 | 5.69E-05 |
| S9 | -10.31 | 0 | 1.07E-02 | 4.00E-03 | -2.35E-02 | 4.15E-02 | -4.74E-02 | 3.76E-02 |
| S10 | -5.41 | 0 | -2.65E-04 | -2.81E-03 | 3.32E-04 | 3.82E-04 | -3.86E-04 | 1.95E-04 |
| S11 | -3.62 | 0 | -2.69E-03 | -1.73E-03 | 5.59E-04 | 1.12E-05 | -2.13E-05 | 3.26E-06 |
| S12 | -28.52 | 0 | 2.47E-03 | -1.69E-02 | 2.56E-02 | -2.48E-02 | 1.63E-02 | -7.57E-03 |
| | A16 | A18 | A20 | A22 | A24 | A26 | A28 | A30 |
| S1 | -1.36E-08 | 7.11E-10 | -3.05E-11 | 9.34E-13 | -1.38E-14 | 0.00E+00 | 0.00E+00 | 0.00E+00 |
| S2 | -1.19E-07 | 5.90E-09 | -1.65E-10 | 1.97E-12 | 0.00E+00 | 0.00E+00 | 0.00E+00 | 0.00E+00 |
| S3 | -1.00E-05 | 1.58E-06 | -1.89E-07 | 1.66E-08 | -1.04E-09 | 4.31E-11 | -1.07E-12 | 1.21E-14 |
| S4 | -5.40E-06 | 8.55E-07 | -1.03E-07 | 9.12E-09 | -5.73E-10 | 2.38E-11 | -5.84E-13 | 6.33E-15 |
| S5 | 2.98E-06 | -4.24E-07 | 4.20E-08 | -2.91E-09 | 1.41E-10 | -4.56E-12 | 9.13E-14 | -8.70E-16 |
| S6 | -1.55E-06 | 1.80E-07 | -1.54E-08 | 9.57E-10 | -4.14E-11 | 1.16E-12 | -1.79E-14 | 1.05E-16 |
| S7 | 1.15E-03 | -4.16E-04 | 1.07E-04 | -1.95E-05 | 2.48E-06 | -2.09E-07 | 1.04E-08 | -2.35E-10 |
| S8 | 2.18E-05 | -8.07E-06 | 1.07E-06 | -5.36E-08 | 0.00E+00 | 0.00E+00 | 0.00E+00 | 0.00E+00 |
| S9 | -2.13E-02 | 8.75E-03 | -2.61E-03 | 5.62E-04 | -8.49E-05 | 8.54E-06 | -5.14E-07 | 1.40E-08 |
| S10 | -6.04E-05 | 1.19E-05 | -1.44E-06 | 9.91E-08 | -2.94E-09 | 0.00E+00 | 0.00E+00 | 0.00E+00 |

(continued)

| | A16 | A18 | A20 | A22 | A24 | A26 | A28 | A30 |
|---|---|---|---|---|---|---|---|---|
| S11 | -2.37E-07 | 7.58E-09 | 0.00E+00 | 0.00E+00 | 0.00E+00 | 0.00E+00 | 0.00E+00 | 0.00E+00 |
| S12 | 2.52E-03 | -6. 10E-04 | 1.07E-04 | -1.35E-05 | 1.19E-06 | -6.97E-08 | 2.43E-09 | -3.81E-11 |

It can be learned from Table 2.2 that all lens elements in the lens assembly 10 are aspherical lens elements, that is, the lens assembly 10 includes 12 aspherical surfaces. An aspherical surface profile Z of each lens element in the lens assembly 10 may be calculated according to the following aspherical surface formula:

$$Z = \frac{cr^2}{1+\sqrt{1-(1+k)c^2r^2}} + \sum_{i=1}^{n} A_I E_I(x, y)$$

The parameter $c=1/R$, R represents a curvature radius, r represents a distance from a point on an optical surface to the optical axis, Z represents an aspherical sagittal height of the point along the optical axis, k represents a quadratic coefficient of the surface, and i represents an aspherical coefficient term, where i is 30 in this embodiment. Ai represents an aspherical coefficient.

Table 2.3 shows focal lengths of the lens elements and the lens element units in the lens assembly according to Embodiment 2 of this application.

| f1/mm | f2/mm | f3/mm | f4/mm | f5/mm | f6/mm |
|---|---|---|---|---|---|
| 12.96 | -9.38 | 6.25 | -25.30 | 18.31 | -7.78 |

Herein, f1, f2, f3, f4, f5 and f6 are respectively focal lengths of the first lens element 11, the second lens element 12, the third lens element 13, the fourth lens element 14, the fifth lens element 15, and the sixth lens element 16.
The lens assembly 10 uses the foregoing architecture in which there are two lens element units. Focal powers of the two lens element units and the focal power of the first lens element are properly allocated, and a quantity of lens elements, and a focal length, a thickness, a refractive index, an Abbe number, and the like of each lens element are combined, so that features such as a wide aperture, a small size, low costs, and high resolution of the lens assembly 10 can be implemented. For optical parameters of the lens assembly 10 including the foregoing lens elements, refer to Table 2.4.

Table 2.4 shows optical parameters of the lens assembly according to Embodiment 2 of this application.

| | F# | EFL/mm | Mag | IMH/mm | TTL/mm | G1/mm | G2/mm |
|---|---|---|---|---|---|---|---|
| Infinity state | 1.98 | 15.2 | - | 3.8 | 17.3 | 8.27 | -7.98 |
| Macro state | 1.96 | 9.7 | 0.3x | | | | |

It can be learned from Table 2.4 that the lens assembly 10 provided in Embodiment 2 of this application has features of a wide aperture and a small total track length, can implement a long-focus telephoto function to ensure high-quality imaging in a scene like a distant image-shooting scene, and can also implement a macro function with a high magnification rate and high resolution to ensure high-definition imaging in a scene like a close-up image-shooting scene.

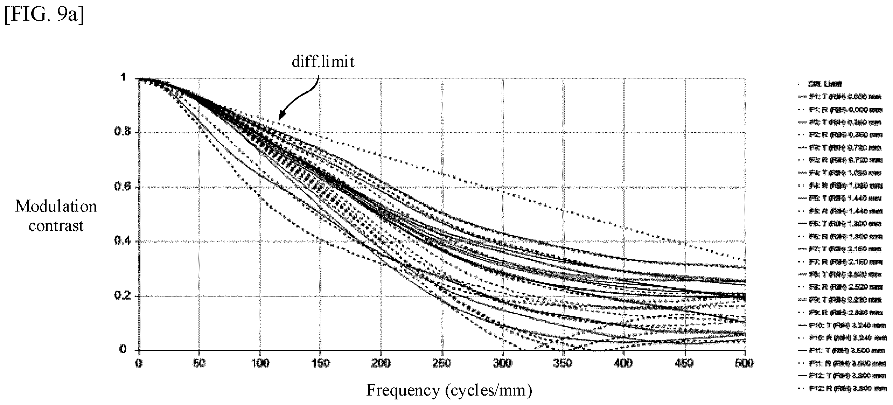

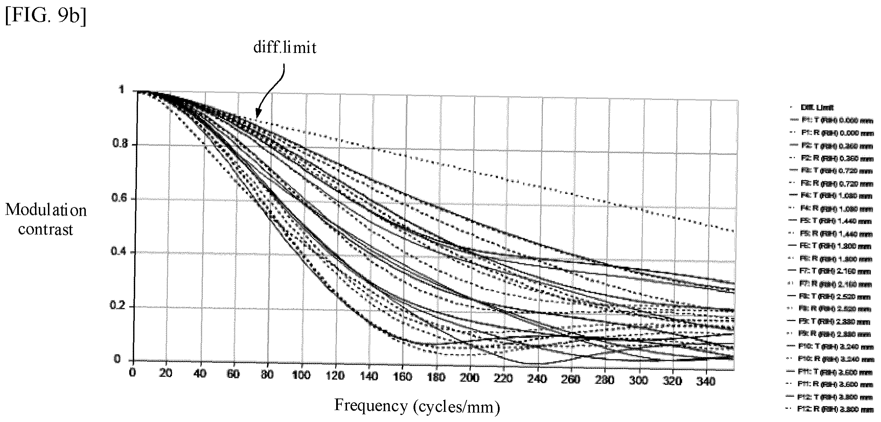

FIG. 9a is a curve diagram of a modulation transfer function for the lens assembly in the infinity state according to Embodiment 2 of this application. FIG. 9b is a curve diagram of a modulation transfer function for the lens assembly in the macro state according to Embodiment 2 of this application.
In FIG. 9a and FIG. 9b, horizontal coordinates represent different frequencies, vertical coordinates represent modulation contrasts, solid lines in the figure represent sagittal fields, and dashed lines in the figure represent tangential fields. In the figure, diff.limit represents a modulation transfer function of an imaging system for an infinitesimal object point. A curve closer to the difflimit curve indicates better imaging quality. It can be learned from FIG. 9a and FIG. 9b that the lens assembly provided in this embodiment can implement high-quality imaging in both the infinity state and the macro state.

Embodiment 3

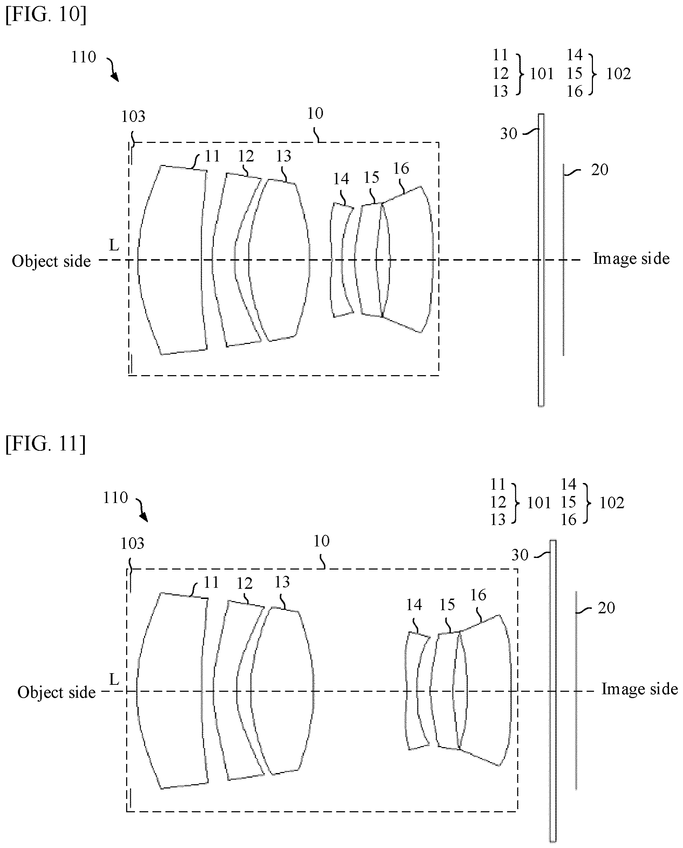

FIG. 10 is a diagram of a simulated structure of the camera module in which the lens assembly is in the infinity state according to Embodiment 3 of this application.

In this embodiment of this application, as shown in FIG. 10, the lens assembly 10 includes six lens elements with focal powers, and the first lens element unit 101 may include three lens elements with focal powers, for example, the first lens element 11, the second lens element 12, and the third lens element 13. The second lens element unit 102 may include three lens elements with focal powers, for example, the fourth lens element 14, the fifth lens element 15, and the sixth lens element 16. The first lens element 11, the second lens element 12, the third lens element 13, the fourth lens element 14, the fifth lens element 15, and the sixth lens element 16 are sequentially arranged along the optical axis L from the object side to the image side.

To be specific, in the camera module 110, the stop 103, the first lens element 11, the second lens element 12, the third lens element 13, the fourth lens element 14, the fifth lens element 15, the sixth lens element 16, the light filter 30, and the image sensor 20 are sequentially arranged along the optical axis L from the object side to the image side. Light entering the camera module 110 sequentially passes through the lens assembly 10 and the light filter 30 in the foregoing sequence and is irradiated onto the image sensor 20, and is finally imaged on the photosensitive surface of the image sensor 20.

The first lens element unit 101 has a positive focal power, and the second lens element unit 102 has a negative focal power.

Specifically, the first lens element 11 may have a positive focal power, at least a part that is of an object side surface of the first lens element 11 and that corresponds to the optical axis may be a convex surface, and at least a part that is of an image side surface of the first lens element 11 and that corresponds to the optical axis may be a convex surface.

The second lens element 12 may have a negative focal power. At least a part that is of an object side surface of the second lens element 12 and that corresponds to the optical axis may be a convex surface, and at least a part that is of an image side surface of the second lens element 12 and that corresponds to the optical axis may be a convex surface.

The third lens element 13 may have a positive focal power. At least a part that is of an object side surface of the third lens element 13 and that corresponds to the optical axis may be a convex surface, and at least a part that is of an image side surface of the third lens element 13 and that corresponds to the optical axis may be a concave surface.

The fourth lens element 14 may have a negative focal power. At least a part that is of an object side surface of the fourth lens element 14 and that corresponds to an optical axis may be a convex surface, and at least a part that is of an image side surface of the fourth lens element 14 and that corresponds to the optical axis may be a convex surface.

The fifth lens element 15 may have a positive focal power. At least a part that is of an object side surface of the fifth lens element 15 and that corresponds to an optical axis may be a convex surface, and at least a part that is of an image side surface of the fifth lens element 15 and that corresponds to the optical axis may be a convex surface.

The sixth lens element 16 may have a negative focal power. At least a part that is of an object side surface of the sixth lens element 16 and that corresponds to the optical axis may be a concave surface, and at least a part that is of an image side surface of the sixth lens element 16 and that corresponds to the optical axis may be a concave surface.

When the lens assembly 10 is in the infinity state, as shown in FIG. 10, the second lens element unit 102 is closer to the first lens element unit 101, and is farther away from the light filter 30 and the image sensor 20. When the lens assembly 10 switches from the infinity state to the macro state, the second lens element unit 102 moves toward the image side along the optical axis L.

FIG. 11 is a diagram of a simulated structure of a camera module in which a lens assembly is in a macro state according to Embodiment 3 of this application.

As shown in FIG. 11, when the lens assembly 10 is in the macro state, the second lens element 12 is closer to the light filter 30 and the image sensor 20, and is farther away from the first lens element unit 101.

A curvature radius R11 of the object side surface of the first lens element 11 is equal to 7.23, a curvature radius R12 of the image side surface of the first lens element 11 is equal to 160.58, and a focal length f1 of the first lens element 11 is equal to 13.80. The first lens element 11 satisfies $|(R11+R12)/f1|=12.2$.

A focal length EFL1 of the lens assembly 10 in the infinity state is equal to 15.1, and a ratio f1/EFL1 of a focal length f1 of the first lens element 11 to the focal length EFL1 of the lens assembly 10 in the infinity state is equal to 0.88.

A refractive index Nd1 of the first lens element 11 is equal to 1.544.

An f-number F#1 of the lens assembly 10 in the infinity state is equal to 1.98. An f-number F#2 of the lens assembly 10 in the macro state is equal to 2.03.

A magnification rate Mag of the lens assembly 10 in the macro state is equal to 0.3x.

A focal length G1 of the first lens element unit 101 is equal to 8.51, and a ratio |G1/EFL1| of the focal length G1 of the first lens element unit 101 to the focal length EFL1 of the lens assembly 10 in the infinity state is equal to 0.56.

A focal length G2 of the second lens element unit 102 is equal to -9.28, and a ratio |G2/EFL1| of the focal length G2 of the second lens element unit 102 to the focal length EFL1 of the lens assembly 10 in the infinity state is equal to 0.61.

A focal length EFL2 of the lens assembly 10 in the macro state is equal to 9.96, a total track length TTL of the lens assembly 10 is equal to 17.12, and a ratio |EFL2/TTL| of the focal length EFL2 of the lens assembly 10 in the macro state to the total track length TTL of the lens assembly 10 is equal to 0.58.

A ratio EFL1/EFL2 of the focal length EFL1 of the lens assembly 10 in the infinity state to the focal length EFL2 of the lens assembly 10 in the macro state is equal to 1.52.

The following describes an example of optical parameters of each lens element in this embodiment.

Table 3.1 shows optical parameters of the lens elements in the camera module according to Embodiment 3 of this application.

| Lens element | Surface number | Surface profile | Curvature radius | Thickness | Material | Y semi-aperture |
|---|---|---|---|---|---|---|
| | Stop | - | - | 0.25 | - | 3.81 |
| L1 | S1 | Aspherical | 7.23 | 2.50 | 544.56 | 3.81 |
| | S2 | Aspherical | 160.85 | 0.46 | | 3.60 |
| L2 | S3 | Aspherical | 9.62 | 0.86 | 667.204 | 3.50 |
| | S4 | Aspherical | 4.20 | 0.56 | | 3.26 |
| L3 | S5 | Aspherical | 6.86 | 2.43 | 544.560 | 3.28 |
| | S6 | Aspherical | -7.53 | 0.88 | | 3.08 |
| L4 | S7 | Aspherical | -6.55 | 0.40 | 544.560 | 2.33 |
| | S8 | Aspherical | 13.69 | 0.50 | | 2.09 |
| L5 | S9 | Aspherical | 4.04 | 0.87 | 644.240 | 2.19 |
| | S10 | Aspherical | 5.31 | 0.54 | | 2.24 |
| L6 | S11 | Aspherical | -17.48 | 1.68 | 544.560 | 2.28 |
| | S12 | Aspherical | -109.62 | 4.22 | | 2.96 |
| IR | S13 | Spherical | - | 0.21 | 518.642 | 5.90 |
| | S14 | Spherical | - | 0.77 | | 5.90 |
| | Image plane | Spherical | - | - | - | 3.80 |

L1 is the first lens element 11, L2 is the second lens element 12, L3 is the third lens element 13, L4 is the fourth lens element 14, L5 is the fifth lens element 15, L6 is the sixth lens element 16, and IR is the light filter 30.
For specific illustration of S0 to S14, refer to Embodiment 1. Details are not described in this embodiment again.
For meanings of parameters such as the curvature radius, the thickness, the material, and the Y semi-aperture, also refer to Embodiment 1. Details are not described again in this embodiment.

Table 3.2 shows aspherical coefficients of the lens elements in the lens assembly according to Embodiment 3 of this application.

| | Curvature radius R | Conic coefficient K | A4 | A6 | A8 | A10 | A12 | A14 |
|---|---|---|---|---|---|---|---|---|
| S1 | 7.23 | 0 | 6.27E-05 | -2.41E-04 | 1.35E-04 | -7.13E-05 | 2.81E-05 | -7. 62E-06 |
| S2 | 160.85 | 0 | 1.42E-02 | -7.57E-03 | 2.63E-03 | -5.71E-04 | 7.98E-05 | -8.13E-06 |
| S3 | 9.62 | 0 | 2.37E-02 | -1.55E-02 | 5.93E-03 | -1.81E-03 | 5.49E-04 | -1.59E-04 |
| S4 | 4.20 | 0 | 2.24E-02 | -1.58E-02 | 4.89E-03 | -1.14E-03 | 4.40E-04 | -2.12E-04 |
| S5 | 6.86 | 0 | 9.06E-03 | -4.67E-03 | 1.52E-03 | -8.17E-04 | 4.80E-04 | -1.86E-04 |
| S6 | -7.53 | 0 | 4.89E-04 | 2.26E-03 | -2.35E-03 | 1.41E-03 | -5.65E-04 | 1.65E-04 |
| S7 | -6.55 | 0 | 4.84E-02 | -2.18E-02 | 1.35E-02 | -1.35E-02 | 1.42E-02 | -1.09E-02 |
| S8 | 13.69 | 0 | 4.56E-02 | -2.96E-02 | 1.67E-02 | -9.72E-03 | 7.19E-03 | -4.52E-03 |
| S9 | 4.04 | 0 | 1.05E-02 | 3.30E-03 | -4.56E-02 | 9.58E-02 | -1.19E-01 | 1.00E-01 |
| S10 | 5.31 | 0 | 3.34E-03 | -1.50E-02 | 4.93E-03 | 2.75E-03 | -4.33E-03 | 3.00E-03 |
| S11 | -17.48 | 0 | 5.07E-03 | 7.10E-03 | -3.08E-02 | 4.81E-02 | -4.66E-02 | 3.10E-02 |
| S12 | -109.62 | 0 | 1.20E-03 | -1.31E-02 | 1.89E-02 | -1.82E-02 | 1.20E-02 | -5.63E-03 |

(continued)

| | Curvature radius R | Conic coefficient K | A4 | A6 | A8 | A10 | A12 | A14 |
|---|---|---|---|---|---|---|---|---|
| | A16 | A18 | A20 | A22 | A24 | A26 | A28 | A30 |
| S1 | 1.41E-06 | -1.81E-07 | 1.61E-08 | -9.78E-10 | 3.85E-11 | -8.91E-13 | 9.18E-15 | 0.00E+00 |
| S2 | 7.76E-07 | -7.83E-08 | 6.57E-09 | -3.61E-10 | 1.10E-11 | -1.42E-13 | 0.00E+00 | 0.00E+00 |
| S3 | 3.66E-05 | -6.09E-06 | 7.15E-07 | -5.88E-08 | 3.31E-09 | -1.22E-10 | 2.66E-12 | -2.60E-14 |
| S4 | 7.01E-05 | -1.50E-05 | 2.16E-06 | -2.12E-07 | 1.42E-08 | -6.25E-10 | 1.63E-11 | -1.93E-13 |
| S5 | 4.52E-05 | -6.97E-06 | 6.70E-07 | -3.55E-08 | 4.06E-10 | 6.61E-11 | -3.81E-12 | 6.77E-14 |
| S6 | -3.72E-05 | 6.73E-06 | 9.69E-07 | 1.07E-07 | -8.55E-09 | 4.61E-10 | -1.48E-11 | 2.14E-13 |
| S7 | 5.81E-03 | -2.18E-03 | 5.83E-04 | -1.11E-04 | 1.46E-05 | -1.27E-06 | 6.54E-08 | -1.52E-09 |
| S8 | 1.94E-03 | -5.44E-04 | 9.91E-05 | -1.12E-05 | 7.13E-07 | -1.91E-08 | 0.00E+00 | 0.00E+00 |
| S9 | -6.01E-02 | 2.58E-02 | 8.00E-03 | 1.77E-03 | -2.74E-04 | 2.81E-05 | -1.72E-06 | 4.75E-08 |
| S10 | -1.36E-03 | 4.20E-04 | 8.66E-05 | 1.14E-05 | -8.59E-07 | 2.83E-08 | 0.00E+00 | 0.00E+00 |
| S11 | -1.46E-02 | 4.92E-03 | 1.18E-03 | 2.02E-04 | -2.37E-05 | 1.82E-06 | -8.23E-08 | 1.65E-09 |
| S12 | 1.89E-03 | -4.59E-04 | 8.09E-05 | -1.02E-05 | 9.05E-07 | -5.31E-08 | 1.85E-09 | -2.92E-11 |

It can be learned from Table 3.2 that all lens elements in the lens assembly 10 are aspherical lens elements, that is, the lens assembly 10 includes 12 aspherical surfaces. An aspherical surface profile Z of each lens element in the lens assembly 10 may be calculated according to the following aspherical surface formula:

$$Z = \frac{cr^2}{1+\sqrt{1-(1+k)c^2r^2}} + \sum_{i=1}^{n} A_I E_I(x, y)$$

The parameter c=1/R, R represents a curvature radius, r represents a distance from a point on an optical surface to the optical axis, Z represents an aspherical sagittal height of the point along the optical axis, k represents a quadratic coefficient of the surface, and i represents an aspherical coefficient term, where i is 30 in this embodiment. Ai represents an aspherical coefficient.

Table 3.3 shows focal lengths of the lens elements and the lens element units in the lens assembly according to Embodiment 3 of this application.

| f1/mm | f2/mm | f3/mm | f4/mm | f5/mm | f6/mm |
|---|---|---|---|---|---|
| 13.80 | -11.95 | 7.00 | -8.06 | 20.61 | -38.34 |

Herein, f1, f2, f3, f4, f5 and f6 are respectively focal lengths of the first lens element 11, the second lens element 12, the third lens element 13, the fourth lens element 14, the fifth lens element 15, and the sixth lens element 16.

The lens assembly 10 uses the foregoing architecture in which there are two lens element units. Focal powers of the two lens element units and the focal power of the first lens element are properly allocated, and a quantity of lens elements, and a focal length, a thickness, a refractive index, an Abbe number, and the like of each lens element are combined, so that features such as a wide aperture, a small size, low costs, and high resolution of the lens assembly 10 can be implemented. For optical parameters of the lens assembly 10 including the foregoing lens elements, refer to Table 3.4.

Table 3.4 shows optical parameters of the lens assembly according to Embodiment 3 of this application.

| | F# | EFL/mm | Mag | IMH/mm | TTL/mm | G1/mm | G2/mm |
|---|---|---|---|---|---|---|---|
| Infinity state | 1.98 | 15.1 | - | 3.8 | 17.12 | 8.51 | -9.28 |
| Macro state | 2.03 | 9.96 | 0.3x | | | | |

It can be learned from Table 3.4 that the lens assembly 10 provided in Embodiment 3 of this application has features of a wide aperture and a small total track length, can implement a long-focus telephoto function to ensure high-quality imaging in a scene like a distant image-shooting scene, and can also implement a macro function with a high magnification rate and high resolution to ensure high-definition imaging in a scene like a close-up image-shooting scene.

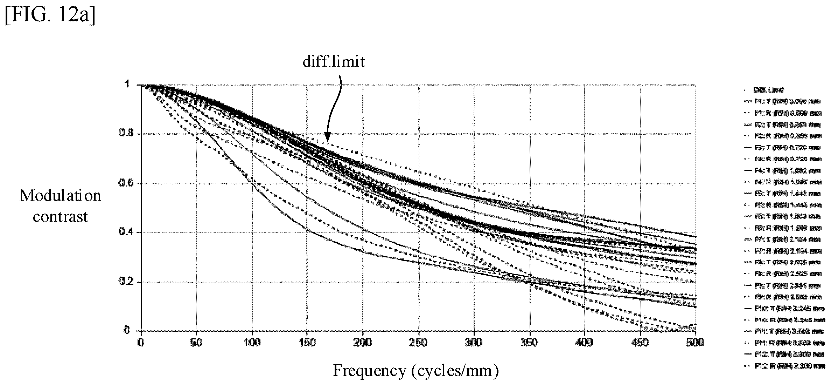

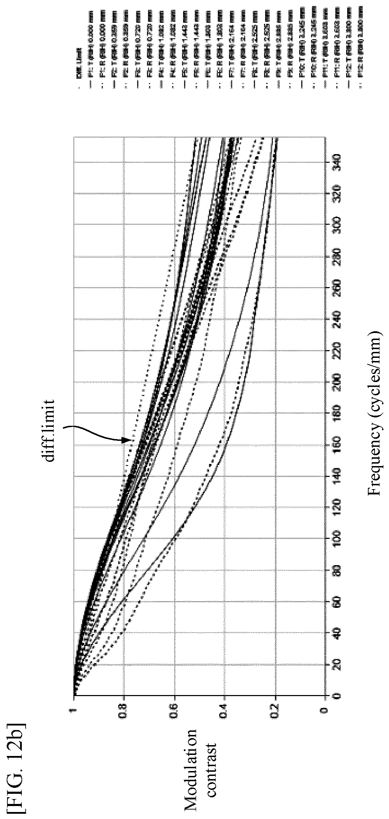

FIG. 12a is a curve diagram of a modulation transfer function for the lens assembly in the infinity state according to Embodiment 3 of this application. FIG. 12b is a curve diagram of a modulation transfer function for the lens assembly in the macro state according to Embodiment 3 of this application.

In FIG. 12a and FIG. 12b, horizontal coordinates represent different frequencies, vertical coordinates represent modulation contrasts, solid lines in the figure represent sagittal fields, and dashed lines in the figure represent tangential fields. In the figure, diff.limit represents a modulation transfer function of an imaging system for an infinitesimal object point. A curve closer to the diff.limit curve indicates better imaging quality. It can be learned from FIG. 12a and FIG. 12b that the lens assembly provided in this embodiment can implement high-quality imaging in both the infinity state and the macro state.

Embodiment 4

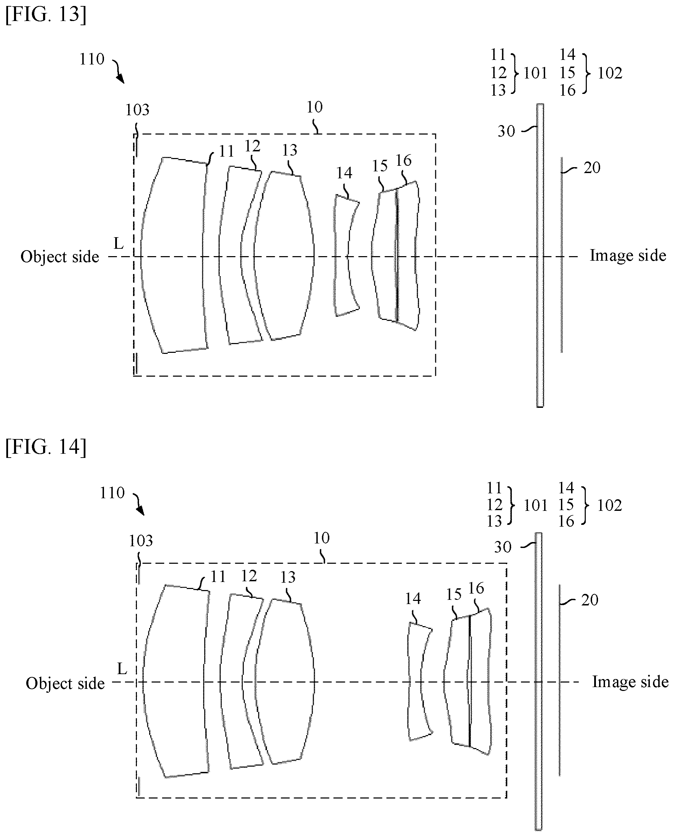

FIG. 13 is a diagram of a simulated structure of the camera module in which the lens assembly is in the infinity state according to Embodiment 4 of this application.

In this embodiment of this application, as shown in FIG. 13, the lens assembly 10 includes six lens elements with focal powers, and the first lens element unit 101 may include three lens elements with focal powers, for example, the first lens element 11, the second lens element 12, and the third lens element 13. The second lens element unit 102 may include three lens elements with focal powers, for example, the fourth lens element 14, the fifth lens element 15, and the sixth lens element 16. The first lens element 11, the second lens element 12, the third lens element 13, the fourth lens element 14, the fifth lens element 15, and the sixth lens element 16 are sequentially arranged along the optical axis L from the object side to the image side.

To be specific, in the camera module 110, the stop 103, the first lens element 11, the second lens element 12, the third lens element 13, the fourth lens element 14, the fifth lens element 15, the sixth lens element 16, the light filter 30, and the image sensor 20 are sequentially arranged along the optical axis L from the object side to the image side. Light entering the camera module 110 sequentially passes through the lens assembly 10 and the light filter 30 in the foregoing sequence and is irradiated onto the image sensor 20, and is finally imaged on the photosensitive surface of the image sensor 20.

The first lens element unit 101 has a positive focal power, and the second lens element unit 102 has a negative focal power.

Specifically, the first lens element 11 may have a positive focal power, at least a part that is of an object side surface of the first lens element 11 and that corresponds to the optical axis may be a convex surface, and at least a part that is of an image side surface of the first lens element 11 and that corresponds to the optical axis may be a convex surface.

The second lens element 12 may have a negative focal power. At least a part that is of an object side surface of the second lens element 12 and that corresponds to the optical axis may be a convex surface, and at least a part that is of an image side surface of the second lens element 12 and that corresponds to the optical axis may be a convex surface.

The third lens element 13 may have a positive focal power. At least a part that is of an object side surface of the third lens element 13 and that corresponds to the optical axis may be a convex surface, and at least a part that is of an image side surface of the third lens element 13 and that corresponds to the optical axis may be a concave surface.

The fourth lens element 14 may have a negative focal power. At least a part that is of an object side surface of the fourth lens element 14 and that corresponds to the optical axis may be a concave surface, and at least a part that is of an image side surface of the fourth lens element 14 and that corresponds to the optical axis may be a convex surface.

The fifth lens element 15 may have a positive focal power. At least a part that is of an object side surface of the fifth lens element 15 and that corresponds to an optical axis may be a convex surface, and at least a part that is of an image side surface of the fifth lens element 15 and that corresponds to the optical axis may be a convex surface.

The sixth lens element 16 may have a negative focal power. At least a part that is of an object side surface of the sixth lens element 16 and that corresponds to the optical axis may be a concave surface, and at least a part that is of an image side surface of the sixth lens element 16 and that corresponds to the optical axis may be a convex surface.

When the lens assembly 10 is in the infinity state, as shown in FIG. 13, the second lens element unit 102 is closer to the first lens element unit 101, and is farther away from the light filter 30 and the image sensor 20. When the lens assembly 10 switches from the infinity state to the macro state, the second lens element unit 102 moves toward the image side along the optical axis L.

FIG. 14 is a diagram of a simulated structure of the camera module in which the lens assembly is in the macro state according to Embodiment 4 of this application.

As shown in FIG. 14, when the lens assembly 10 is in the macro state, the second lens element 12 is closer to the light filter 30 and the image sensor 20, and is farther away from the first lens element unit 101.

A curvature radius R11 of the object side surface of the first lens element 11 is equal to 7.59, a curvature radius R12 of the image side surface of the first lens element 11 is equal to 88.75, and a focal length f1 of the first lens element 11 is equal to 15.05. The first lens element 11 satisfies |(R11+R12)/f1|=6.4.

A focal length EFL1 of the lens assembly 10 in the infinity state is equal to 15.2, and a ratio f1/EFL1 of a focal length f1 of the first lens element 11 to the focal length EFL1 of the lens assembly 10 in the infinity state is equal to 0.99.

A refractive index Nd1 of the first lens element 11 is equal to 1.544.

An f-number F#1 of the lens assembly 10 in the infinity state is equal to 1.98. An f-number F#2 of the lens assembly 10 in the macro state is equal to 2.03.

A magnification rate Mag of the lens assembly 10 in the macro state is equal to 0.3x.

A focal length G1 of the first lens element unit 101 is equal to 8.78, and a ratio |G1/EFL1| of the focal length G1 of the first lens element unit 101 to the focal length EFL1 of the lens assembly 10 in the infinity state is equal to 0.58.

A focal length G2 of the second lens element unit 102 is equal to -10.07, and a ratio |G2/EFL1| of the focal length G2 of the second lens element unit 102 to the focal length EFL1 of the lens assembly 10 in the infinity state is equal to 0.66.

A focal length EFL2 of the lens assembly 10 in the macro state is equal to 10, a total track length TTL of the lens assembly 10 is equal to 17.26, and a ratio |EFL2/TTL| of the focal length EFL2 of the lens assembly 10 in the macro state to the total track length TTL of the lens assembly 10 is equal to 0.58.

A ratio EFL1/EFL2 of the focal length EFL1 of the lens assembly 10 in the infinity state to the focal length EFL2 of the lens assembly 10 in the macro state is equal to 1.52.

The following describes an example of optical parameters of each lens element in this embodiment.

Table 4.1 shows optical parameters of the lens elements in the camera module according to Embodiment 4 of this application.

| Lens element | Surface number | Surface profile | Curvature radius | Thickness | Material | Y semi-aperture |
|---|---|---|---|---|---|---|
| | Stop | - | - | 0.16 | - | 3.84 |
| L1 | S1 | Aspherical | 7.59 | 2.50 | 544.560 | 3.84 |
| | S2 | Aspherical | 88.75 | 0.66 | | 3.60 |
| L2 | S3 | Aspherical | 11.24 | 0.91 | 677.192 | 3.48 |
| | S4 | Aspherical | 5.01 | 0.54 | | 3.30 |
| L3 | S5 | Aspherical | 7.89 | 2.43 | 544.560 | 3.30 |
| | S6 | Aspherical | -7.49 | 0.88 | | 3.08 |
| L4 | S7 | Aspherical | -14.36 | 0.50 | 544.560 | 2.38 |
| | S8 | Aspherical | 5.10 | 0.95 | | 2.06 |
| L5 | S9 | Aspherical | 3.58 | 0.96 | 596.309 | 2.45 |
| | S10 | Aspherical | 11.25 | 0.13 | | 2.47 |
| L6 | S11 | Aspherical | -19.33 | 0.70 | 544.560 | 2.61 |
| | S12 | Aspherical | 11.50 | 4.96 | | 2.93 |
| IR | S13 | Spherical | - | 0.21 | 518.642 | 5.90 |
| | S14 | Spherical | - | 0.77 | | 5.90 |
| | Image plane | Spherical | - | - | - | 3.80 |

L1 is the first lens element 11, L2 is the second lens element 12, L3 is the third lens element 13, L4 is the fourth lens element 14, L5 is the fifth lens element 15, L6 is the sixth lens element 16, and IR is the light filter 30.

For specific illustration of S0 to S14, refer to Embodiment 1. Details are not described in this embodiment again.

For meanings of parameters such as the curvature radius, the thickness, the material, and the Y semi-aperture, also refer to Embodiment 1. Details are not described again in this embodiment.

Table 4.2 shows aspherical coefficients of the lens elements in the lens assembly according to Embodiment 4 of this application.

| | Curvature radius R | Conic coefficient K | A4 | A6 | A8 | A10 | A12 | A14 |
|---|---|---|---|---|---|---|---|---|
| S1 | 7.59 | 0 | 3.10E-04 | -2.99E-04 | 1.20E-04 | -4.35E-05 | 1.31E-05 | -3.08E-06 |
| S2 | 88.75 | 0 | 1.02E-02 | -4.77E-03 | 1.56E-03 | -3.75E-04 | 6.88E-05 | -1.00E-05 |
| S3 | 11.24 | 0 | 1.89E-02 | -1.13E-02 | 4.20E-03 | -1.43E-03 | 4.80E-04 | -1.43E-04 |
| S4 | 5.01 | 0 | 1.95E-02 | -1.22E-02 | 3.24E-03 | -5.22E-04 | 1.29E-04 | -7.14E-05 |
| S5 | 7.89 | 0 | 7.32E-03 | -3.57E-03 | 6.80E-04 | -2.11E-04 | 1.79E-04 | -9.82E-05 |
| S6 | -7.49 | 0 | -4.98E-04 | 1.75E-03 | -1.93E-03 | 1.37E-03 | -6.85E-04 | 2.50E-04 |
| S7 | -14.36 | 0 | -4.80E-03 | 1.28E-02 | -9.78E-03 | 8.44E-03 | -6.86E-03 | 4.41E-03 |
| S8 | 5.10 | 0 | -2.06E-02 | 7.45E-03 | 8.11E-03 | -1.29E-02 | 1.07E-02 | -5.99E-03 |
| S9 | 3.58 | 0 | -1.87E-02 | -1.37E-02 | 1.07E-02 | -3.94E-03 | 8.53E-04 | -1.11E-04 |
| S10 | 11.25 | 0 | 7.78E-02 | -1.14E-01 | 6.80E-02 | -2.30E-02 | 4.77E-03 | -5.99E-04 |
| S11 | -19.33 | 0 | 1.08E-01 | -1.27E-01 | 6.96E-02 | -1.67E-02 | -3.78E-03 | 5.60E-03 |
| S12 | 11.50 | 0 | 2.23E-02 | -3.78E-02 | 3.68E-02 | -2.58E-02 | 1.34E-02 | -5.29E-03 |
| | A16 | A18 | A20 | A22 | A24 | A26 | A28 | A30 |
| S1 | 5.35E-07 | -6.69E-08 | 5.91E-09 | -3.60E-10 | 1.43E-11 | -3.34E-13 | 3.49E-15 | 0.00E+0 0 |
| S2 | 1.16E-06 | -1.03E-07 | 6.54E-09 | -2.77E-10 | 6.88E-12 | -7.45E-14 | 0.00E+0 0 | 0.00E+0 0 |
| S3 | 3.35E-05 | -5.82E-06 | 7.37E-07 | -6.67E-08 | 4.20E-09 | -1.75E-10 | 4.32E-12 | -4.78E-14 |
| S4 | 2.87E-05 | -7.26E-06 | 1.22E-06 | -1.38E-07 | 1.06E-08 | -5.29E-10 | 1.54E-11 | -2.00E-13 |
| S5 | 3.30E-05 | -7.37E-06 | 1.14E-06 | -1.23E-07 | 9.09E-09 | -4.39E-10 | 1.25E-11 | -1.59E-13 |
| S6 | -6.77E-05 | 1.36E-05 | -1.99E-06 | 2.12E-07 | -1.58E-08 | 7.85E-10 | -2.32E-11 | 3.08E-13 |
| S7 | -2.14E-03 | 7.73E-04 | -2.06E-04 | 3.97E-05 | -5.36E-06 | 4.81E-07 | -2.57E-08 | 6.14E-10 |
| S8 | 2.32E-03 | -6.21E-04 | 1.12E-04 | -1.30E-05 | 8.68E-07 | -2.54E-08 | 0.00E+0 0 | 0.00E+0 0 |
| S9 | 7.87E-06 | -2.32E-07 | 0.00E+0 0 | 0.00E+00 | 0.00E+00 | 0.00E+00 | 0.00E+0 0 | 0.00E+0 0 |
| S10 | 4.21E-05 | -1.27E-06 | 0.00E+0 0 | 0.00E+00 | 0.00E+00 | 0.00E+00 | 0.00E+0 0 | 0.00E+0 0 |
| S11 | -2.93E-03 | 9.99E-04 | -2.40E-04 | 4.07E-05 | -4.79E-06 | 3.70E-07 | -1.69E-08 | 3.43E-10 |
| S12 | 1.58E-03 | -3.58E-04 | 6.06E-05 | -7.51E-06 | 6.58E-07 | -3.85E-08 | 1.35E-09 | -2.14E-11 |

It can be learned from Table 4.2 that all lens elements in the lens assembly 10 are aspherical lens elements, that is, the lens assembly 10 includes 12 aspherical surfaces. An aspherical surface profile Z of each lens element in the lens assembly 10 may be calculated according to the following aspherical surface formula:

$$Z = \frac{cr^2}{1+\sqrt{1-(1+k)c^2 r^2}} + \sum_{i=1}^{n} A_I E_I(x, y)$$

The parameter c=1/R, R represents a curvature radius, r represents a distance from a point on an optical surface to the optical axis, Z represents an aspherical sagittal height of the point along the optical axis, k represents a quadratic coefficient of the surface, and i represents an aspherical coefficient term, where i is 30 in this embodiment. Ai represents an aspherical coefficient.

Table 4.3 shows focal lengths of the lens elements and the lens element units in the lens assembly according to Embodiment 4 of this application.

| f1/mm | f2/mm | f3/mm | f4/mm | f5/mm | f6/mm |
|-------|-------|-------|-------|-------|-------|
| 15.05 | -14.07 | 7.46 | -6.83 | 8.37 | -13.11 |

Herein, f1, f2, f3, f4, f5 and f6 are respectively focal lengths of the first lens element 11, the second lens element 12, the third lens element 13, the fourth lens element 14, the fifth lens element 15, and the sixth lens element 16.

The lens assembly 10 uses the foregoing architecture in which there are two lens element units. Focal powers of the two lens element units and the focal power of the first lens element are properly allocated, and a quantity of lens elements, and a focal length, a thickness, a refractive index, an Abbe number, and the like of each lens element are combined, so that features such as a wide aperture, a small size, low costs, and high resolution of the lens assembly 10 can be implemented. For optical parameters of the lens assembly 10 including the foregoing lens elements, refer to Table 4.4.

Table 4.4 shows optical parameters of the lens assembly according to Embodiment 4 of this application.

| | F# | EFL/mm | Mag | IMH/mm | TTL/mm | G1/mm | G2/mm |
|---|-----|--------|-----|--------|--------|-------|-------|
| Infinity state | 1.98 | 15.2 | - | 3.4 | 17.26 | 8.78 | -10.07 |
| Macro state | 2.03 | 10 | 0.3x | 3.2 | | | |

In this embodiment, a half of image height of the lens assembly 10 in the infinity state may be different from a half of image height of the lens assembly 10 in the macro state, to meet an imaging quality requirement.

It can be learned from Table 4.4 that the lens assembly 10 provided in Embodiment 4 of this application has features of a wide aperture and a small total track length, can implement a long-focus telephoto function to ensure high-quality imaging in a scene like a distant image-shooting scene, and can also implement a macro function with a high magnification rate and high resolution to ensure high-definition imaging in a scene like a close-up image-shooting scene.

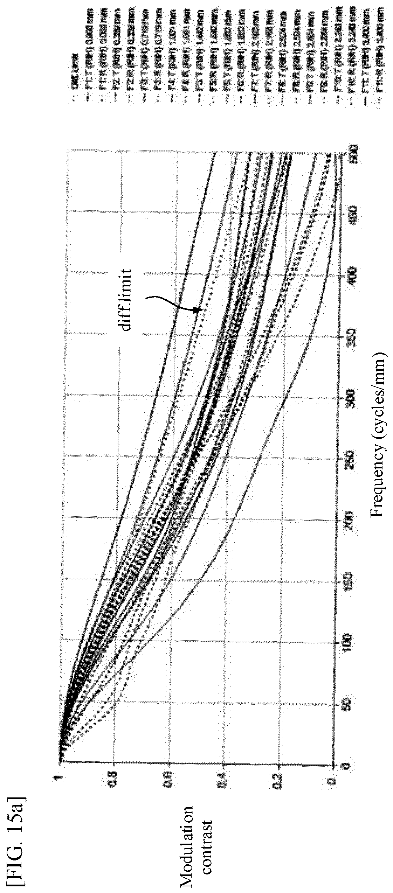

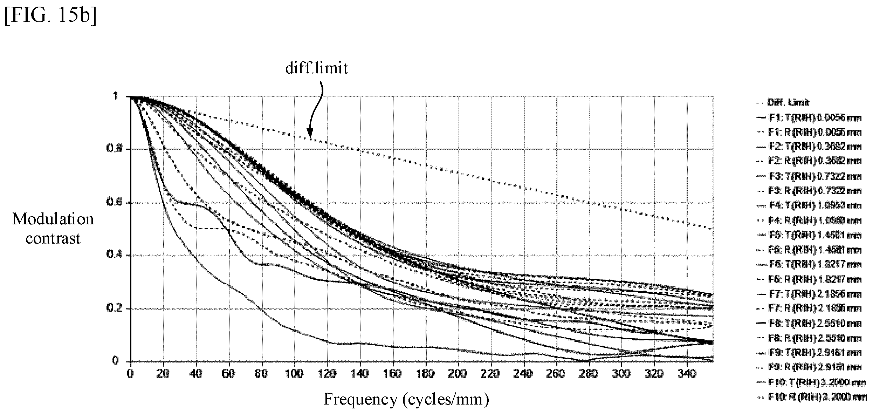

FIG. 15a is a curve diagram of a modulation transfer function for the lens assembly in the infinity state according to Embodiment 4 of this application. FIG. 15b is a curve diagram of a modulation transfer function for the lens assembly in the macro state according to Embodiment 4 of this application.

In FIG. 15a and FIG. 15b, horizontal coordinates represent different frequencies, vertical coordinates represent modulation contrasts, solid lines in the figure represent sagittal fields, and dashed lines in the figure represent tangential fields. In the figure, diff.limit represents a modulation transfer function of an imaging system for an infinitesimal object point. A curve closer to the diff.limit curve indicates better imaging quality. It can be learned from FIG. 15a and FIG. 15b that the lens assembly provided in this embodiment can implement high-quality imaging in both the infinity state and the macro state.

Embodiment 5

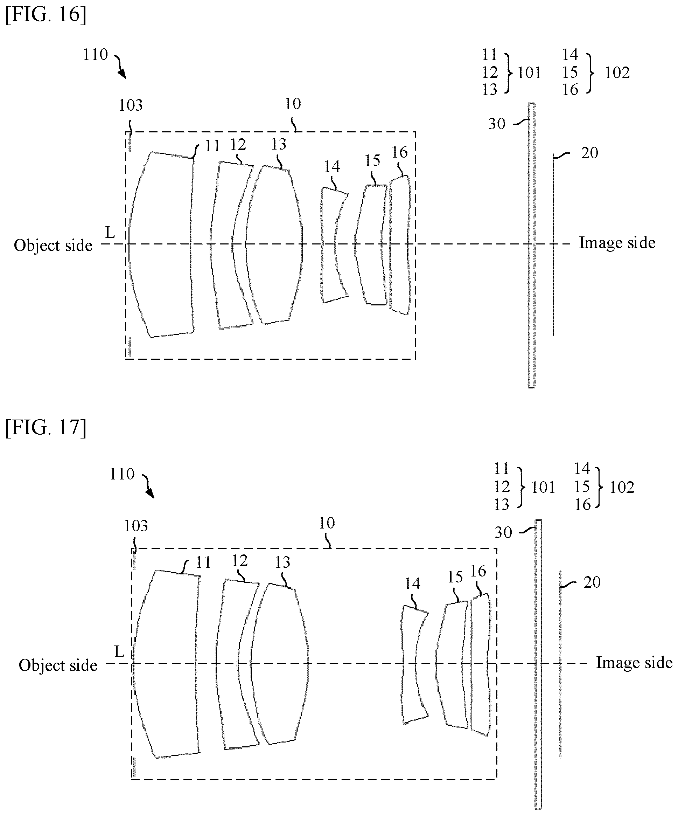

FIG. 16 is a diagram of a simulated structure of the camera module in which the lens assembly is in the infinity state according to Embodiment 5 of this application.

In this embodiment of this application, as shown in FIG. 16, the lens assembly 10 includes six lens elements with focal powers, and the first lens element unit 101 may include three lens elements with focal powers, for example, the first lens element 11, the second lens element 12, and the third lens element 13. The second lens element unit 102 may include three lens elements with focal powers, for example, the fourth lens element 14, the fifth lens element 15, and the sixth lens element 16. The first lens element 11, the second lens element 12, the third lens element 13, the fourth lens element 14, the fifth lens element 15, and the sixth lens element 16 are sequentially arranged along the optical axis L from the object side to the image side.

To be specific, in the camera module 110, the stop 103, the first lens element 11, the second lens element 12, the third lens element 13, the fourth lens element 14, the fifth lens element 15, the sixth lens element 16, the light filter 30, and the image sensor 20 are sequentially arranged along the optical axis L from the object side to the image side. Light entering the camera module 110 sequentially passes through the lens assembly 10 and the light filter 30 in the foregoing sequence and is irradiated onto the image sensor 20, and is finally imaged on the photosensitive surface of the image sensor 20.

The first lens element unit 101 has a positive focal power, and the second lens element unit 102 has a negative focal power.

Specifically, the first lens element 11 may have a positive focal power, at least a part that is of an object side surface of the first lens element 11 and that corresponds to the optical axis may be a convex surface, and at least a part that is of an image side surface of the first lens element 11 and that corresponds to the optical axis may be a convex surface.

The second lens element 12 may have a negative focal power. At least a part that is of an object side surface of the second lens element 12 and that corresponds to the optical axis may be a convex surface, and at least a part that is of an image side surface of the second lens element 12 and that corresponds to the optical axis may be a convex surface.

The third lens element 13 may have a positive focal power. At least a part that is of an object side surface of the third lens element 13 and that corresponds to the optical axis may be a convex surface, and at least a part that is of an image side surface of the third lens element 13 and that corresponds to the optical axis may be a concave surface.

The fourth lens element 14 may have a negative focal power. At least a part that is of an object side surface of the fourth lens element 14 and that corresponds to the optical axis may be a concave surface, and at least a part that is of an image side surface of the fourth lens element 14 and that corresponds to the optical axis may be a convex surface.

The fifth lens element 15 may have a positive focal power. At least a part that is of an object side surface of the fifth lens element 15 and that corresponds to an optical axis may be a convex surface, and at least a part that is of an image side surface of the fifth lens element 15 and that corresponds to the optical axis may be a convex surface.

The sixth lens element 16 may have a negative focal power. At least a part that is of an object side surface of the sixth lens element 16 and that corresponds to the optical axis may be a convex surface, and at least a part that is of an image side surface of the sixth lens element 16 and that corresponds to the optical axis may be a convex surface.

When the lens assembly 10 is in the infinity state, as shown in FIG. 16, the second lens element unit 102 is closer to the first lens element unit 101, and is farther away from the light filter 30 and the image sensor 20. When the lens assembly 10 switches from the infinity state to the macro state, the second lens element unit 102 moves toward the image side along the optical axis L.

FIG. 17 is a diagram of a simulated structure of the camera module in which the lens assembly is in the macro state according to Embodiment 5 of this application.

As shown in FIG. 17, when the lens assembly 10 is in the macro state, the second lens element 12 is closer to the light filter 30 and the image sensor 20, and is farther away from the first lens element unit 101.

A curvature radius R11 of the object side surface of the first lens element 11 is equal to 7.81, a curvature radius R12 of the image side surface of the first lens element 11 is equal to 152.96, and a focal length f1 of the first lens element 11 is equal to 14.98. The first lens element 11 satisfies |(R11+R12)/f1|=10.7.

A focal length EFL1 of the lens assembly 10 in the infinity state is equal to 15.2, and a ratio f1/EFL1 of a focal length f1 of the first lens element 11 to the focal length EFL1 of the lens assembly 10 in the infinity state is equal to 0.99.

A refractive index Nd1 of the first lens element 11 is equal to 1.544.

An f-number F#1 of the lens assembly 10 in the infinity state is equal to 1.98. An f-number F#2 of the lens assembly 10 in the macro state is equal to 2.02.

A magnification rate Mag of the lens assembly 10 in the macro state is equal to 0.3x.

A focal length G1 of the first lens element unit 101 is equal to 8.78, and a ratio |G1/EFL1| of the focal length G1 of the first lens element unit 101 to the focal length EFL1 of the lens assembly 10 in the infinity state is equal to 0.58.

A focal length G2 of the second lens element unit 102 is equal to -10.07, and a ratio |G2/EFL1| of the focal length G2 of the second lens element unit 102 to the focal length EFL1 of the lens assembly 10 in the infinity state is equal to 0.66.

A focal length EFL2 of the lens assembly 10 in the macro state is equal to 10, a total track length TTL of the lens assembly 10 is equal to 17.26, and a ratio |EFL2/TTL| of the focal length EFL2 of the lens assembly 10 in the macro state to the total track length TTL of the lens assembly 10 is equal to 0.58.

A ratio EFL1/EFL2 of the focal length EFL1 of the lens assembly 10 in the infinity state to the focal length EFL2 of the lens assembly 10 in the macro state is equal to 1.52.

The following describes an example of optical parameters of each lens element in this embodiment.

Table 5.1 shows optical parameters of the lens elements in the camera module according to Embodiment 5 of this application.

| Lens element | Surface number | Surface profile | Curvature radius | Thickness | Material | Y semi-aperture |
|---|---|---|---|---|---|---|
| | Stop | - | - | -0.04 | - | 3.84 |
| L1 | S1 | Aspherical | 7.81 | 2.50 | 544.560 | 3.84 |
| | S2 | Aspherical | 152.96 | 0.81 | | 3.60 |
| L2 | S3 | Aspherical | 10.67 | 0.88 | 671.196 | 3.46 |
| | S4 | Aspherical | 4.87 | 0.53 | | 3.28 |
| L3 | S5 | Aspherical | 7.95 | 2.31 | 544.560 | 3.29 |
| | S6 | Aspherical | -7.43 | 0.80 | | 3.09 |

(continued)

| Lens element | Surface number | Surface profile | Curvature radius | Thickness | Material | Y semi-aperture |
|---|---|---|---|---|---|---|
| L4 | S7 | Aspherical | -15.14 | 0.50 | 544.560 | 2.42 |
| | S8 | Aspherical | 4.60 | 0.81 | | 2.10 |
| L5 | S9 | Aspherical | 3.94 | 1.06 | 605.288 | 2.45 |
| | S10 | Aspherical | 10.61 | 0.33 | | 2.49 |
| L6 | S11 | Aspherical | 47.95 | 0.70 | 544.560 | 2.65 |
| | S12 | Aspherical | 9.31 | 4.93 | | 2.91 |
| IR | S13 | Spherical | - | 0.21 | 518.642 | 5.90 |
| | S14 | Spherical | - | 0.77 | | 5.90 |
| | Image plane | Spherical | - | - | - | 3.80 |

L1 is the first lens element 11, L2 is the second lens element 12, L3 is the third lens element 13, L4 is the fourth lens element 14, L5 is the fifth lens element 15, L6 is the sixth lens element 16, and IR is the light filter 30.

For specific illustration of S0 to S14, refer to Embodiment 1. Details are not described in this embodiment again.

For meanings of parameters such as the curvature radius, the thickness, the material, and the Y semi-aperture, also refer to Embodiment 1. Details are not described again in this embodiment.

Table 5.2 shows aspherical coefficients of the lens elements in the lens assembly according to Embodiment 5 of this application.

| | Curvature radius R | Conic coefficient K | A4 | A6 | A8 | A10 | A12 | A14 |
|---|---|---|---|---|---|---|---|---|
| S1 | 7.81 | 0 | 4.08E-05 | -2.78E-04 | 1.90E-04 | -9.35E-05 | 3.13E-05 | -7.28E-06 |
| S2 | 152.96 | 0 | 4.81E-03 | -2.46E-03 | 1.07E-03 | -3.45E-04 | 8.35E-05 | -1.55E-05 |
| S3 | 10.67 | 0 | 1.04E-02 | -9.00E-03 | 5.15E-03 | -2.53E-03 | 1.02E-03 | -3.25E-04 |
| S4 | 4.87 | 0 | 1.31E-02 | -1.33E-02 | 7.62E-03 | -3.78E-03 | 1.63E-03 | -5.77E-04 |
| S5 | 7.95 | 0 | 6.72E-03 | -6.11E-03 | 4.08E-03 | -2.53E-03 | 1.29E-03 | -4.93E-04 |
| S6 | -7.43 | 0 | 8.96E-04 | -7.71E-04 | 8.17E-04 | -5.93E-04 | 2.88E-04 | -9.61E-05 |
| S7 | -15.14 | 0 | 4.25E-03 | -6.88E-03 | 1.51E-02 | -1.71E-02 | 1.40E-02 | -8.40E-03 |
| S8 | 4.60 | 0 | -5.01E-03 | -1.37E-02 | 1.94E-02 | -1.45E-02 | 8.45E-03 | -4.00E-03 |
| S9 | 3.94 | 0 | 1.85E-03 | -1.85E-02 | 7.28E-03 | -6.88E-04 | -2.87E-04 | 9.67E-05 |
| S10 | 10.61 | 0 | 6.37E-02 | -6.81E-02 | 2.96E-02 | -6.34E-03 | 4.82E-04 | 5.29E-05 |
| S11 | 47.95 | 0 | 7.29E-02 | -7.96E-02 | 4.45E-02 | -1.86E-02 | 5.44E-03 | 2.32E-04 |
| S12 | 9.31 | 0 | 2.12E-02 | -4.15E-02 | 4.24E-02 | -3.63E-02 | 2.44E-02 | -1.22E-02 |
| | A16 | A18 | A20 | A22 | A24 | A26 | A28 | A30 |
| S1 | 1.19E-06 | -1.37E-07 | 1.10E-08 | -6.13E-10 | 2.24E-11 | -4.83E-13 | 4.67E-15 | 0.00E+00 |
| S2 | 2.18E-06 | -2.24E-07 | 1.60E-08 | -7.46E-10 | 2.03E-11 | -2.42E-13 | 0.00E+00 | 0.00E+00 |
| S3 | 7.73E-05 | -1.35E-05 | 1.71E-06 | -1.54E-07 | 9.71E-09 | -4.03E-10 | 9.93E-12 | -1.10E-13 |
| S4 | 1.58E-04 | -3.18E-05 | 4.63E-06 | -4.80E-07 | 3.44E-08 | -1.62E-09 | 4.53E-11 | -5.68E-13 |
| S5 | 1.38E-04 | -2.77E-05 | 3.97E-06 | -4.04E-07 | 2.84E-08 | -1.31E-09 | 3.59E-11 | -4.40E-13 |
| S6 | 2.28E-05 | -3.92E-06 | 4.91E-07 | -4.42E-08 | 2.80E-09 | -1.18E-10 | 2.97E-12 | -3.40E-14 |
| S7 | 3.71E-03 | -1.19E-03 | 2.79E-04 | -4.65E-05 | 5.39E-06 | -4.13E-07 | 1.87E-08 | -3.82E-10 |
| S8 | 1.46E-03 | -3.92E-04 | 7.36E-05 | -9.07E-06 | 6.56E-07 | -2.10E-08 | 0.00E+00 | 0.00E+00 |

(continued)

| | Curvature radius R | Conic coefficient K | A4 | A6 | A8 | A10 | A12 | A14 |
|---|---|---|---|---|---|---|---|---|
| S9 | -1.15E-05 | 5.01E-07 | 0.00E+00 | 0.00E+00 | 0.00E+00 | 0.00E+00 | 0.00E+00 | 0.00E+00 |
| S10 | -1.19E-05 | 5.98E-07 | 0.00E+00 | 0.00E+00 | 0.00E+00 | 0.00E+00 | 0.00E+00 | 0.00E+00 |
| S11 | -1.33E-03 | 7.58E-04 | -2.42E-04 | 4.96E-05 | -6.70E-06 | 5.78E-07 | -2.89E-08 | 6.42E-10 |
| S12 | 4.43E-03 | -1.17E-03 | 2.24E-04 | -3.08E-05 | 2.94E-06 | -1.86E-07 | 6.98E-09 | -1.18E-10 |

It can be learned from Table 5.2 that all lens elements in the lens assembly 10 are aspherical lens elements, that is, the lens assembly 10 includes 12 aspherical surfaces. An aspherical surface profile Z of each lens element in the lens assembly 10 may be calculated according to the following aspherical surface formula:

$$Z = \frac{cr^2}{1+\sqrt{1-(1+k)c^2r^2}} + \sum_{i=1}^{n} A_I E_I(x, y)$$

The parameter c=1/R, R represents a curvature radius, r represents a distance from a point on an optical surface to the optical axis, Z represents an aspherical sagittal height of the point along the optical axis, k represents a quadratic coefficient of the surface, and i represents an aspherical coefficient term, where i is 30 in this embodiment. Ai represents an aspherical coefficient.

Table 5.3 shows focal lengths of the lens elements and the lens element units in the lens assembly according to Embodiment 5 of this application.

| f1/mm | f2/mm | f3/mm | f4/mm | f5/mm | f6/mm |
|---|---|---|---|---|---|
| 14.98 | -14.09 | 7.43 | -6.40 | 9.69 | -21.30 |

Herein, f1, f2, f3, f4, f5 and f6 are respectively focal lengths of the first lens element 11, the second lens element 12, the third lens element 13, the fourth lens element 14, the fifth lens element 15, and the sixth lens element 16.
The lens assembly 10 uses the foregoing architecture in which there are two lens element units. Focal powers of the two lens element units and the focal power of the first lens element are properly allocated, and a quantity of lens elements, and a focal length, a thickness, a refractive index, an Abbe number, and the like of each lens element are combined, so that features such as a wide aperture, a small size, low costs, and high resolution of the lens assembly 10 can be implemented. For optical parameters of the lens assembly 10 including the foregoing lens elements, refer to Table 5.4.

Table 5.4 shows optical parameters of the lens assembly according to Embodiment 5 of this application.

| | F# | EFL/mm | Mag | IMH/mm | TTL/mm | G1/mm | G2/mm |
|---|---|---|---|---|---|---|---|
| Infinity state | 1.98 | 15.2 | - | 3.8 | 17.26 | 8.78 | -10.07 |
| Macro state | 2.02 | 10 | 0.3x | | | | |

It can be learned from Table 5.4 that the lens assembly 10 provided in Embodiment 5 of this application has features of a wide aperture and a small total track length, can implement a long-focus telephoto function to ensure high-quality imaging in a scene like a distant image-shooting scene, and can also implement a macro function with a high magnification rate and high resolution to ensure high-definition imaging in a scene like a close-up image-shooting scene.

Embodiment 6

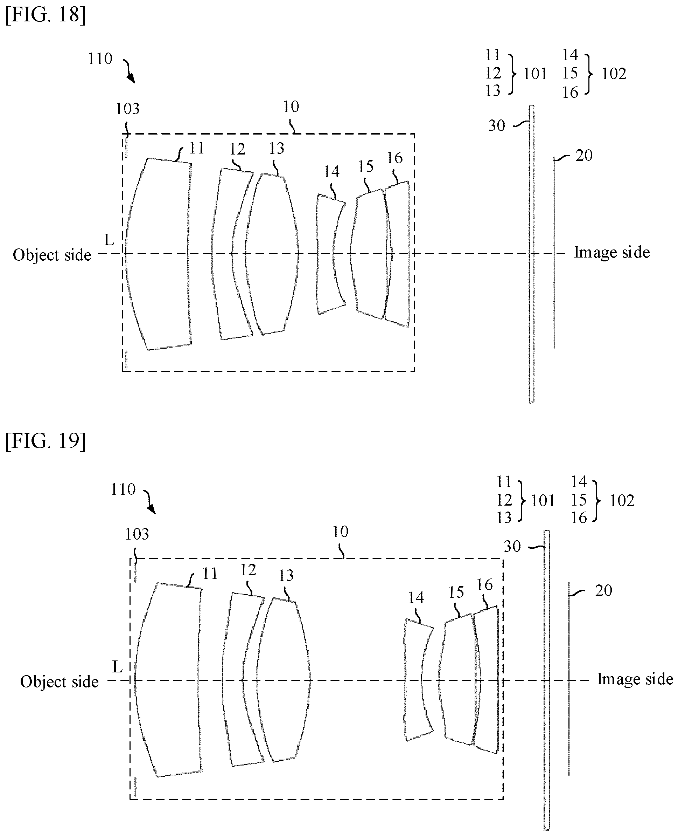

FIG. 18 is a diagram of a simulated structure of the camera module in which the lens assembly is in an infinity state according to Embodiment 6 of this application.
In this embodiment of this application, as shown in FIG. 18, the lens assembly 10 includes six lens elements with focal powers, and the first lens element unit 101 may include three lens elements with focal powers, for example, the first lens element 11, the second lens element 12, and the third lens element 13. The second lens element unit 102 may include three lens elements with focal powers, for example, the fourth lens element 14, the fifth lens element 15, and the sixth lens element 16. The first lens element 11, the second lens element 12, the third lens element 13, the fourth lens element 14, the fifth lens element 15, and the sixth lens element 16 are sequentially arranged along the optical axis L from the object side to the image side.

To be specific, in the camera module 110, the stop 103, the first lens element 11, the second lens element 12, the third lens element 13, the fourth lens element 14, the fifth lens element 15, the sixth lens element 16, the light filter 30, and the image sensor 20 are sequentially arranged along the optical axis L from the object side to the image side. Light entering the camera module 110 sequentially passes through the lens assembly 10 and the light filter 30 in the foregoing sequence and is irradiated onto the image sensor 20, and is finally imaged on the photosensitive surface of the image sensor 20.

The first lens element unit 101 has a positive focal power, and the second lens element unit 102 has a negative focal power.

Specifically, the first lens element 11 may have a positive focal power. At least a part that is of an object side surface of the first lens element 11 and that corresponds to the optical axis may be a convex surface, and at least a part that is of an image side surface of the first lens element 11 and that corresponds to the optical axis may be a concave surface.

The second lens element 12 may have a negative focal power. At least a part that is of an object side surface of the second lens element 12 and that corresponds to the optical axis may be a convex surface, and at least a part that is of an image side surface of the second lens element 12 and that corresponds to the optical axis may be a convex surface.

The third lens element 13 may have a positive focal power. At least a part that is of an object side surface of the third lens element 13 and that corresponds to the optical axis may be a convex surface, and at least a part that is of an image side surface of the third lens element 13 and that corresponds to the optical axis may be a concave surface.

The fourth lens element 14 may have a negative focal power. At least a part that is of an object side surface of the fourth lens element 14 and that corresponds to the optical axis may be a concave surface, and at least a part that is of an image side surface of the fourth lens element 14 and that corresponds to the optical axis may be a convex surface.

The fifth lens element 15 may have a positive focal power. At least a part that is of an object side surface of the fifth lens element 15 and that corresponds to an optical axis may be a convex surface, and at least a part that is of an image side surface of the fifth lens element 15 and that corresponds to the optical axis may be a convex surface.

The sixth lens element 16 may have a negative focal power. At least a part that is of an object side surface of the sixth lens element 16 and that corresponds to the optical axis may be a concave surface, and at least a part that is of an image side surface of the sixth lens element 16 and that corresponds to the optical axis may be a concave surface.

When the lens assembly 10 is in the infinity state, as shown in FIG. 18, the second lens element unit 102 is closer to the first lens element unit 101, and is farther away from the light filter 30 and the image sensor 20. When the lens assembly 10 switches from the infinity state to the macro state, the second lens element unit 102 moves toward the image side along the optical axis L.

FIG. 19 is a diagram of a simulated structure of the camera module in which the lens assembly is in the macro state according to Embodiment 6 of this application.

As shown in FIG. 19, when the lens assembly 10 is in the macro state, the second lens element 12 is closer to the light filter 30 and the image sensor 20, and is farther away from the first lens element unit 101.

A curvature radius R11 of the object side surface of the first lens element 11 is equal to 7.81, a curvature radius R12 of the image side surface of the first lens element 11 is equal to -703.84, and a focal length f1 of the first lens element 11 is equal to 14.17. The first lens element 11 satisfies |(R11+R12)/f1|=49.1.

A focal length EFL1 of the lens assembly 10 in the infinity state is equal to 15.1, and a ratio f1/EFL1 of a focal length f1 of the first lens element 11 to the focal length EFL1 of the lens assembly 10 in the infinity state is equal to 0.94.

A refractive index Nd1 of the first lens element 11 is equal to 1.544.

An f-number F#1 of the lens assembly 10 in the infinity state is equal to 1.98. An f-number F#2 of the lens assembly 10 in the macro state is equal to 2.02.

A magnification rate Mag of the lens assembly 10 in the macro state is equal to 0.3x.

A focal length G1 of the first lens element unit 101 is equal to 8.76, and a ratio |G1/EFL1| of the focal length G1 of the first lens element unit 101 to the focal length EFL1 of the lens assembly 10 in the infinity state is equal to 0.58.

A focal length G2 of the second lens element unit 102 is equal to -10.24, and a ratio |G2/EFL1| of the focal length G2 of the second lens element unit 102 to the focal length EFL1 of the lens assembly 10 in the infinity state is equal to 0.68.

A focal length EFL2 of the lens assembly 10 in the macro state is equal to 10.1, a total track length TTL of the lens assembly 10 is equal to 17.16, and a ratio |EFL2/TTL| of the focal length EFL2 of the lens assembly 10 in the macro state to the total track length TTL of the lens assembly 10 is equal to 0.59.

A ratio EFL1/EFL2 of the focal length EFL1 of the lens assembly 10 in the infinity state to the focal length EFL2 of the lens assembly 10 in the macro state is equal to 1.49.

The following describes an example of optical parameters of each lens element in this embodiment.

Table 6.1 shows optical parameters of the lens elements in the camera module according to Embodiment 6 of this application.

| Lens element | Surface number | Surface profile | Curvature radius | Thickness | Material | Y semi-aperture |
|---|---|---|---|---|---|---|
| | Stop | - | - | -0.02 | - | 3.82 |
| L1 | S1 | Aspherical | 7.81 | 2.50 | 544.560 | 3.82 |
| | S2 | Aspherical | -703.84 | 0.94 | | 3.60 |
| L2 | S3 | Aspherical | 11.56 | 0.82 | 677.192 | 3.43 |
| | S4 | Aspherical | 5.04 | 0.56 | | 3.23 |
| L3 | S5 | Aspherical | 8.29 | 2.08 | 544.560 | 3.23 |
| | S6 | Aspherical | -7.44 | 0.80 | | 3.05 |
| L4 | S7 | Aspherical | -12.30 | 0.63 | 544.560 | 2.40 |
| | S8 | Aspherical | 4.81 | 0.68 | | 2.03 |
| L5 | S9 | Aspherical | 3.85 | 1.44 | 585.340 | 2.25 |
| | S10 | Aspherical | 20.95 | 0.21 | | 2.43 |
| L6 | S11 | Aspherical | -6.24 | 0.70 | 544.560 | 2.62 |
| | S12 | Aspherical | -32.79 | 4.82 | | 2.92 |
| IR | S13 | Spherical | - | 0.21 | 518.642 | 5.90 |
| | S14 | Spherical | - | 0.77 | | 5.90 |
| | Image plane | Spherical | - | - | - | 3.60 |

L1 is the first lens element 11, L2 is the second lens element 12, L3 is the third lens element 13, L4 is the fourth lens element 14, L5 is the fifth lens element 15, L6 is the sixth lens element 16, and IR is the light filter 30.

For specific illustration of S0 to S14, refer to Embodiment 1. Details are not described in this embodiment again.

For meanings of parameters such as the curvature radius, the thickness, the material, and the Y semi-aperture, also refer to Embodiment 1. Details are not described again in this embodiment.

Table 6.2 shows aspherical coefficients of the lens elements in the lens assembly according to Embodiment 6 of this application.

| | Curvature radius R | Conic coefficient K | A4 | A6 | A8 | A10 | A12 | A14 |
|---|---|---|---|---|---|---|---|---|
| S1 | 7.81 | 0 | 4.17E-04 | -3.28E-04 | 1.16E-04 | -3.50E-05 | 8.32E-06 | -1.55E-06 |
| S2 | -703.84 | 0 | 8.10E-03 | -4.05E-03 | 1.55E-03 | -4.73E-04 | 1.15E-04 | -2.16E-05 |
| S3 | 11.56 | 0 | 2.11E-02 | -1.64E-02 | 8.15E-03 | -3.44E-03 | 1.24E-03 | -3.58E-04 |
| S4 | 5.04 | 0 | 2.65E-02 | -2.49E-02 | 1.31E-02 | -5.69E-03 | 2.18E-03 | -6.93E-04 |
| S5 | 8.29 | 0 | 1.05E-02 | -9.92E-03 | 5.47E-03 | -2.57E-03 | 1.05E-03 | -3.42E-04 |
| S6 | -7.44 | 0 | 1.12E-03 | -1.17E-03 | 7.47E-04 | -2.46E-04 | 9.43E-06 | 3.46E-05 |
| S7 | -12.30 | 0 | 8.21E-03 | -2.27E-03 | 6.18E-03 | -7.57E-03 | 5.96E-03 | -3.24E-03 |
| S8 | 4.81 | 0 | -9.23E-03 | -3.29E-03 | 1.60E-02 | -1.99E-02 | 1.58E-02 | -8.61E-03 |
| S9 | 3.85 | 0 | -2.18E-02 | -8.19E-04 | 8.47E-04 | -1.12E-04 | -7.03E-06 | 1.57E-06 |
| S10 | 20.95 | 0 | 1.38E-02 | -1.98E-02 | 9.11E-03 | -3.32E-03 | 9.43E-04 | -1.71E-04 |
| S11 | -6.24 | 0 | 3.92E-02 | -2.33E-02 | 1.20E-03 | 1.32E-02 | -1.58E-02 | 1.06E-02 |
| S12 | -32.79 | 0 | 2.02E-02 | -2.53E-02 | 2.94E-02 | -2.62E-02 | 1.70E-02 | -8.09E-03 |
| | A16 | A18 | A20 | A22 | A24 | A26 | A28 | A30 |

(continued)

| | Curvature radius R | Conic coefficient K | A4 | A6 | A8 | A10 | A12 | A14 |
|---|---|---|---|---|---|---|---|---|
| S1 | 2.26E-07 | -2.56E-08 | 2.18E-09 | -1.35E-10 | 5.60E-12 | -1.39E-13 | 1.55E-15 | 0.00E+0 0 |
| S2 | 2.99E-06 | -2.96E-07 | 2.00E-08 | -8.80E-10 | 2.24E-11 | -2.50E-13 | -4.86E-17 | 0.00E+0 0 |
| S3 | 7.91E-05 | -1.30E-05 | 1.59E-06 | -1.40E-07 | 8.69E-09 | -3.61E-10 | 8.98E-12 | -1.01E-13 |
| S4 | 1.72E-04 | -3.21E-05 | 4.43E-06 | -4.47E-07 | 3.19E-08 | -1.53E-09 | 4.43E-11 | -5.82E-13 |
| S5 | 8.33E-05 | -1.50E-05 | 1.99E-06 | -1.94E-07 | 1.35E-08 | -6.41E-10 | 1.85E-11 | -2.44E-13 |
| S6 | -1.90E-05 | 5.59E-06 | -1.06E-06 | 1.34E-07 | -1.13E-08 | 6.12E-10 | -1.93E-11 | 2.68E-13 |
| S7 | 1.23E-03 | -3.21E-04 | 5.48E-05 | -5.31E-06 | 9.91E-08 | 3.87E-08 | -4.23E-09 | 1.45E-10 |
| S8 | 3.25E-03 | -8.48E-04 | 1.49E-04 | -1.69E-05 | 1.10E-06 | -3.11E-08 | 0.00E+0 0 | 0.00E+0 0 |
| S9 | 0.00E+00 | 0.00E+00 | 0.00E+00 | 0.00E+00 | 0.00E+0 0 | 0.00E+0 0 | 0.00E+0 0 | 0.00E+0 0 |
| S10 | 1.68E-05 | -6.82E-07 | 0.00E+00 | 0.00E+00 | 0.00E+0 0 | 0.00E+0 0 | 0.00E+0 0 | 0.00E+0 0 |
| S11 | -4.76E-03 | 1.50E-03 | -3.36E-04 | 5.37E-05 | -5.97E-06 | 4.38E-07 | -1.91E-08 | 3.72E-10 |
| S12 | 2.82E-03 | -7.26E-04 | 1.37E-04 | -1.85E-05 | 1.76E-06 | -1.11E-07 | 4.17E-09 | -7.04E-11 |

It can be learned from Table 6.2 that all lens elements in the lens assembly 10 are aspherical lens elements, that is, the lens assembly 10 includes 12 aspherical surfaces. An aspherical surface profile Z of each lens element in the lens assembly 10 may be calculated according to the following aspherical surface formula:

$$Z = \frac{cr^2}{1+\sqrt{1-(1+k)c^2r^2}} + \sum_{i=1}^{n} A_I E_I(x, y)$$

The parameter c=1/R, R represents a curvature radius, r represents a distance from a point on an optical surface to the optical axis, Z represents an aspherical sagittal height of the point along the optical axis, k represents a quadratic coefficient of the surface, and i represents an aspherical coefficient term, where i is 30 in this embodiment. Ai represents an aspherical coefficient.

Table 6.3 shows focal lengths of the lens elements and the lens element units in the lens assembly according to Embodiment 6 of this application.

| f1/mm | f2/mm | f3/mm | f4/mm | f5/mm | f6/mm |
|---|---|---|---|---|---|
| 14.17 | -13.78 | 7.54 | -6.25 | 7.78 | -14.24 |

Herein, f1, f2, f3, f4, f5 and f6 are respectively focal lengths of the first lens element 11, the second lens element 12, the third lens element 13, the fourth lens element 14, the fifth lens element 15, and the sixth lens element 16.

The lens assembly 10 uses the foregoing architecture in which there are two lens element units. Focal powers of the two lens element units and the focal power of the first lens element are properly allocated, and a quantity of lens elements, and a focal length, a thickness, a refractive index, an Abbe number, and the like of each lens element are combined, so that features such as a wide aperture, a small size, low costs, and high resolution of the lens assembly 10 can be implemented. For optical parameters of the lens assembly 10 including the foregoing lens elements, refer to Table 6.4.

Table 6.4 shows optical parameters of the lens assembly according to Embodiment 6 of this application.

| | F# | EFL/mm | Mag | IMH/mm | TTL/mm | G1/mm | G2/mm |
|---|---|---|---|---|---|---|---|
| Infinity state | 1.98 | 15.1 | - | 3.6 | 17.16 | 8.76 | -10.24 |
| Macro state | 2.02 | 10.1 | 0.3x | | | | |

It can be learned from Table 6.4 that the lens assembly 10 provided in Embodiment 6 of this application has features of a wide aperture and a small total track length, can implement a long-focus telephoto function to ensure high-quality imaging in a scene like a distant image-shooting scene, and can also implement a macro function with a high magnification rate and high resolution to ensure high-definition imaging in a scene like a close-up image-shooting scene.

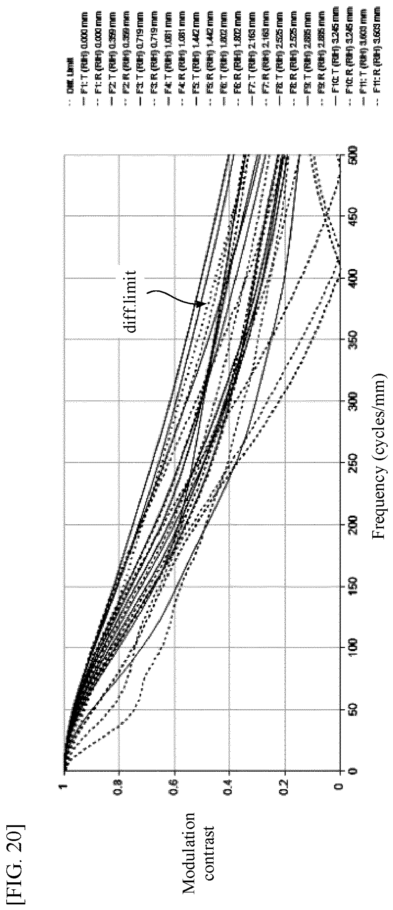

FIG. 20 is a curve diagram of a modulation transfer function for the lens assembly in the infinity state according to Embodiment 6 of this application.

In FIG. 20, horizontal coordinates represent different frequencies, vertical coordinates represent modulation contrasts, solid lines in the figure represent sagittal fields, and dashed lines in the figure represent tangential fields. In the figure, diff.limit represents a modulation transfer function of an imaging system for an infinitesimal object point. A curve closer to the diff.limit curve indicates better imaging quality. It can be learned from FIG. 20 that the lens assembly provided in this embodiment can implement high-quality imaging.

Embodiment 7

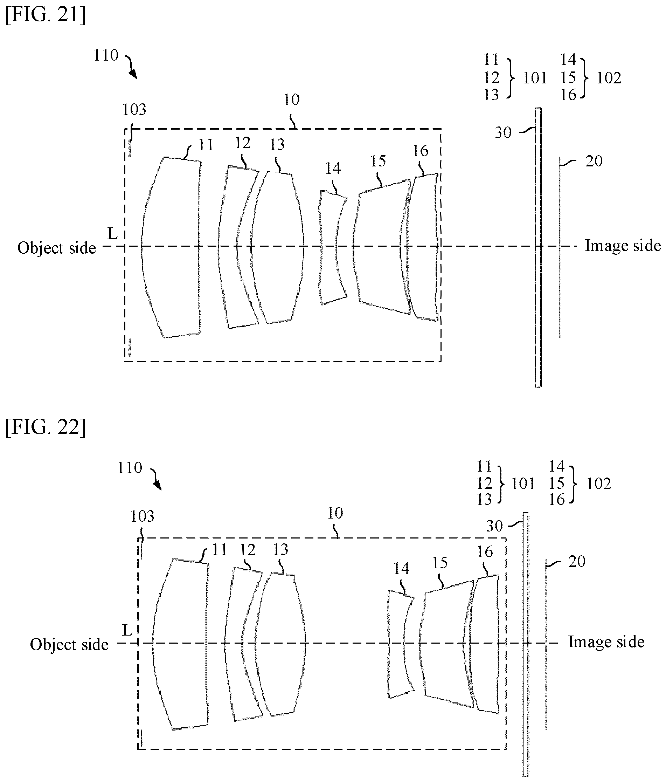

FIG. 21 is a diagram of a simulated structure of the camera module in which the lens assembly is in the infinity state according to Embodiment 7 of this application.

In this embodiment of this application, as shown in FIG. 21, the lens assembly 10 includes six lens elements with focal powers, and the first lens element unit 101 may include three lens elements with focal powers, for example, the first lens element 11, the second lens element 12, and the third lens element 13. The second lens element unit 102 may include three lens elements with focal powers, for example, the fourth lens element 14, the fifth lens element 15, and the sixth lens element 16. The first lens element 11, the second lens element 12, the third lens element 13, the fourth lens element 14, the fifth lens element 15, and the sixth lens element 16 are sequentially arranged along the optical axis L from the object side to the image side.

To be specific, in the camera module 110, the stop 103, the first lens element 11, the second lens element 12, the third lens element 13, the fourth lens element 14, the fifth lens element 15, the sixth lens element 16, the light filter 30, and the image sensor 20 are sequentially arranged along the optical axis L from the object side to the image side. Light entering the camera module 110 sequentially passes through the lens assembly 10 and the light filter 30 in the foregoing sequence and is irradiated onto the image sensor 20, and is finally imaged on the photosensitive surface of the image sensor 20.

The first lens element unit 101 has a positive focal power, and the second lens element unit 102 has a negative focal power.

Specifically, the first lens element 11 may have a positive focal power. At least a part that is of an object side surface of the first lens element 11 and that corresponds to the optical axis may be a convex surface, and at least a part that is of an image side surface of the first lens element 11 and that corresponds to the optical axis may be a concave surface.

The second lens element 12 may have a negative focal power. At least a part that is of an object side surface of the second lens element 12 and that corresponds to the optical axis may be a convex surface, and at least a part that is of an image side surface of the second lens element 12 and that corresponds to the optical axis may be a convex surface.

The third lens element 13 may have a positive focal power. At least a part that is of an object side surface of the third lens element 13 and that corresponds to the optical axis may be a convex surface, and at least a part that is of an image side surface of the third lens element 13 and that corresponds to the optical axis may be a concave surface.

The fourth lens element 14 may have a negative focal power. At least a part that is of an object side surface of the fourth lens element 14 and that corresponds to the optical axis may be a concave surface, and at least a part that is of an image side surface of the fourth lens element 14 and that corresponds to the optical axis may be a convex surface.

The fifth lens element 15 may have a positive focal power. At least a part that is of an object side surface of the fifth lens element 15 and that corresponds to an optical axis may be a convex surface, and at least a part that is of an image side surface of the fifth lens element 15 and that corresponds to the optical axis may be a convex surface.

The sixth lens element 16 may have a negative focal power. At least a part that is of an object side surface of the sixth lens element 16 and that corresponds to the optical axis may be a concave surface, and at least a part that is of an image side surface of the sixth lens element 16 and that corresponds to the optical axis may be a concave surface.

When the lens assembly 10 is in the infinity state, as shown in FIG. 21, the second lens element unit 102 is closer to the first lens element unit 101, and is farther away from the light filter 30 and the image sensor 20. When the lens assembly 10 switches from the infinity state to the macro state, the second lens element unit 102 moves toward the image side along the optical axis L.

FIG. 22 is a diagram of a simulated structure of the camera module in which the lens assembly is in the macro state according to Embodiment 7 of this application.

As shown in FIG. 22, when the lens assembly 10 is in the macro state, the second lens element 12 is closer to the light filter 30 and the image sensor 20, and is farther away from the first lens element unit 101.

A curvature radius R11 of the object side surface of the first lens element 11 is equal to 7.48, a curvature radius R12 of the image side surface of the first lens element 11 is equal to -145.88, and a focal length f1 of the first lens element 11 is equal to 13.11. The first lens element 11 satisfies |(R11+R12)/f1|=10.56.

A focal length EFL1 of the lens assembly 10 in the infinity state is equal to 15.1, and a ratio f1/EFL1 of a focal length f1 of the first lens element 11 to the focal length EFL1 of the lens assembly 10 in the infinity state is equal to 0.87.

A refractive index Nd1 of the first lens element 11 is equal to 1.544.

An f-number F#1 of the lens assembly 10 in the infinity state is equal to 1.98. An f-number F#2 of the lens assembly 10 in the macro state is equal to 2.02.

A magnification rate Mag of the lens assembly 10 in the macro state is equal to 0.3x.

A focal length G1 of the first lens element unit 101 is equal to 8.78, and a ratio |G1/EFL1| of the focal length G1 of the first lens element unit 101 to the focal length EFL1 of the lens assembly 10 in the infinity state is equal to 0.58.

A focal length G2 of the second lens element unit 102 is equal to -10.42, and a ratio |G2/EFL1| of the focal length G2 of the second lens element unit 102 to the focal length EFL1 of the lens assembly 10 in the infinity state is equal to 0.69.

A focal length EFL2 of the lens assembly 10 in the macro state is equal to 10.1, a total track length TTL of the lens assembly 10 is equal to 17.83, and a ratio |EFL2/TTL| of the focal length EFL2 of the lens assembly 10 in the macro state to the total track length TTL of the lens assembly 10 is equal to 0.56.

A ratio EFL1/EFL2 of the focal length EFL1 of the lens assembly 10 in the infinity state to the focal length EFL2 of the lens assembly 10 in the macro state is equal to 1.50.

The following describes an example of optical parameters of each lens element in this embodiment.

Table 7.1 shows optical parameters of the lens elements in the camera module according to Embodiment 7 of this application.

| Lens element | Surface number | Surface profile | Curvature radius | Thickness | Material | Y semi-aperture |
|---|---|---|---|---|---|---|
| | Stop | - | - | 0.48 | - | 3.82 |
| L1 | S1 | Aspherical | 7.48 | 2.38 | 544.560 | 3.82 |
| | S2 | Aspherical | -145.88 | 0.81 | | 3.60 |
| L2 | S3 | Aspherical | 9.71 | 0.78 | 653.216 | 3.43 |
| | S4 | Aspherical | 4.38 | 0.59 | | 3.23 |
| L3 | S5 | Aspherical | 8.10 | 2.17 | 544.560 | 3.23 |
| | S6 | Aspherical | -7.85 | 0.73 | | 3.05 |
| L4 | S7 | Aspherical | -10.45 | 0.62 | 539.558 | 2.40 |
| | S8 | Aspherical | 5.19 | 0.69 | | 2.03 |
| L5 | S9 | Aspherical | 3.97 | 1.96 | 588.330 | 2.25 |
| | S10 | Aspherical | 5.52 | 0.31 | | 2.43 |
| L6 | S11 | Aspherical | -40.76 | 1.22 | 594.302 | 2.62 |
| | S12 | Aspherical | -24.51 | 4.11 | | 2.92 |
| IR | S13 | Spherical | - | 0.21 | 518.642 | 5.90 |
| | S14 | Spherical | - | 0.77 | | 5.90 |
| | Image plane | Spherical | - | - | - | 3.60 |

L1 is the first lens element 11, L2 is the second lens element 12, L3 is the third lens element 13, L4 is the fourth lens element 14, L5 is the fifth lens element 15, L6 is the sixth lens element 16, and IR is the light filter 30.

For specific illustration of S0 to S14, refer to Embodiment 1. Details are not described in this embodiment again.

For meanings of parameters such as the curvature radius, the thickness, the material, and the Y semi-aperture, also refer to Embodiment 1. Details are not described again in this embodiment.

Table 7.2 shows aspherical coefficients of the lens elements in the lens assembly according to Embodiment 7 of this application.

| | Curvature radius R | Conic coefficient K | A4 | A6 | A8 | A10 | A12 | A14 |
|---|---|---|---|---|---|---|---|---|
| S1 | 7.48 | 0 | 1.24E-04 | -2.64E-04 | 1.47E-04 | -6.62E-05 | 2.10E-05 | -4.73E-06 |

(continued)

| | Curvature radius R | Conic coefficient K | A4 | A6 | A8 | A10 | A12 | A14 |
|---|---|---|---|---|---|---|---|---|
| S2 | -145.88 | 0 | 6.11E-03 | -2.93E-03 | 1.24E-03 | -4.56E-04 | 1.34E-04 | -2.91E-05 |
| S3 | 9.71 | 0 | 1.29E-02 | -1.05E-02 | 5.74E-03 | -3.00E-03 | 1.30E-03 | -4.15E-04 |
| S4 | 4.38 | 0 | 1.38E-02 | -1.43E-02 | 8.49E-03 | -5.22E-03 | 2.68E-03 | -9.90E-04 |
| S5 | 8.10 | 0 | 5.25E-03 | -4.36E-03 | 2.95E-03 | -2.18E-03 | 1.17E-03 | -4.17E-04 |
| S6 | -7.85 | 0 | 6.11E-04 | -4.42E-04 | 7.65E-04 | -8.25E-04 | 5.37E-04 | -2.18E-04 |
| S7 | -10.45 | 0 | 6.89E-03 | 2.90E-03 | -3.50E-03 | 4.06E-03 | -3.86E-03 | 2.83E-03 |
| S8 | 5.19 | 0 | -9.59E-03 | 5.31E-04 | 5.63E-03 | -6.02E-03 | 4.16E-03 | -1.93E-03 |
| S9 | 3.97 | 0 | -2.06E-02 | -1.57E-03 | 1.45E-03 | -3.30E-04 | 3.30E-05 | -1.10E-06 |
| S10 | 5.52 | 0 | 7.18E-03 | -1.17E-02 | 2.77E-03 | 1.96E-04 | -1.83E-04 | 3.16E-05 |
| S11 | -40.76 | 0 | 2.18E-02 | -1.12E-02 | 3.99E-03 | -3.09E-03 | 2.83E-03 | -1.63E-03 |
| S12 | -24.51 | 0 | 1.07E-02 | -1.52E-02 | 1.89E-02 | -1.69E-02 | 1.04E-02 | -4.55E-03 |
| | A16 | A18 | A20 | A22 | A24 | A26 | A28 | A30 |
| S1 | 7.61E-07 | -8.78E-08 | 7.23E-09 | -4.14E-10 | 1.57E-11 | -3.53E-13 | 3.59E-15 | 0.00E+00 |
| S2 | 4.50E-06 | -4.82E-07 | 3.50E-08 | -1.63E-09 | 4.41E-11 | -5.26E-13 | 0.00E+00 | 0.00E+00 |
| S3 | 9.55E-05 | -1.58E-05 | 1.88E-06 | -1.59E-07 | 9.41E-09 | -3.69E-10 | 8.63E-12 | -9.12E-14 |
| S4 | 2.57E-04 | -4.72E-05 | 6.17E-06 | -5.70E-07 | 3.66E-08 | -1.55E-09 | 3.94E-11 | -4.53E-13 |
| S5 | 9.80E-05 | -1.54E-05 | 1.57E-06 | -9.76E-08 | 2.70E-09 | 5.56E-11 | -6.13E-12 | 1.28E-13 |
| S6 | 5.79E-05 | -1.01E-05 | 1.11E-06 | -6.79E-08 | 7.70E-10 | 1.94E-10 | -1.30E-11 | 2.75E-13 |
| S7 | -1.56E-03 | 6.23E-04 | -1.79E-04 | 3.65E-05 | -5.11E-06 | 4.69E-07 | -2.53E-08 | 6.07E-10 |
| S8 | 5.69E-04 | -9.74E-05 | 6.35E-06 | 7.27E-07 | -1.59E-07 | 8.41E-09 | 0.00E+00 | 0.00E+00 |
| S9 | 0.00E+00 | 0.00E+00 | 0.00E+00 | 0.00E+00 | 0.00E+00 | 0.00E+00 | 0.00E+00 | 0.00E+00 |
| S10 | -2.39E-06 | 6.90E-08 | 0.00E+00 | 0.00E+00 | 0.00E+00 | 0.00E+00 | 0.00E+00 | 0.00E+00 |
| S11 | 6.22E-04 | -1.67E-04 | 3.19E-05 | -4.34E-06 | 4.09E-07 | -2.54E-08 | 9.33E-10 | -1.53E-11 |
| S12 | 2.82E-03 | -7.26E-04 | 1.37E-04 | -1.85E-05 | 1.76E-06 | -1.11E-07 | 4.17E-09 | -7.04E-11 |

It can be learned from Table 7.2 that all lens elements in the lens assembly 10 are aspherical lens elements, that is, the lens assembly 10 includes 12 aspherical surfaces. An aspherical surface profile Z of each lens element in the lens assembly 10 may be calculated according to the following aspherical surface formula:

$$Z = \frac{cr^2}{1+\sqrt{1-(1+k)c^2r^2}} + \sum_{i=1}^{n} A_I E_I(x, y)$$

The parameter c=1/R, R represents a curvature radius, r represents a distance from a point on an optical surface to the optical axis, Z represents an aspherical sagittal height of the point along the optical axis, k represents a quadratic coefficient of the surface, and i represents an aspherical coefficient term, where i is 30 in this embodiment. Ai represents an aspherical coefficient.

Table 7.3 shows focal lengths of the lens elements and the lens element units in the lens assembly according to Embodiment 7 of this application.

| f1/mm | f2/mm | f3/mm | f4/mm | f5/mm | f6/mm |
|---|---|---|---|---|---|
| 13.11 | -12.85 | 7.67 | -6.32 | 16.25 | 100.00 |

Herein, f1, f2, f3, f4, f5 and f6 are respectively focal lengths of the first lens element 11, the second lens element 12, the third lens element 13, the fourth lens element 14, the fifth lens element 15, and the sixth lens element 16.

The lens assembly 10 uses the foregoing architecture in which there are two lens element units. Focal powers of the two lens element units and the focal power of the first lens element are properly allocated, and a quantity of lens elements, and a focal length, a thickness, a refractive index, an Abbe number, and the like of each lens element are combined, so that features such as a wide aperture, a small size, low costs, and high resolution of the lens assembly 10 can be implemented. For optical parameters of the lens assembly 10 including the foregoing lens elements, refer to Table 7.4.

Table 7.4 shows optical parameters of the lens assembly according to Embodiment 7 of this application.

|  | F# | EFL/mm | Mag | IMH/mm | TTL/mm | G1/mm | G2/mm |
|---|---|---|---|---|---|---|---|
| Infinity state | 1.98 | 15.1 | - | 3.6 | 17.83 | 8.78 | -10.42 |
| Macro state | 2.02 | 10.1 | 0.3x | | | | |

It can be learned from Table 7.4 that the lens assembly 10 provided in Embodiment 7 of this application has features of a wide aperture and a small total track length, can implement a long-focus telephoto function to ensure high-quality imaging in a scene like a distant image-shooting scene, and can also implement a macro function with a high magnification rate and high resolution to ensure high-definition imaging in a scene like a close-up image-shooting scene.

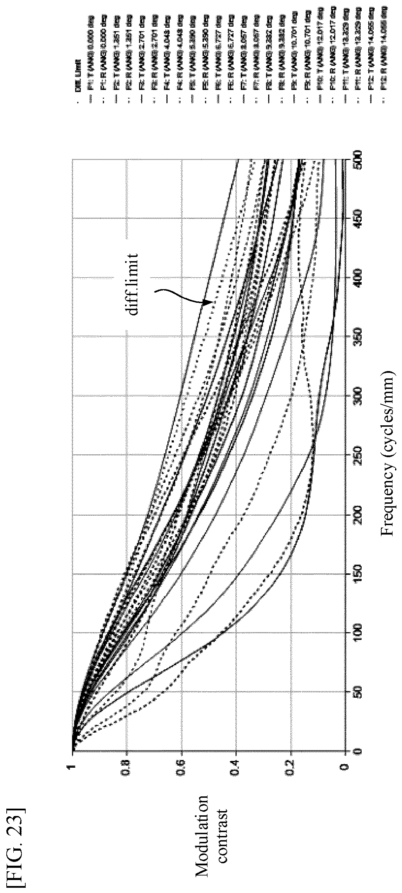

FIG. 23 is a curve diagram of a modulation transfer function for the lens assembly in the infinity state according to Embodiment 7 of this application.

In FIG. 23, horizontal coordinates represent different frequencies, vertical coordinates represent modulation contrasts, solid lines in the figure represent sagittal fields, and dashed lines in the figure represent tangential fields. In the figure, diff.limit represents a modulation transfer function of an imaging system for an infinitesimal object point. A curve closer to the diff.limit curve indicates better imaging quality. It can be learned from FIG. 23 that the lens assembly provided in this embodiment can implement high-quality imaging.

Embodiment 8

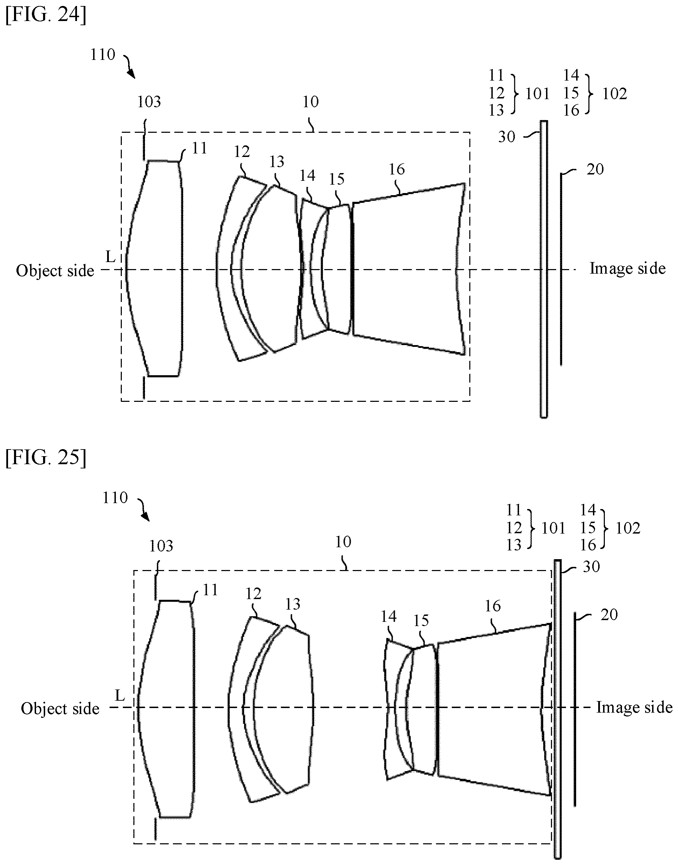

FIG. 24 is a diagram of a simulated structure of the camera module in which the lens assembly is in the infinity state according to Embodiment 8 of this application.

In this embodiment of this application, as shown in FIG. 24, the lens assembly 10 includes six lens elements with focal powers, and the first lens element unit 101 may include three lens elements with focal powers, for example, the first lens element 11, the second lens element 12, and the third lens element 13. The second lens element unit 102 may include three lens elements with focal powers, for example, the fourth lens element 14, the fifth lens element 15, and the sixth lens element 16. The first lens element 11, the second lens element 12, the third lens element 13, the fourth lens element 14, the fifth lens element 15, and the sixth lens element 16 are sequentially arranged along the optical axis L from the object side to the image side.

To be specific, in the camera module 110, the stop 103, the first lens element 11, the second lens element 12, the third lens element 13, the fourth lens element 14, the fifth lens element 15, the sixth lens element 16, the light filter 30, and the image sensor 20 are sequentially arranged along the optical axis L from the object side to the image side. Light entering the camera module 110 sequentially passes through the lens assembly 10 and the light filter 30 in the foregoing sequence and is irradiated onto the image sensor 20, and is finally imaged on the photosensitive surface of the image sensor 20.

The first lens element unit 101 has a positive focal power, and the second lens element unit 102 has a negative focal power.

Specifically, the first lens element 11 may have a positive focal power, at least a part that is of an object side surface of the first lens element 11 and that corresponds to the optical axis may be a convex surface, and at least a part that is of an image side surface of the first lens element 11 and that corresponds to the optical axis may be a convex surface.

The second lens element 12 may have a negative focal power. At least a part that is of an object side surface of the second lens element 12 and that corresponds to the optical axis may be a convex surface, and at least a part that is of an image side surface of the second lens element 12 and that corresponds to the optical axis may be a convex surface.

The third lens element 13 may have a positive focal power. At least a part that is of an object side surface of the third lens element 13 and that corresponds to the optical axis may be a convex surface, and at least a part that is of an image side surface of the third lens element 13 and that corresponds to the optical axis may be a concave surface.

The fourth lens element 14 may have a negative focal power. At least a part that is of an object side surface of the fourth lens element 14 and that corresponds to the optical axis may be a concave surface, and at least a part that is of an image side surface of the fourth lens element 14 and that corresponds to the optical axis may be a convex surface.

The fifth lens element 15 may have a positive focal power. At least a part that is of an object side surface of the fifth lens element 15 and that corresponds to an optical axis may be a convex surface, and at least a part that is of an image side surface of the fifth lens element 15 and that corresponds to the optical axis may be a convex surface.

The sixth lens element 16 may have a negative focal power. At least a part that is of an object side surface of the sixth lens element 16 and that corresponds to the optical axis may be a convex surface, and at least a part that is of an image side surface of the sixth lens element 16 and that corresponds to the optical axis may be a convex surface.

When the lens assembly 10 is in the infinity state, as shown in FIG. 24, the second lens element unit 102 is closer to the first lens element unit 101, and is farther away from the light filter 30 and the image sensor 20. When the lens assembly 10 switches from the infinity state to the macro state, the second lens element unit 102 moves toward the image side along the optical axis L.

FIG. 25 is a diagram of a simulated structure of the camera module in which the lens assembly is in the macro state according to Embodiment 8 of this application.

As shown in FIG. 25, when the lens assembly 10 is in the macro state, the second lens element 12 is closer to the light filter 30 and the image sensor 20, and is farther away from the first lens element unit 101.

A curvature radius R11 of the object side surface of the first lens element 11 is equal to 7.97, a curvature radius R12 of the image side surface of the first lens element 11 is equal to 257.72, and a focal length f1 of the first lens element 11 is equal to 15.03. The first lens element 11 satisfies |(R11+R12)/f1|=17.68.

A focal length EFL1 of the lens assembly 10 in the infinity state is equal to 15.3, and a ratio f1/EFL1 of a focal length f1 of the first lens element 11 to the focal length EFL1 of the lens assembly 10 in the infinity state is equal to 0.98.

A refractive index Nd1 of the first lens element 11 is equal to 1.544.

A f numberF#1 of the lens assembly 10 in the infinity state is equal to 1.77. A f-number F#2 of the lens assembly 10 in the macro state is equal to 1.82.

A magnification rate Mag of the lens assembly 10 in the macro state is equal to 0.3x.

A focal length G1 of the first lens element unit 101 is equal to 8.64, and a ratio |G1/EFL1| of the focal length G1 of the first lens element unit 101 to the focal length EFL1 of the lens assembly 10 in the infinity state is equal to 0.57.

A focal length G2 of the second lens element unit 102 is equal to -8.66, and a ratio |G2/EFL1| of the focal length G2 of the second lens element unit 102 to the focal length EFL1 of the lens assembly 10 in the infinity state is equal to 0.57.

A focal length EFL2 of the lens assembly 10 in the macro state is equal to 9.47, a total track length TTL of the lens assembly 10 is equal to 17.9, and a ratio |EFL2/TTL| of the focal length EFL2 of the lens assembly 10 in the macro state to the total track length TTL of the lens assembly 10 is equal to 0.53.

A ratio EFL1/EFL2 of the focal length EFL1 of the lens assembly 10 in the infinity state to the focal length EFL2 of the lens assembly 10 in the macro state is equal to 1.62.

The following describes an example of optical parameters of each lens element in this embodiment.

Table 8.1 shows optical parameters of the lens elements in the camera module according to Embodiment 8 of this application.

| Lens element | Surface number | Surface profile | Curvature radius | Thickness | Material | Y semi-aperture |
|---|---|---|---|---|---|---|
| | Stop | - | - | -0.71 | - | 4.30 |
| L1 | S1 | Aspherical | 7.97 | 2.30 | 544.560 | 4.30 |
| | S2 | Aspherical | 257.72 | 1.38 | | 4.29 |
| L2 | S3 | Aspherical | 4.81 | 0.62 | 677.192 | 3.70 |
| | S4 | Aspherical | 2.92 | 0.43 | | 3.33 |
| L3 | S5 | Aspherical | 4.98 | 2.45 | 544.560 | 3.32 |
| | S6 | Aspherical | -12.11 | 0.10 | | 2.94 |
| L4 | S7 | Aspherical | -5.71 | 0.32 | 544.560 | 2.79 |
| | S8 | Aspherical | 6.34 | 0.45 | | 2.39 |
| L5 | S9 | Aspherical | 4.06 | 1.21 | 594.293 | 2.40 |
| | S10 | Aspherical | 10.81 | 0.08 | | 2.60 |
| L6 | S11 | Aspherical | 22.81 | 4.27 | 544.560 | 2.63 |
| | S12 | Aspherical | 11.74 | 3.51 | | 3.42 |
| IR | S13 | Spherical | - | 0.21 | 518.642 | 5.90 |
| | S14 | Spherical | - | 0.57 | | 5.90 |

(continued)

| Lens element | Surface number | Surface profile | Curvature radius | Thickness | Material | Y semi-aperture |
|---|---|---|---|---|---|---|
| | Image plane | Spherical | - | - | - | 3.86 |

L1 is the first lens element 11, L2 is the second lens element 12, L3 is the third lens element 13, L4 is the fourth lens element 14, L5 is the fifth lens element 15, L6 is the sixth lens element 16, and IR is the light filter 30.

For specific illustration of S0 to S14, refer to Embodiment 1. Details are not described in this embodiment again.

For meanings of parameters such as the curvature radius, the thickness, the material, and the Y semi-aperture, also refer to Embodiment 1. Details are not described again in this embodiment.

Table 8.2 shows aspherical coefficients of the lens elements in the lens assembly according to Embodiment 8 of this application.

| | Curvature radius R | Conic coefficient K | A4 | A6 | A8 | A10 | A12 | A14 |
|---|---|---|---|---|---|---|---|---|
| S1 | 7.97 | 0 | -5.75E-04 | 4.99E-05 | -3.70E-05 | 1.44E-05 | -3.94E-06 | 7.3 5E-07 |
| S2 | 257.72 | 0 | -6.05E-04 | 1.25E-04 | -2.38E-05 | -4.00E-07 | 9.00E-07 | -1.77E-07 |
| S3 | 4.81 | 0 | -9.32E-03 | 3.41E-05 | 7.89E-04 | -4.55E-04 | 1.53E-04 | -3.54E-05 |
| S4 | 2.92 | -1 | -1.02E-02 | -1.13E-03 | 2.23E-03 | -1.31E-03 | 5.09E-04 | -1.48E-04 |
| S5 | 4.98 | 0 | -9.81E-04 | -1.70E-03 | 1.44E-03 | -7.61E-04 | 3.17E-04 | -1.10E-04 |
| S6 | -12.11 | 0 | 7.88E-04 | 6.41E-04 | -8.30E-04 | 6.60E-04 | -2.96E-04 | 7.18E-05 |
| S7 | -5.71 | 0 | 6.65E-03 | 2.54E-02 | -2.68E-02 | 1.86E-02 | -9.59E-03 | 3.70E-03 |
| S8 | 6.34 | 0 | -2.92E-02 | 3.90E-02 | -2.84E-02 | 1.64E-02 | -7.34E-03 | 2.44E-03 |
| S9 | 4.06 | 0 | -3.54E-02 | 8.59E-03 | -1.36E-03 | 7.13E-05 | 6.57E-06 | -7.41E-07 |
| S10 | 10.81 | 0 | 3.63E-03 | -2.64E-02 | 1.83E-02 | -7.12E-03 | 1.66E-03 | -2.29E-04 |
| S11 | 22.81 | 0 | 1.01E-02 | -2.28E-02 | 1.08E-02 | 1.14E-03 | -4.67E-03 | 3.30E-03 |
| S12 | 11.74 | 0 | -9.87E-04 | -2.87E-04 | 3.50E-04 | -3.05E-04 | 1.72E-04 | -6.62E-05 |
| | A16 | A18 | A20 | A22 | A24 | A26 | A28 | A30 |
| S1 | -9.50E-08 | 8.59E-09 | -5.42E-10 | 2.34E-11 | -6.61E-13 | 1.10E-14 | -8.13E-17 | 0.00E+0 0 |
| S2 | 1.86E-08 | -1.23E-09 | 5.16E-11 | -1.34E-12 | 1.93E-14 | -1.15E-16 | 0.00E+0 0 | 0.00E+0 0 |
| S3 | 5.99E-06 | -7.66E-07 | 7.45E-08 | -5.43E-09 | 2.86E-10 | -1.02E-11 | 2.21E-13 | -2.18E-15 |
| S4 | 3.44E-05 | -6.28E-06 | 8.77E-07 | -8.97E-08 | 6.44E-09 | -3.05E-10 | 8.51E-12 | -1.06E-13 |
| S5 | 3.02E-05 | -6.27E-06 | 9.49E-07 | -1.02E-07 | 7.52E-09 | -3.63E-10 | 1.03E-11 | -1.30E-13 |
| S6 | -4.22E-06 | -3.02E-06 | 1.11E-06 | -1.97E-07 | 2.13E-08 | -1.42E-09 | 5.39E-11 | -8.95E-13 |
| S7 | -1.07E-03 | 2.35E-04 | -3.87E-05 | 4.71E-06 | -4.12E-07 | 2.45E-08 | -8.86E-10 | 1.47E-11 |
| S8 | -5.90E-04 | 1.03E-04 | -1.26E-05 | 1.05E-06 | -5.73E-08 | 1.91E-09 | -3.14E-11 | 0.00E+0 0 |
| S9 | 0.00E+00 | 0.00E+00 | 0.00E+0 0 | 0.00E+00 | 0.00E+00 | 0.00E+0 0 | 0.00E+0 0 | 0.00E+0 0 |
| S10 | 1.71E-05 | -5.37E-07 | 0.00E+0 0 | 0.00E+00 | 0.00E+00 | 0.00E+0 0 | 0.00E+0 0 | 0.00E+0 0 |
| S11 | -1.42E-03 | 4.31E-04 | -9.44E-05 | 1.48E-05 | -1.63E-06 | 1.18E-07 | -5.08E-09 | 9.85E-11 |
| S12 | 1.79E-05 | -3.49E-06 | 4.92E-07 | -4.98E-08 | 3.54E-09 | -1.67E-10 | 4.72E-12 | -6.01E-14 |

It can be learned from Table 8.2 that all lens elements in the lens assembly 10 are aspherical lens elements, that is, the lens assembly 10 includes 12 aspherical surfaces. An aspherical surface profile Z of each lens element in the lens assembly 10 may be calculated according to the following aspherical surface formula:

$$Z = \frac{cr^2}{1+\sqrt{1-(1+k)c^2r^2}} + \sum_{i=1}^{n} A_I E_I(x, y)$$

The parameter c=1/R, R represents a curvature radius, r represents a distance from a point on an optical surface to the optical axis, Z represents an aspherical sagittal height of the point along the optical axis, k represents a quadratic coefficient of the surface, and i represents an aspherical coefficient term, where i is 30 in this embodiment. Ai represents an aspherical coefficient.

Table 8.3 shows focal lengths of the lens elements and lens element units in the lens assembly according to Embodiment 8 of this application.

| f1/mm | f2/mm | f3/mm | f4/mm | f5/mm | f6/mm |
|---|---|---|---|---|---|
| 15.03 | -12.54 | 6.81 | -5.45 | 10.19 | -51.31 |

Herein, f1, f2, f3, f4, f5 and f6 are respectively focal lengths of the first lens element 11, the second lens element 12, the third lens element 13, the fourth lens element 14, the fifth lens element 15, and the sixth lens element 16.

The lens assembly 10 uses the foregoing architecture in which there are two lens element units. Focal powers of the two lens element units and the focal power of the first lens element are properly allocated, and a quantity of lens elements, and a focal length, a thickness, a refractive index, an Abbe number, and the like of each lens element are combined, so that features such as a wide aperture, a small size, low costs, and high resolution of the lens assembly 10 can be implemented. For optical parameters of the lens assembly 10 including the foregoing lens elements, refer to Table 8.4.

Table 8.4 shows optical parameters of the lens assembly according to Embodiment 8 of this application.

| | F# | EFL/mm | Mag | IMH/mm | TTL/mm | G1/mm | G2/mm |
|---|---|---|---|---|---|---|---|
| Infinity state | 1.77 | 15.3 | - | 3.85 | 17.9 | 8.64 | -8.66 |
| Macro state | 1.82 | 9.47 | 0.3x | | | | |

It can be learned from Table 8.4 that the lens assembly 10 provided in Embodiment 8 of this application has features of a wide aperture and a small total track length, can implement a long-focus telephoto function to ensure high-quality imaging in a scene like a distant image-shooting scene, and can also implement a macro function with a high magnification rate and high resolution to ensure high-definition imaging in a scene like a close-up image-shooting scene.

Embodiment 9

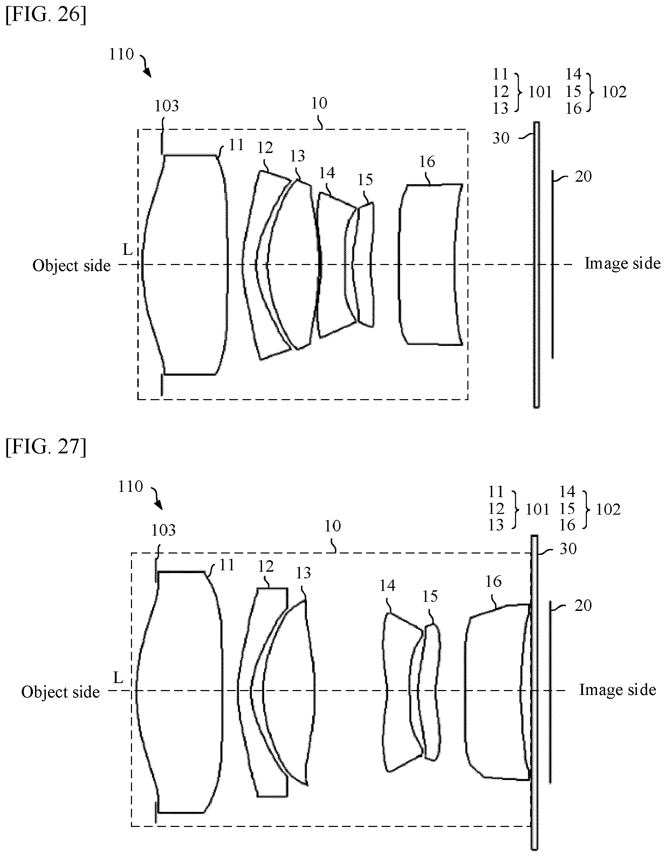

FIG. 26 is a diagram of a simulated structure of the camera module in which the lens assembly is in the infinity state according to Embodiment 9 of this application.

In this embodiment of this application, as shown in FIG. 26, the lens assembly 10 includes six lens elements with focal powers, and the first lens element unit 101 may include three lens elements with focal powers, for example, the first lens element 11, the second lens element 12, and the third lens element 13. The second lens element unit 102 may include three lens elements with focal powers, for example, the fourth lens element 14, the fifth lens element 15, and the sixth lens element 16. The first lens element 11, the second lens element 12, the third lens element 13, the fourth lens element 14, the fifth lens element 15, and the sixth lens element 16 are sequentially arranged along the optical axis L from the object side to the image side.

To be specific, in the camera module 110, the stop 103, the first lens element 11, the second lens element 12, the third lens element 13, the fourth lens element 14, the fifth lens element 15, the sixth lens element 16, the light filter 30, and the image sensor 20 are sequentially arranged along the optical axis L from the object side to the image side. Light entering the camera module 110 sequentially passes through the lens assembly 10 and the light filter 30 in the foregoing sequence and is irradiated onto the image sensor 20, and is finally imaged on the photosensitive surface of the image sensor 20.

The first lens element unit 101 has a positive focal power, and the second lens element unit 102 has a negative focal power.

Specifically, the first lens element 11 may have a positive focal power. At least a part that is of an object side surface of the first lens element 11 and that corresponds to the optical axis may be a convex surface, and at least a part that is of an image side surface of the first lens element 11 and that corresponds to the optical axis may be a concave surface.

The second lens element 12 may have a negative focal power. At least a part that is of an object side surface of the second lens element 12 and that corresponds to the optical axis may be a convex surface, and at least a part that is of an image side surface of the second lens element 12 and that corresponds to the optical axis may be a convex surface.

The third lens element 13 may have a positive focal power. At least a part that is of an object side surface of the third lens element 13 and that corresponds to the optical axis may be a convex surface, and at least a part that is of an image side surface of the third lens element 13 and that corresponds to the optical axis may be a concave surface.

The fourth lens element 14 may have a negative focal power. At least a part that is of an object side surface of the fourth lens element 14 and that corresponds to the optical axis may be a concave surface, and at least a part that is of an image side surface of the fourth lens element 14 and that corresponds to the optical axis may be a concave surface.

The fifth lens element 15 may have a positive focal power. At least a part that is of an object side surface of the fifth lens element 15 and that corresponds to an optical axis may be a convex surface, and at least a part that is of an image side surface of the fifth lens element 15 and that corresponds to the optical axis may be a convex surface.

The sixth lens element 16 may have a negative focal power. At least a part that is of an object side surface of the sixth lens element 16 and that corresponds to the optical axis may be a convex surface, and at least a part that is of an image side surface of the sixth lens element 16 and that corresponds to the optical axis may be a convex surface.

When the lens assembly 10 is in the infinity state, as shown in FIG. 26, the second lens element unit 102 is closer to the first lens element unit 101, and is farther away from the light filter 30 and the image sensor 20. When the lens assembly 10 switches from the infinity state to the macro state, the second lens element unit 102 moves toward the image side along the optical axis L.

FIG. 27 is a diagram of a simulated structure of a camera module in which a lens assembly is in a macro state according to Embodiment 9 of this application.

As shown in FIG. 27, when the lens assembly 10 is in the macro state, the second lens element 12 is closer to the light filter 30 and the image sensor 20, and is farther away from the first lens element unit 101.

A curvature radius R11 of the object side surface of the first lens element 11 is equal to 7.69, a curvature radius R12 of the image side surface of the first lens element 11 is equal to -123.61, and a focal length f1 of the first lens element 11 is equal to 13.40. The first lens element 11 satisfies |(R11+R12)/f1|=8.65.

A focal length EFL1 of the lens assembly 10 in the infinity state is equal to 15.3, and a ratio f1/EFL1 of a focal length f1 of the first lens element 11 to the focal length EFL1 of the lens assembly 10 in the infinity state is equal to 0.88.

A refractive index Nd1 of the first lens element 11 is equal to 1.544.

A f-number F#1 of the lens assembly 10 in the infinity state is equal to 1.69. A f-number F#2 of the lens assembly 10 in the macro state is equal to 1.72.

A magnification rate Mag of the lens assembly 10 in the macro state is equal to 0.3x.

A focal length G1 of the first lens element unit 101 is equal to 8.64, and a ratio |G1/EFL1| of the focal length G1 of the first lens element unit 101 to the focal length EFL1 of the lens assembly 10 in the infinity state is equal to 0.57.

A focal length G2 of the second lens element unit 102 is equal to -8.79, and a ratio |G2/EFL1| of the focal length G2 of the second lens element unit 102 to the focal length EFL1 of the lens assembly 10 in the infinity state is equal to 0.58.

A focal length EFL2 of the lens assembly 10 in the macro state is equal to 9.55, a total track length TTL of the lens assembly 10 is equal to 17.7, and a ratio |EFL2/TTL| of the focal length EFL2 of the lens assembly 10 in the macro state to the total track length TTL of the lens assembly 10 is equal to 0.54.

A ratio EFL1/EFL2 of the focal length EFL1 of the lens assembly 10 in the infinity state to the focal length EFL2 of the lens assembly 10 in the macro state is equal to 1.60.

The following describes an example of optical parameters of each lens element in this embodiment.

Table 9.1 shows optical parameters of the lens elements in the camera module according to Embodiment 9 of this application.

| Lens element | Surface number | Surface profile | Curvature radius | Thickness | Material | Y semi-aperture |
|---|---|---|---|---|---|---|
| | Stop | - | - | -0.83 | - | 4.53 |
| L1 | S1 | Aspherical | 7.69 | 3.66 | 544.560 | 4.53 |
| | S2 | Aspherical | -123.61 | 0.67 | | 4.54 |
| L2 | S3 | Aspherical | 4.58 | 0.58 | 659.210 | 3.94 |
| | S4 | Aspherical | 2.56 | 0.50 | | 3.49 |
| L3 | S5 | Aspherical | 4.75 | 2.22 | 544.560 | 3.51 |
| | S6 | Aspherical | -10.37 | 0.10 | | 3.27 |
| L4 | S7 | Aspherical | -4.32 | 0.98 | 544.560 | 3.02 |
| | S8 | Aspherical | -39.85 | 0.35 | | 2.34 |

(continued)

| Lens element | Surface number | Surface profile | Curvature radius | Thickness | Material | Y semi-aperture |
|---|---|---|---|---|---|---|
| L5 | S9 | Aspherical | 4.15 | 0.77 | 677.192 | 2.38 |
| | S10 | Aspherical | 4.74 | 1.25 | | 2.59 |
| L6 | S11 | Aspherical | 39.96 | 2.39 | 536.560 | 3.27 |
| | S12 | Aspherical | 15.26 | 3.44 | | 3.33 |
| IR | S13 | Spherical | - | 0.21 | 518.642 | 5.90 |
| | S14 | Spherical | - | 0.57 | | 5.90 |
| | Image plane | Spherical | - | - | - | 3.92 |

L1 is the first lens element 11, L2 is the second lens element 12, L3 is the third lens element 13, L4 is the fourth lens element 14, L5 is the fifth lens element 15, L6 is the sixth lens element 16, and IR is the light filter 30.

For specific illustration of S0 to S14, refer to Embodiment 1. Details are not described in this embodiment again.

For meanings of parameters such as the curvature radius, the thickness, the material, and the Y semi-aperture, also refer to Embodiment 1. Details are not described again in this embodiment.

Table 9.2 shows aspherical coefficients of the lens elements in the lens assembly according to Embodiment 9 of this application.

| | Curvature radius R | Conic coefficient K | A4 | A6 | A8 | A10 | A12 | A14 |
|---|---|---|---|---|---|---|---|---|
| S1 | 7.69 | 0 | -4.05E-04 | 9.78E-06 | -1.59E-05 | 5.62E-06 | -1.40E-06 | 2.37E-07 |
| S2 | -123.61 | 0 | -9.18E-04 | 9.36E-04 | -3.46E-04 | 7.08E-05 | -9.80E-06 | 9.61E-07 |
| S3 | 4.58 | 0 | -2.03E-02 | 5.74E-03 | -1.02E-03 | -1.06E-04 | 1.10E-04 | -3.17E-05 |
| S4 | 2.56 | -1 | -2.71E-02 | 8.66E-03 | -1.61E-03 | -1.05E-04 | 1.23E-04 | -2.55E-05 |
| S5 | 4.75 | 0 | -6.08E-03 | 1.16E-03 | -2.37E-05 | 2.24E-05 | -8.11E-05 | 4.61E-05 |
| S6 | -10.37 | 0 | 4.81E-04 | 1.23E-04 | -1.01E-04 | 8.19E-05 | -3.87E-05 | 1.09E-05 |
| S7 | -4.32 | 0 | 3.76E-02 | -8.02E-03 | 1.02E-03 | 5.73E-04 | -5.45E-04 | 2.52E-04 |
| S8 | -39.85 | 0 | 3.28E-02 | -3.11E-03 | -2.24E-03 | 3.09E-03 | -2.36E-03 | 1.27E-03 |
| S9 | 4.15 | 0 | -1.98E-02 | 2.28E-03 | -4.91E-04 | 7.49E-05 | -6.18E-06 | 2.29E-07 |
| S10 | 4.74 | 0 | -2.72E-02 | 4.46E-03 | -8.77E-04 | 8.35E-05 | 1.71E-05 | -6.56E-06 |
| S11 | 39.96 | 0 | -4.55E-03 | 1.63E-03 | -1.46E-03 | 1.20E-03 | -6.66E-04 | 2.60E-04 |
| S12 | 15.26 | 0 | -1.45E-03 | -1.74E-03 | 2.37E-03 | -1.88E-03 | 9.99E-04 | -3.68E-04 |
| | A16 | A18 | A20 | A22 | A24 | A26 | A28 | A30 |
| S1 | -2.78E-08 | 2.28E-09 | -1.31E-10 | 5.12E-12 | -1.31E-13 | 1.96E-15 | -1.30E-17 | 0.00E+0 0 |
| S2 | -6.76E-08 | 3.39E-09 | -1.18E-10 | 2.73E-12 | -3.74E-14 | 2.31E-16 | 0.00E+0 0 | 0.00E+0 0 |
| S3 | 5.53E-06 | -6.63E-07 | 5.68E-08 | -3.48E-09 | 1.50E-10 | -4.32E-12 | 7.47E-14 | -5.87E-16 |
| S4 | 1.36E-06 | 4.02E-07 | -1.03E-07 | 1.19E-08 | -8.14E-10 | 3.38E-11 | -7.86E-13 | 7.78E-15 |
| S5 | -1.37E-05 | 2.58E-06 | -3.29E-07 | 2.90E-08 | -1.73E-09 | 6.76E-11 | -1.54E-12 | 1.57E-14 |
| S6 | -1.71E-06 | 7.14E-08 | 2.72E-08 | -6.38E-09 | 6.89E-10 | -4.24E-11 | 1.43E-12 | -2.08E-14 |
| S7 | -7.84E-05 | 1.74E-05 | -2.81E-06 | 3.26E-07 | -2.66E-08 | 1.45E-09 | -4.69E-11 | 6.86E-13 |
| S8 | -4.95E-04 | 1.40E-04 | -2.85E-05 | 4.03E-06 | -3.77E-07 | 2.09E-08 | -5.21E-10 | 0.00E+0 0 |
| S9 | 0.00E+00 | 0.00E+00 | 0.00E+0 0 | 0.00E+00 | 0.00E+00 | 0.00E+0 0 | 0.00E+0 0 | 0.00E+0 0 |
| S10 | 8.26E-07 | -3.91E-08 | 0.00E+0 0 | 0.00E+00 | 0.00E+00 | 0.00E+0 0 | 0.00E+0 0 | 0.00E+0 0 |

(continued)

| | Curvature radius R | Conic coefficient K | A4 | A6 | A8 | A10 | A12 | A14 |
|---|---|---|---|---|---|---|---|---|
| S11 | -7.27E-05 | 1.47E-05 | -2.16E-06 | 2.28E-07 | -1.67E-08 | 8.17E-10 | -2.38E-11 | 3.12E-13 |
| S12 | 9.61E-05 | -1.81E-05 | 2.44E-06 | -2.34E-07 | 1.55E-08 | -6.75E-10 | 1.73E-11 | -1.97E-13 |

It can be learned from Table 9.2 that all lens elements in the lens assembly 10 are aspherical lens elements, that is, the lens assembly 10 includes 12 aspherical surfaces. An aspherical surface profile Z of each lens element in the lens assembly 10 may be calculated according to the following aspherical surface formula:

$$Z = \frac{cr^2}{1+\sqrt{1-(1+k)c^2r^2}} + \sum_{i=1}^{n} A_I E_I(x, y)$$

The parameter c=1/R, R represents a curvature radius, r represents a distance from a point on an optical surface to the optical axis, Z represents an aspherical sagittal height of the point along the optical axis, k represents a quadratic coefficient of the surface, and i represents an aspherical coefficient term, where i is 30 in this embodiment. Ai represents an aspherical coefficient.

Table 9.3 shows focal lengths of the lens elements and the lens element units in the lens assembly according to Embodiment 9 of this application.

| f1/mm | f2/mm | f3/mm | f4/mm | f5/mm | f6/mm |
|---|---|---|---|---|---|
| 13.40 | -9.90 | 6.30 | -8.96 | 32.02 | -47.53 |

Herein, f1, f2, f3, f4, f5 and f6 are respectively focal lengths of the first lens element 11, the second lens element 12, the third lens element 13, the fourth lens element 14, the fifth lens element 15, and the sixth lens element 16.

The lens assembly 10 uses the foregoing architecture in which there are two lens element units. Focal powers of the two lens element units and the focal power of the first lens element are properly allocated, and a quantity of lens elements, and a focal length, a thickness, a refractive index, an Abbe number, and the like of each lens element are combined, so that features such as a wide aperture, a small size, low costs, and high resolution of the lens assembly 10 can be implemented. For optical parameters of the lens assembly 10 including the foregoing lens elements, refer to Table 9.4.

Table 9.4 shows optical parameters of the lens assembly according to Embodiment 9 of this application.

| | F# | EFL/mm | Mag | IMH/mm | TTL/mm | G1/mm | G2/mm |
|---|---|---|---|---|---|---|---|
| Infinity state | 1.69 | 15.3 | - | 3.82 | 17.7 | 8.64 | -8.79 |
| Macro state | 1.72 | 9.55 | 0.3x | | | | |

It can be learned from Table 9.4 that the lens assembly 10 provided in Embodiment 9 of this application has features of a wide aperture and a small total track length, can implement a long-focus telephoto function to ensure high-quality imaging in a scene like a distant image-shooting scene, and can also implement a macro function with a high magnification rate and high resolution to ensure high-definition imaging in a scene like a close-up image-shooting scene.

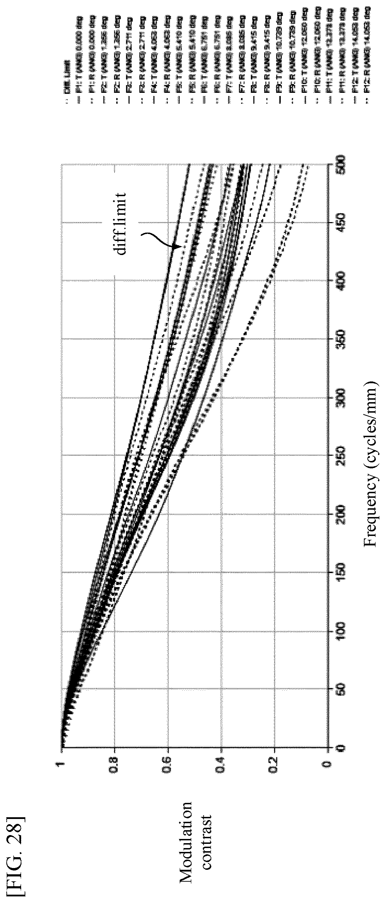

FIG. 28 is a curve diagram of a modulation transfer function for the lens assembly in the infinity state according to Embodiment 9 of this application.

In FIG. 28, horizontal coordinates represent different frequencies, vertical coordinates represent modulation contrasts, solid lines in the figure represent sagittal fields, and dashed lines in the figure represent tangential fields. In the figure, diff.limit represents a modulation transfer function of an imaging system for an infinitesimal object point. A curve closer to the diff.limit curve indicates better imaging quality. It can be learned from 28 that the lens assembly provided in this embodiment can implement high-quality imaging.

Embodiment 10

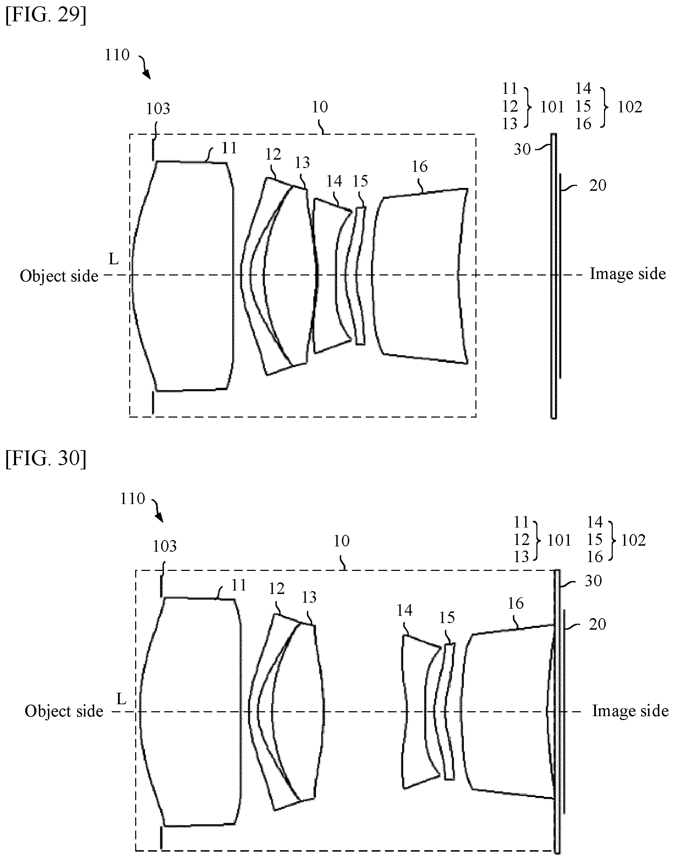

FIG. 29 is a diagram of a simulated structure of the camera module in which the lens assembly is in the infinity state according to Embodiment 10 of this application.

In this embodiment of this application, as shown in FIG. 29, the lens assembly 10 includes six lens elements with focal powers, and the first lens element unit 101 may include three lens elements with focal powers, for example, the first lens element 11, the second lens element 12, and the third lens element 13. The second lens element unit 102 may include three lens elements with focal powers, for example, the fourth lens element 14, the fifth lens element 15, and the sixth lens element 16. The first lens element 11, the second lens element 12, the third lens element 13, the fourth lens element 14, the fifth lens element 15, and the sixth lens element 16 are sequentially arranged along the optical axis L from the object side to the image side.

To be specific, in the camera module 110, the stop 103, the first lens element 11, the second lens element 12, the third lens element 13, the fourth lens element 14, the fifth lens element 15, the sixth lens element 16, the light filter 30, and the image sensor 20 are sequentially arranged along the optical axis L from the object side to the image side. Light entering the camera module 110 sequentially passes through the lens assembly 10 and the light filter 30 in the foregoing sequence and is irradiated onto the image sensor 20, and is finally imaged on the photosensitive surface of the image sensor 20.

The first lens element unit 101 has a positive focal power, and the second lens element unit 102 has a negative focal power.

Specifically, the first lens element 11 may have a positive focal power. At least a part that is of an object side surface of the first lens element 11 and that corresponds to the optical axis may be a convex surface, and at least a part that is of an image side surface of the first lens element 11 and that corresponds to the optical axis may be a concave surface.

The second lens element 12 may have a negative focal power. At least a part that is of an object side surface of the second lens element 12 and that corresponds to the optical axis may be a convex surface, and at least a part that is of an image side surface of the second lens element 12 and that corresponds to the optical axis may be a convex surface.

The third lens element 13 may have a positive focal power. At least a part that is of an object side surface of the third lens element 13 and that corresponds to the optical axis may be a convex surface, and at least a part that is of an image side surface of the third lens element 13 and that corresponds to the optical axis may be a concave surface.

The fourth lens element 14 may have a negative focal power. At least a part that is of an object side surface of the fourth lens element 14 and that corresponds to the optical axis may be a concave surface, and at least a part that is of an image side surface of the fourth lens element 14 and that corresponds to the optical axis may be a concave surface.

The fifth lens element 15 may have a positive focal power. At least a part that is of an object side surface of the fifth lens element 15 and that corresponds to an optical axis may be a convex surface, and at least a part that is of an image side surface of the fifth lens element 15 and that corresponds to the optical axis may be a convex surface.

The sixth lens element 16 may have a negative focal power. At least a part that is of an object side surface of the sixth lens element 16 and that corresponds to the optical axis may be a convex surface, and at least a part that is of an image side surface of the sixth lens element 16 and that corresponds to the optical axis may be a convex surface.

When the lens assembly 10 is in the infinity state, as shown in FIG. 29, the second lens element unit 102 is closer to the first lens element unit 101, and is farther away from the light filter 30 and the image sensor 20. When the lens assembly 10 switches from the infinity state to the macro state, the second lens element unit 102 moves toward the image side along the optical axis L.

FIG. 30 is a diagram of a simulated structure of a camera module in which a lens assembly is in a macro state according to Embodiment 10 of this application.

As shown in FIG. 30, when the lens assembly 10 is in the macro state, the second lens element 12 is closer to the light filter 30 and the image sensor 20, and is farther away from the first lens element unit 101.

A curvature radius R11 of the object side surface of the first lens element 11 is equal to 8.50, a curvature radius R12 of the image side surface of the first lens element 11 is equal to -51.71, and a focal length f1 of the first lens element 11 is equal to 12.29. The first lens element 11 satisfies |(R11+R12)/f1|=3.52.

A focal length EFL1 of the lens assembly 10 in the infinity state is equal to 15.1, and a ratio f1/EFL1 of a focal length f1 of the first lens element 11 to the focal length EFL1 of the lens assembly 10 in the infinity state is equal to 0.81.

A refractive index Nd1 of the first lens element 11 is equal to 1.544.

Af numberF#1 of the lens assembly 10 in the infinity state is equal to 1.58. Af-number F#2 of the lens assembly 10 in the macro state is equal to 1.54.

A magnification rate Mag of the lens assembly 10 in the macro state is equal to 0.295x.

A focal length G1 of the first lens element unit 101 is equal to 9.03, and a ratio |G1/EFL1| of the focal length G1 of the first lens element unit 101 to the focal length EFL1 of the lens assembly 10 in the infinity state is equal to 0.60.

A focal length G2 of the second lens element unit 102 is equal to -10.2, and a ratio |G2/EFL1| of the focal length G2 of the second lens element unit 102 to the focal length EFL1 of the lens assembly 10 in the infinity state is equal to 0.67.

A focal length EFL2 of the lens assembly 10 in the macro state is equal to 9.48, a total track length TTL of the lens assembly 10 is equal to 18.5, and a ratio |EFL2/TTL| of the focal length EFL2 of the lens assembly 10 in the macro state to the total track length TTL of the lens assembly 10 is equal to 0.51.

A ratio EFL1/EFL2 of the focal length EFL1 of the lens assembly 10 in the infinity state to the focal length EFL2 of the lens assembly 10 in the macro state is equal to 1.59.

The following describes an example of optical parameters of each lens element in this embodiment.

Table 10.1 shows optical parameters of the lens elements in the camera module according to Embodiment 10 of this application.

| Lens element | Surface number | Surface profile | Curvature radius | Thickness | Material | Y semi-aperture |
|---|---|---|---|---|---|---|
| | Stop | - | - | -0.93 | - | 4.78 |
| L1 | S1 | Aspherical | 8.50 | 4.37 | 544.560 | 4.78 |
| | S2 | Aspherical | -51.71 | 0.33 | | 4.70 |
| L2 | S3 | Aspherical | 3.47 | 0.40 | 677.192 | 4.13 |
| | S4 | Aspherical | 2.30 | 0.61 | | 3.74 |
| L3 | S5 | Aspherical | 6.42 | 2.22 | 544.560 | 3.74 |
| | S6 | Aspherical | -10.77 | 0.10 | | 3.61 |
| L4 | S7 | Aspherical | -3.58 | 0.79 | 544.560 | 3.23 |
| | S8 | Aspherical | -11.59 | 0.40 | | 2.66 |
| L5 | S9 | Aspherical | 3.38 | 0.47 | 677.192 | 2.77 |
| | S10 | Aspherical | 3.31 | 0.68 | | 2.87 |
| L6 | S11 | Aspherical | 11.73 | 3.72 | 564.382 | 3.25 |
| | S12 | Aspherical | 13.10 | 3.42 | | 3.65 |
| IR | S13 | Spherical | - | 0.21 | 518.642 | 5.90 |
| | S14 | Spherical | - | 0.77 | | 5.90 |
| | Image plane | Spherical | - | - | - | 4.27 |

L1 is the first lens element 11, L2 is the second lens element 12, L3 is the third lens element 13, L4 is the fourth lens element 14, L5 is the fifth lens element 15, L6 is the sixth lens element 16, and IR is the light filter 30.

For specific illustration of S0 to S14, refer to Embodiment 1. Details are not described in this embodiment again.

For meanings of parameters such as the curvature radius, the thickness, the material, and the Y semi-aperture, also refer to Embodiment 1. Details are not described again in this embodiment.

Table 10.2 shows aspherical coefficients of the lens elements in the lens assembly according to Embodiment 10 of this application.

| | Curvature radius R | Conic coefficient K | A4 | A6 | A8 | A10 | A12 | A14 |
|---|---|---|---|---|---|---|---|---|
| S1 | 8.50 | 0 | -2.76E-04 | 2.98E-05 | -2.16E-05 | 7.19E-06 | -1.57E-06 | 2.29E-07 |
| S2 | -51.71 | 0 | 1.74E-03 | 7.47E-04 | -.3.74E-04 | 8.57E-05 | -1.26E-05 | 1.27E-06 |
| S3 | 3.47 | -1 | -1.90E-02 | 4.91E-03 | -3.80E-04 | -3.26E-04 | 1.46E-04 | -3.18E-05 |
| S4 | 2.30 | -1 | -2.39E-02 | 5.63E-03 | 7.61E-05 | -6.81E-04 | 2.61E-04 | -5.39E-05 |
| S5 | 6.42 | 0 | -3.27E-05 | -1.48E-05 | 1.67E-04 | -1.24E-05 | -2.95E-05 | 1.22E-05 |
| S6 | -10.77 | 0 | 5.76E-04 | 1.83E-04 | -1.92E-04 | 1.46E-04 | -7.01E-05 | 2.23E-05 |
| S7 | -3.58 | 0 | 4.92E-02 | -1.35E-02 | 4.18E-03 | -1.33E-03 | 4.30E-04 | -1.31E-04 |
| S8 | -11.59 | 0 | 4.44E-02 | -1.06E-02 | 4.39E-03 | -2.86E-03 | 1.67E-03 | -7.17E-04 |
| S9 | 3.38 | 0 | -2.68E-02 | 4.28E-03 | -5.32E-04 | -6.04E-05 | 2.08E-05 | -1.34E-06 |
| S10 | 3.31 | 0 | -4.05E-02 | 1.08E-02 | -3.30E-03 | 6.61E-04 | -8.71E-05 | 7.94E-06 |
| S11 | 11.73 | 0 | -5.79E-03 | 2.63E-03 | -2.70E-03 | 2.20E-03 | -1.23E-03 | 4.75E-04 |

(continued)

| | Curvature radius R | Conic coefficient K | A4 | A6 | A8 | A10 | A12 | A14 |
|---|---|---|---|---|---|---|---|---|
| S12 | 13.10 | 0 | 2.28E-04 | -3.62E-03 | 4.05E-03 | -2.83E-03 | 1.33E-03 | -4.35E-04 |
| | A16 | A18 | A20 | A22 | A24 | A26 | A28 | A30 |
| S1 | -2.32E-08 | 1.65E-09 | -8.17E-11 | 2.78E-12 | -6.19E-14 | 8.09E-16 | -4.73E-18 | 0.00E+0 0 |
| S2 | -9.00E-08 | 4.45E-09 | -1.51E-10 | 3.36E-12 | -4.41E-14 | 2.59E-16 | 0.00E+0 0 | 0.00E+0 0 |
| S3 | 4.43E-06 | -4.23E-07 | 2.84E-08 | -1.33E-09 | 4.29E-11 | -8.95E-13 | 1.08E-14 | -5.67E-17 |
| S4 | 7.22E-06 | -6.69E-07 | 4.48E-08 | -2.28E-09 | 9.20E-11 | -2.92E-12 | 6.37E-14 | -6.78E-16 |
| S5 | -2.23E-06 | 2.07E-07 | -5.09E-09 | -9.61E-10 | 1.19E-10 | -6.31E-12 | 1.70E-13 | -1.91E-15 |
| S6 | -4.86E-06 | 7.49E-07 | -8.22E-08 | 6.40E-09 | -3.46E-10 | 1.24E-11 | -2.62E-13 | 2.50E-15 |
| S7 | 3.36E-05 | -6.68E-06 | 9.85E-07 | -1.05E-07 | 7.81E-09 | -3.84E-10 | 1.12E-11 | -1.47E-13 |
| S8 | 2.21E-04 | -4.89E-05 | 7.66E-06 | -8.30E-07 | 5.91E-08 | -2.49E-09 | 4.70E-11 | 0.00E+0 0 |
| S9 | 0.00E+00 | 0.00E+00 | 0.00E+0 0 | 0.00E+00 | 0.00E+00 | 0.00E+00 | 0.00E+0 0 | 0.00E+0 0 |
| S10 | -4.64E-07 | 1.21E-08 | 0.00E+0 0 | 0.00E+00 | 0.00E+00 | 0.00E+00 | 0.00E+0 0 | 0.00E+0 0 |
| S11 | -1.30E-04 | 2.57E-05 | -3.68E-06 | 3.78E-07 | -2.71E-08 | 1.29E-09 | -3.67E-11 | 4.68E-13 |
| S12 | 1.02E-04 | -1.72E-05 | 2.10E-06 | -1.83E-07 | 1.11E-08 | -4.46E-10 | 1.06E-11 | -1.13E-13 |

It can be learned from Table 10.2 that all lens elements in the lens assembly 10 are aspherical lens elements, that is, the lens assembly 10 includes 12 aspherical surfaces. An aspherical surface profile Z of each lens element in the lens assembly 10 may be calculated according to the following aspherical surface formula:

$$Z = \frac{cr^2}{1+\sqrt{1-(1+k)c^2r^2}} + \sum_{i=1}^{n} A_I E_I(x, y)$$

The parameter c=1/R, R represents a curvature radius, r represents a distance from a point on an optical surface to the optical axis, Z represents an aspherical sagittal height of the point along the optical axis, k represents a quadratic coefficient of the surface, and i represents an aspherical coefficient term, where i is 30 in this embodiment. Ai represents an aspherical coefficient.

Table 10.3 shows focal lengths of the lens elements and the lens element units in the lens assembly according to Embodiment 10 of this application.

| f1/mm | f2/mm | f3/mm | f4/mm | f5/mm | f6/mm |
|---|---|---|---|---|---|
| 12.29 | -11.66 | 7.72 | -9.82 | 133.22 | 100.00 |

Herein, f1, f2, f3, f4, f5 and f6 are respectively focal lengths of the first lens element 11, the second lens element 12, the third lens element 13, the fourth lens element 14, the fifth lens element 15, and the sixth lens element 16.

The lens assembly 10 uses the foregoing architecture in which there are two lens element units. Focal powers of the two lens element units and the focal power of the first lens element are properly allocated, and a quantity of lens elements, and a focal length, a thickness, a refractive index, an Abbe number, and the like of each lens element are combined, so that features such as a wide aperture, a small size, low costs, and high resolution of the lens assembly 10 can be implemented. For optical parameters of the lens assembly 10 including the foregoing lens elements, refer to Table 10.4.

Table 10.4 shows optical parameters of the lens assembly according to Embodiment 10 of this application.

|  | F# | EFL/mm | Mag | IMH/mm | TTL/mm | G1/mm | G2/mm |
|---|---|---|---|---|---|---|---|
| Infinity state | 1.58 | 15.1 | - | 3.8 | 18.5 | 9.03 | -10.2 |
| Macro state | 1.54 | 9.48 | 0.295x | | | | |

It can be learned from Table 10.4 that the lens assembly 10 provided in Embodiment 10 of this application has features of a wide aperture and a small total track length, can implement a long-focus telephoto function to ensure high-quality imaging in a scene like a distant image-shooting scene, and can also implement a macro function with a high magnification rate and high resolution to ensure high-definition imaging in a scene like a close-up image-shooting scene.

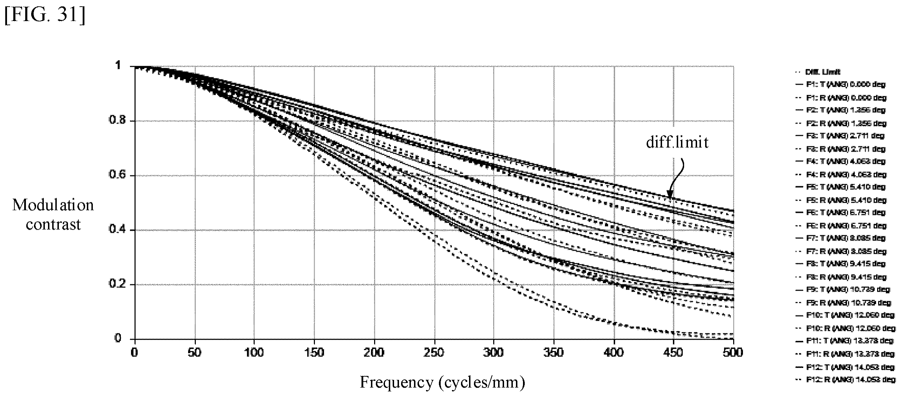

FIG. 31 is a curve diagram of a modulation transfer function for the lens assembly in the infinity state according to Embodiment 10 of this application.

In FIG. 31, horizontal coordinates represent different frequencies, vertical coordinates represent modulation contrasts, solid lines in the figure represent sagittal fields, and dashed lines in the figure represent tangential fields. In the figure, diff.limit represents a modulation transfer function of an imaging system for an infinitesimal object point. A curve closer to the diff.limit curve indicates better imaging quality. It can be learned from FIG. 31 that the lens assembly provided in this embodiment can implement high-quality imaging.

Embodiment 11

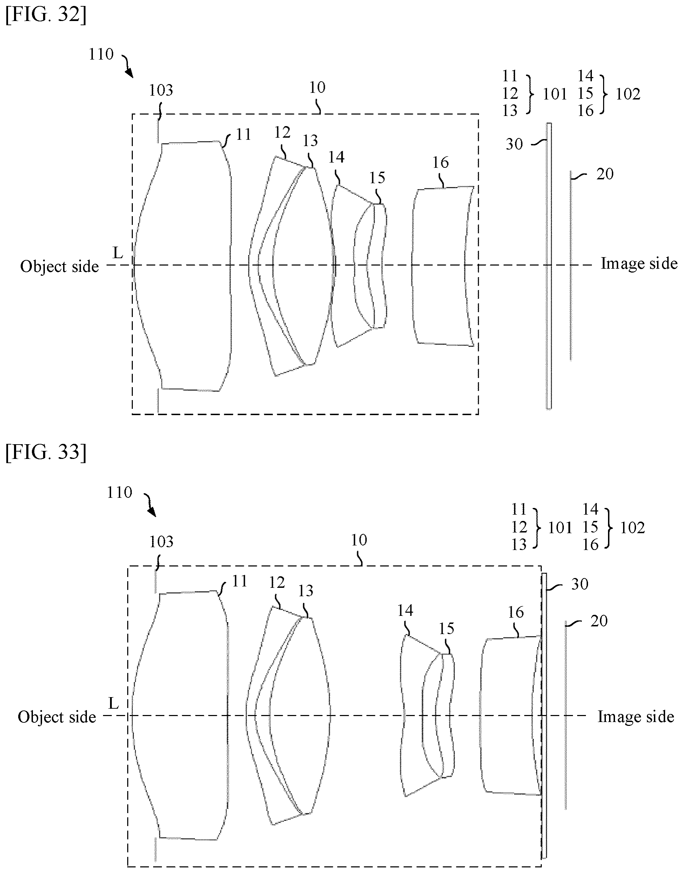

FIG. 32 is a diagram of a simulated structure of the camera module in which the lens assembly is in the infinity state according to Embodiment 11 of this application.

In this embodiment of this application, as shown in FIG. 32, the lens assembly 10 includes six lens elements with focal powers, and the first lens element unit 101 may include three lens elements with focal powers, for example, the first lens element 11, the second lens element 12, and the third lens element 13. The second lens element unit 102 may include three lens elements with focal powers, for example, the fourth lens element 14, the fifth lens element 15, and the sixth lens element 16. The first lens element 11, the second lens element 12, the third lens element 13, the fourth lens element 14, the fifth lens element 15, and the sixth lens element 16 are sequentially arranged along the optical axis L from the object side to the image side.

To be specific, in the camera module 110, the stop 103, the first lens element 11, the second lens element 12, the third lens element 13, the fourth lens element 14, the fifth lens element 15, the sixth lens element 16, the light filter 30, and the image sensor 20 are sequentially arranged along the optical axis L from the object side to the image side. Light entering the camera module 110 sequentially passes through the lens assembly 10 and the light filter 30 in the foregoing sequence and is irradiated onto the image sensor 20, and is finally imaged on the photosensitive surface of the image sensor 20.

The first lens element unit 101 has a positive focal power, and the second lens element unit 102 has a negative focal power.

Specifically, the first lens element 11 may have a positive focal power. At least a part that is of an object side surface of the first lens element 11 and that corresponds to the optical axis may be a convex surface, and at least a part that is of an image side surface of the first lens element 11 and that corresponds to the optical axis may be a concave surface.

The second lens element 12 may have a negative focal power. At least a part that is of an object side surface of the second lens element 12 and that corresponds to the optical axis may be a convex surface, and at least a part that is of an image side surface of the second lens element 12 and that corresponds to the optical axis may be a convex surface.

The third lens element 13 may have a positive focal power. At least a part that is of an object side surface of the third lens element 13 and that corresponds to the optical axis may be a convex surface, and at least a part that is of an image side surface of the third lens element 13 and that corresponds to the optical axis may be a concave surface.

The fourth lens element 14 may have a negative focal power. At least a part that is of an object side surface of the fourth lens element 14 and that corresponds to the optical axis may be a concave surface, and at least a part that is of an image side surface of the fourth lens element 14 and that corresponds to the optical axis may be a concave surface.

The fifth lens element 15 may have a positive focal power. At least a part that is of an object side surface of the fifth lens element 15 and that corresponds to an optical axis may be a convex surface, and at least a part that is of an image side surface of the fifth lens element 15 and that corresponds to the optical axis may be a convex surface.

The sixth lens element 16 may have a negative focal power. At least a part that is of an object side surface of the sixth lens element 16 and that corresponds to the optical axis may be a convex surface, and at least a part that is of an image side surface of the sixth lens element 16 and that corresponds to the optical axis may be a convex surface.

When the lens assembly 10 is in the infinity state, as shown in FIG. 32, the second lens element unit 102 is closer to the first lens element unit 101, and is farther away from the light filter 30 and the image sensor 20. When the lens assembly 10 switches from the infinity state to the macro state, the second lens element unit 102 moves toward the image side along the optical axis L.

FIG. 33 is a diagram of a simulated structure of a camera module in which a lens assembly is in a macro state according to Embodiment 11 of this application.

As shown in FIG. 33, when the lens assembly 10 is in the macro state, the second lens element 12 is closer to the light filter 30 and the image sensor 20, and is farther away from the first lens element unit 101.

A curvature radius R11 of the object side surface of the first lens element 11 is equal to 7.97, a curvature radius R12 of the image side surface of the first lens element 11 is equal to -5112.89, and a focal length f1 of the first lens element 11 is equal to 14.56. The first lens element 11 satisfies |(R11+R12)/f1|=350.6.

A focal length EFL1 of the lens assembly 10 in the infinity state is equal to 15.05, and a ratio f1/EFL1 of a focal length f1 of the first lens element 11 to the focal length EFL1 of the lens assembly 10 in the infinity state is equal to 0.98.

A refractive index Nd1 of the first lens element 11 is equal to 1.544.

A f-number F#1 of the lens assembly 10 in the infinity state is equal to 1.48. A f-number F#2 of the lens assembly 10 in the macro state is equal to 1.46.

A magnification rate Mag of the lens assembly 10 in the macro state is equal to 0.293x.

A focal length G1 of the first lens element unit 101 is equal to 8.64, and a ratio |G1/EFL1| of the focal length G1 of the first lens element unit 101 to the focal length EFL1 of the lens assembly 10 in the infinity state is equal to 0.57.

A focal length G2 of the second lens element unit 102 is equal to -8.95, and a ratio |G2/EFL1| of the focal length G2 of the second lens element unit 102 to the focal length EFL1 of the lens assembly 10 in the infinity state is equal to 0.59.

A focal length EFL2 of the lens assembly 10 in the macro state is equal to 9.53, a total track length TTL of the lens assembly 10 is equal to 17.94, and a ratio |EFL2/TTL| of the focal length EFL2 of the lens assembly 10 in the macro state to the total track length TTL of the lens assembly 10 is equal to 0.53.

A ratio EFL1/EFL2 of the focal length EFL1 of the lens assembly 10 in the infinity state to the focal length EFL2 of the lens assembly 10 in the macro state is equal to 1.58.

The following describes an example of optical parameters of each lens element in this embodiment.

Table 11.1 shows optical parameters of the lens elements in the camera module according to Embodiment 11 of this application.

| Lens element | Surface number | Surface profile | Curvature radius | Thickness | Material | Y semi-aperture |
|---|---|---|---|---|---|---|
| | Stop | - | - | -0.99 | - | 5.06 |
| L1 | S1 | Aspherical | 7.97 | 3.97 | 544.560 | 5.06 |
| | S2 | Aspherical | -5112.89 | 0.75 | | 5.16 |
| L2 | S3 | Aspherical | 3.69 | 0.40 | 677.192 | 4.53 |
| | S4 | Aspherical | 2.44 | 0.59 | | 4.10 |
| L3 | S5 | Aspherical | 5.35 | 2.50 | 544.560 | 4.10 |
| | S6 | Aspherical | -9.56 | 0.10 | | 4.04 |
| L4 | S7 | Aspherical | -3.62 | 0.75 | 544.560 | 3.37 |
| | S8 | Aspherical | -14.41 | 0.54 | | 2.58 |
| L5 | S9 | Aspherical | 3.75 | 0.60 | 664.205 | 2.56 |
| | S10 | Aspherical | 4.23 | 1.24 | | 2.55 |
| L6 | S11 | Aspherical | 21.21 | 2.16 | 561.434 | 3.17 |
| | S12 | Aspherical | 11.54 | 4.36 | | 3.31 |
| IR | S13 | Spherical | - | 0.21 | 518.642 | 3.82 |
| | S14 | Spherical | - | 0.77 | | 5.90 |
| | Image plane | Spherical | - | - | - | 4.27 |

L1 is the first lens element 11, L2 is the second lens element 12, L3 is the third lens element 13, L4 is the fourth lens element 14, L5 is the fifth lens element 15, L6 is the sixth lens element 16, and IR is the light filter 30.

For specific illustration of S0 to S14, refer to Embodiment 1. Details are not described in this embodiment again.

For meanings of parameters such as the curvature radius, the thickness, the material, and the Y semi-aperture, also refer to Embodiment 1. Details are not described again in this embodiment.

Table 11.2 shows aspherical coefficients of the lens elements in the lens assembly according to Embodiment 11 of this application.

| | Curvature radius R | Conic coefficient K | A4 | A6 | A8 | A10 | A12 | A14 |
|---|---|---|---|---|---|---|---|---|
| S1 | 7.97 | 0 | -2.88E-04 | -2.05E-07 | -2.79E-06 | 3.48E-07 | -3.33E-08 | 1.93E-09 |
| S2 | -5112.89 | 0 | 6.35E-04 | 2.67E-04 | -1.14E-04 | 2.11E-05 | -2.56E-06 | 2.15E-07 |
| S3 | 3.69 | -1 | -1.89E-02 | 4.23E-03 | -4.38E-04 | -1.37E-04 | 6.64E-05 | -1.39E-05 |
| S4 | 2.44 | -1 | -2.43E-02 | 5.68E-03 | -6.36E-04 | -1.19E-04 | 4.54E-05 | -2.71E-06 |
| S5 | 5.35 | 0 | -2.87E-03 | 2.89E-04 | -8.58E-05 | 1.41E-04 | -8.86E-05 | 2.90E-05 |
| S6 | -9.56 | 0 | 2.21E-04 | 3.09E-05 | -4.89E-06 | 1.19E-06 | -2.13E-07 | 2.08E-08 |
| S7 | -3.62 | 0 | 5.09E-02 | -1.26E-02 | 3.09E-03 | -6.10E-04 | 9.06E-05 | -9.44E-06 |
| S8 | -14.41 | 0 | 4.39E-02 | -7.79E-03 | 1.17E-03 | -7.67E-05 | -1.50E-05 | 4.88E-06 |
| S9 | 3.75 | 0 | -2.13E-02 | 2.82E-03 | -7.22E-04 | 9.45E-05 | -8.09E-06 | 3.56E-07 |
| S10 | 4.23 | 0 | -2.84E-02 | 5.19E-03 | -1.43E-03 | 2.49E-04 | -2.63E-05 | 1.34E-06 |
| S11 | 21.21 | 0 | -4.82E-03 | 6.94E-04 | -1.53E-04 | 3.12E-05 | -2.22E-06 | 3.12E-08 |
| S12 | 11.54 | 0 | 1.53E-03 | -9.22E-03 | 1.12E-02 | -8.56E-03 | 4.47E-03 | -1.64E-03 |
| | A16 | A18 | A20 | A22 | A24 | A26 | A28 | A30 |
| S1 | -6.92E-11 | 1.38E-12 | -1.15E-14 | 0.00E+00 | 0.00E+00 | 0.00E+00 | 0.00E+0 0 | 0.00E+0 0 |
| S2 | -1.28E-08 | 5.44E-10 | -1.61E-11 | 3.16E-13 | -3.68E-15 | 1.90E-17 | 4.58E-21 | 0.00E+0 0 |
| S3 | 1. 8 4E-0 6 | -1.67E-07 | 1.08E-08 | -4.99E-10 | 1.60E-11 | -3.41E-13 | 4.34E-15 | -2.50E-17 |
| S4 | -1.13E-06 | 3.13E-07 | -4.05E-08 | 3.22E-09 | -1.66E-10 | 5.42E-12 | -1.02E-13 | 8.57E-16 |
| S5 | -5.89E-06 | 8.07E-07 | -7.68E-08 | 5.12E-09 | -2.34E-10 | 7.05E-12 | -1.25E-13 | 1.00E-15 |
| S6 | -9.95E-10 | 1.86E-11 | 0.00E+0 0 | 0.00E+00 | 0.00E+00 | 0.00E+00 | 0.00E+0 0 | 0.00E+0 0 |
| S7 | 6.44E-07 | -2.57E-08 | 4.55E-10 | 0.00E+00 | 0.00E+00 | 0.00E+00 | 0.00E+0 0 | 0.00E+0 0 |
| S8 | -5.51E-07 | 2.36E-08 | 0.00E+0 0 | 0.00E+00 | 0.00E+00 | 0.00E+00 | 0.00E+0 0 | 0.00E+0 0 |
| S9 | 0.00E+00 | 0.00E+00 | 0.00E+0 0 | 0.00E+00 | 0.00E+00 | 0.00E+00 | 0.00E+0 0 | 0.00E+0 0 |
| S10 | 7.41E-09 | -2.59E-09 | 0.00E+0 0 | 0.00E+00 | 0.00E+00 | 0.00E+00 | 0.00E+0 0 | 0.00E+0 0 |
| S11 | 1.39E-09 | 0.00E+00 | 0.00E+0 0 | 0.00E+00 | 0.00E+00 | 0.00E+00 | 0.00E+0 0 | 0.00E+0 0 |
| S12 | 4.36E-04 | -8.40E-05 | 1.18E-05 | -1.18E-06 | 8.32E-08 | -3.89E-09 | 1.08E-10 | -1.35E-12 |

It can be learned from Table 11.2 that all lens elements in the lens assembly 10 are aspherical lens elements, that is, the lens assembly 10 includes 12 aspherical surfaces. An aspherical surface profile Z of each lens element in the lens assembly 10 may be calculated according to the following aspherical surface formula:

$$Z = \frac{cr^2}{1+\sqrt{1-(1+k)c^2r^2}} + \sum_{i=1}^{n} A_I E_I(x, y)$$

The parameter c=1/R, R represents a curvature radius, r represents a distance from a point on an optical surface to the optical axis, Z represents an aspherical sagittal height of the point along the optical axis, k represents a quadratic coefficient of the surface, and i represents an aspherical coefficient term, where i is 30 in this embodiment. Ai represents an aspherical coefficient.

Table 11.3 shows focal lengths of the lens elements and the lens element units in the lens assembly according to Embodiment 11 of this application.

| f1/mm | f2/mm | f3/mm | f4/mm | f5/mm | f6/mm |
|-------|-------|-------|-------|-------|-------|
| 14.56 | -12.08 | 6.68 | -9.09 | 32.67 | -48.81 |

Herein, f1, f2, f3, f4, f5 and f6 are respectively focal lengths of the first lens element 11, the second lens element 12, the third lens element 13, the fourth lens element 14, the fifth lens element 15, and the sixth lens element 16.

The lens assembly 10 uses the foregoing architecture in which there are two lens element units. Focal powers of the two lens element units and the focal power of the first lens element are properly allocated, and a quantity of lens elements, and a focal length, a thickness, a refractive index, an Abbe number, and the like of each lens element are combined, so that features such as a wide aperture, a small size, low costs, and high resolution of the lens assembly 10 can be implemented. For optical parameters of the lens assembly 10 including the foregoing lens elements, refer to Table 14.4.

Table 11.4 shows optical parameters of the lens assembly according to Embodiment 11 of this application.

| | F# | EFL/mm | Mag | IMH/mm | TTL/mm | G1/mm | G2/mm |
|---|-----|--------|-----|--------|--------|-------|-------|
| Infinity state | 1.48 | 15.05 | - | 3.82 | 17.94 | 8.64 | -8.95 |
| Macro state | 1.46 | 9.53 | 0.293x | | | | |

It can be learned from Table 11.4 that the lens assembly 10 provided in Embodiment 11 of this application has features of a wide aperture and a small total track length, can implement a long-focus telephoto function to ensure high-quality imaging in a scene like a distant image-shooting scene, and can also implement a macro function with a high magnification rate and high resolution to ensure high-definition imaging in a scene like a close-up image-shooting scene.

Embodiment 12

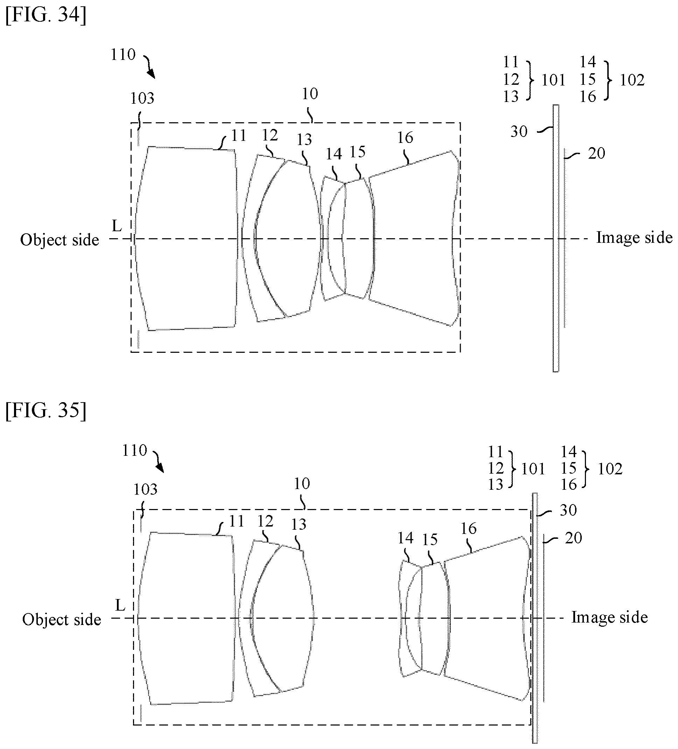

FIG. 34 is a diagram of a simulated structure of the camera module in which the lens assembly is in the infinity state according to Embodiment 12 of this application.

In this embodiment of this application, as shown in FIG. 34, the lens assembly 10 includes six lens elements with focal powers, and the first lens element unit 101 may include three lens elements with focal powers, for example, the first lens element 11, the second lens element 12, and the third lens element 13. The second lens element unit 102 may include three lens elements with focal powers, for example, the fourth lens element 14, the fifth lens element 15, and the sixth lens element 16. The first lens element 11, the second lens element 12, the third lens element 13, the fourth lens element 14, the fifth lens element 15, and the sixth lens element 16 are sequentially arranged along the optical axis L from the object side to the image side.

To be specific, in the camera module 110, the stop 103, the first lens element 11, the second lens element 12, the third lens element 13, the fourth lens element 14, the fifth lens element 15, the sixth lens element 16, the light filter 30, and the image sensor 20 are sequentially arranged along the optical axis L from the object side to the image side. Light entering the camera module 110 sequentially passes through the lens assembly 10 and the light filter 30 in the foregoing sequence and is irradiated onto the image sensor 20, and is finally imaged on the photosensitive surface of the image sensor 20.

The first lens element unit 101 has a positive focal power, and the second lens element unit 102 has a negative focal power.

Specifically, the first lens element 11 may have a positive focal power, at least a part that is of an object side surface of the first lens element 11 and that corresponds to the optical axis may be a convex surface, and at least a part that is of an image side surface of the first lens element 11 and that corresponds to the optical axis may be a convex surface.

The second lens element 12 may have a negative focal power. At least a part that is of an object side surface of the second lens element 12 and that corresponds to the optical axis may be a convex surface, and at least a part that is of an image side surface of the second lens element 12 and that corresponds to the optical axis may be a convex surface.

The third lens element 13 may have a positive focal power. At least a part that is of an object side surface of the third lens element 13 and that corresponds to the optical axis may be a convex surface, and at least a part that is of an image side surface of the third lens element 13 and that corresponds to the optical axis may be a concave surface.

The fourth lens element 14 may have a negative focal power. At least a part that is of an object side surface of the fourth lens element 14 and that corresponds to the optical axis may be a concave surface, and at least a part that is of an image side surface of the fourth lens element 14 and that corresponds to the optical axis may be a convex surface.

The fifth lens element 15 may have a positive focal power. At least a part that is of an object side surface of the fifth lens element 15 and that corresponds to the optical axis may be a convex surface, and at least a part that is of an image side surface of the fifth lens element 15 and that corresponds to the optical axis may be a concave surface.

The sixth lens element 16 may have a negative focal power. At least a part that is of an object side surface of the sixth lens element 16 and that corresponds to the optical axis may be a concave surface, and at least a part that is of an image side surface of the sixth lens element 16 and that corresponds to the optical axis may be a convex surface.

When the lens assembly 10 is in the infinity state, as shown in FIG. 34, the second lens element unit 102 is closer to the first lens element unit 101, and is farther away from the light filter 30 and the image sensor 20. When the lens assembly 10 switches from the infinity state to the macro state, the second lens element unit 102 moves toward the image side along the optical axis L.

FIG. 35 is a diagram of a simulated structure of a camera module in which a lens assembly is in a macro state according to Embodiment 12 of this application.

As shown in FIG. 35, when the lens assembly 10 is in the macro state, the second lens element 12 is closer to the light filter 30 and the image sensor 20, and is farther away from the first lens element unit 101.

A curvature radius R11 of the object side surface of the first lens element 11 is equal to 10.14, a curvature radius R12 of the image side surface of the first lens element 11 is equal to -43, and a focal length f1 of the first lens element 11 is equal to 14.1. The first lens element 11 satisfies |(R11+R12)/f1|=2.33.

A focal length EFL1 of the lens assembly 10 in the infinity state is equal to 15.35, and a ratio f1/EFL1 of a focal length f1 of the first lens element 11 to the focal length EFL1 of the lens assembly 10 in the infinity state is equal to 0.95.

A refractive index Nd1 of the first lens element 11 is equal to 1.544.

A f-number F#1 of the lens assembly 10 in the infinity state is equal to 1.88. A number F#2 of the lens assembly 10 in the macro state is equal to 1.85.

A magnification rate Mag of the lens assembly 10 in the macro state is equal to 0.47x.

A focal length G1 of the first lens element unit 101 is equal to 8.64, and a ratio |G1/EFL1| of the focal length G1 of the first lens element unit 101 to the focal length EFL1 of the lens assembly 10 in the infinity state is equal to 0.56.

A focal length G2 of the second lens element unit 102 is equal to -8.71, and a ratio |G2/EFL1| of the focal length G2 of the second lens element unit 102 to the focal length EFL1 of the lens assembly 10 in the infinity state is equal to 0.56.

A focal length EFL2 of the lens assembly 10 in the macro state is equal to 7.34, a total track length TTL of the lens assembly 10 is equal to 18.9, and a ratio |EFL2/TTL| of the focal length EFL2 of the lens assembly 10 in the macro state to the total track length TTL of the lens assembly 10 is equal to 0.39.

A ratio EFL1/EFL2 of the focal length EFL1 of the lens assembly 10 in the infinity state to the focal length EFL2 of the lens assembly 10 in the macro state is equal to 2.09.

The following describes an example of optical parameters of each lens element in this embodiment.

Table 12.1 shows optical parameters of the lens elements in the camera module according to Embodiment 12 of this application.

| Lens element | Surface number | Surface profile | Curvature radius | Thickness | Material | Y semi-aperture |
|---|---|---|---|---|---|---|
|  | Stop | - | - | -0.15 | - | 4.07 |
| L1 | S1 | Aspherical | 10.14 | 4.52 | 544.560 | 4.07 |
| L1 | S2 | Aspherical | -43 | 0.19 | 544.560 | 3.88 |
| L2 | S3 | Aspherical | 6.00 | 0.53 | 677.192 | 3.68 |
| L2 | S4 | Aspherical | 3.26 | 0.09 | 677.192 | 3.46 |
| L3 | S5 | Aspherical | 5.07 | 2.86 | 544.560 | 3.47 |
| L3 | S6 | Aspherical | -7.65 | 0.10 | 544.560 | 3.19 |
| L4 | S7 | Aspherical | -6.80 | 0.20 | 544.560 | 2.76 |
| L4 | S8 | Aspherical | 5.73 | 0.63 | 544.560 | 2.42 |
| L5 | S9 | Aspherical | 4.94 | 1.38 | 593.294 | 2.43 |
| L5 | S10 | Aspherical | -65.58 | 0.07 | 593.294 | 2.70 |
| L6 | S11 | Aspherical | -20.26 | 3.39 | 545.547 | 2.70 |
| L6 | S12 | Aspherical | 9.16 | 4.46 | 545.547 | 3.88 |
| IR | S13 | Spherical | - | 0.21 | 518.642 | 5.90 |
| IR | S14 | Spherical | - | 0.27 | 518.642 | 5.90 |

(continued)

| Lens element | Surface number | Surface profile | Curvature radius | Thickness | Material | Y semi-aperture |
|---|---|---|---|---|---|---|
| | Image plane | Spherical | - | - | - | 3.96 |

L1 is the first lens element 11, L2 is the second lens element 12, L3 is the third lens element 13, L4 is the fourth lens element 14, L5 is the fifth lens element 15, L6 is the sixth lens element 16, and IR is the light filter 30.

For specific illustration of S0 to S14, refer to Embodiment 1. Details are not described in this embodiment again.

For meanings of parameters such as the curvature radius, the thickness, the material, and the Y semi-aperture, also refer to Embodiment 1. Details are not described again in this embodiment.

Table 12.2 shows aspherical coefficients of the lens elements in the lens assembly according to Embodiment 12 of this application.

| | Curvature radius R | Conic coefficient K | A4 | A6 | A8 | A10 | A12 | A14 |
|---|---|---|---|---|---|---|---|---|
| S1 | 10.64 | 0 | -4.76E-04 | 1.08E-05 | -7.91E-06 | 2.63E-06 | -7.60E-07 | 1.57E-07 |
| S2 | -40.64 | 0 | 1.96E-03 | 8.83E-04 | -1.15E-03 | 4.92E-04 | -1.22E-04 | 2.02E-05 |
| S3 | 6.00 | 0 | -4.01E-03 | -1.59E-04 | 3.63E-04 | -6.15E-04 | 3.69E-04 | -1.23E-04 |
| S4 | 3.26 | -1 | 2.93E-03 | -1.20E-02 | 1.02E-02 | -6.21E-03 | 2.65E-03 | -8.01E-04 |
| S5 | 5.07 | 0 | 1.03E-02 | -1.39E-02 | 1.07E-02 | -5.98E-03 | 2.43E-03 | -7.21E-04 |
| S6 | -7.65 | 0 | 7.89E-04 | 9.95E-06 | -3.41E-04 | 4.79E-04 | -3.14E-04 | 1.30E-04 |
| S7 | -6.80 | 0 | -3.40E-02 | 8.59E-02 | -8.60E-02 | 6.13E-02 | -3.26E-02 | 1.30E-02 |
| S8 | 5.73 | 0 | -6.92E-02 | 9.84E-02 | -8.77E-02 | 5.98E-02 | -3.06E-02 | 1.15E-02 |
| S9 | 4.94 | 0 | -3.30E-02 | 6.45E-03 | -4.37E-04 | -1.44E-04 | 3.03E-05 | -1.61E-06 |
| S10 | -65.58 | 0 | 2.3 5E-02 | -4.18E-02 | 2.79E-02 | -1.08E-02 | 2.48E-03 | -3.32E-04 |
| S11 | -20.26 | 0 | 2.94E-02 | -3.45E-02 | 1.10E-02 | 9.50E-03 | -1.36E-02 | 8.55E-03 |
| S12 | 9.16 | 0 | -1.66E-03 | -1.32E-03 | 1.37E-03 | -9.78E-04 | 4.65E-04 | -1.51E-04 |
| | A16 | A18 | A20 | A22 | A24 | A26 | A28 | A30 |
| S1 | -2.23E-08 | 2.17E-09 | -1.44E-10 | 6.47E-12 | -1.86E-13 | 3.12E-15 | -2.30E-17 | 0.00E+00 |
| S2 | -2.32E-06 | 1.87E-07 | -1.03E-08 | 3.73E-10 | -7.95E-12 | 7.59E-14 | 0.00E+00 | 0.00E+00 |
| S3 | 2.66E-05 | -3.99E-06 | 4.27E-07 | -3.24E-08 | 1.71E-09 | -5.99E-11 | 1.25E-12 | -1.17E-14 |
| S4 | 1.74E-04 | -2.73E-05 | 3.11E-06 | -2.54E-07 | 1.45E-08 | -5.47E-10 | 1.23E-11 | -1.25E-13 |
| S5 | 1.56E-04 | -2.45E-05 | 2.80E-06 | -2.29E-07 | 1.31E-08 | -4.96E-10 | 1.12E-11 | -1.14E-13 |
| S6 | -3.67E-05 | 7.3 6E-06 | -1.05E-06 | 1.07E-07 | -7.58E-09 | 3.51E-10 | -9.62E-12 | 1.17E-13 |
| S7 | -3.88E-03 | 8.70E-04 | -1.45E-04 | 1.78E-05 | -1.55E-06 | 9.14E-08 | -3.25E-09 | 5.26E-11 |
| S8 | -3.15E-03 | 6.11E-04 | -8.11E-05 | 6.84E-06 | -3.06E-07 | 2.56E-09 | 2.17E-10 | 0.00E+00 |
| S9 | 0.00E+00 | 0.00E+00 | 0.00E+00 | 0.00E+00 | 0.00E+00 | 0.00E+00 | 0.00E+00 | 0.00E+00 |
| S10 | 2.41E-05 | -7.42E-07 | 0.00E+00 | 0.00E+00 | 0.00E+00 | 0.00E+00 | 0.00E+00 | 0.00E+00 |
| S11 | -3.49E-03 | 1.01E-03 | -2.10E-04 | 3.13E-05 | -3.25E-06 | 2.24E-07 | -9.17E-09 | 1.69E-10 |
| S12 | 3.42E-05 | -5.49E-06 | 6.24E-07 | -4.98E-08 | 2.71E-09 | -9.58E-11 | 1.97E-12 | -1.80E-14 |

It can be learned from Table 12.2 that all lens elements in the lens assembly 10 are aspherical lens elements, that is, the lens assembly 10 includes 12 aspherical surfaces. An aspherical surface profile Z of each lens element in the lens assembly 10 may be calculated according to the following aspherical surface formula:

$$Z = \frac{cr^2}{1+\sqrt{1-(1+k)c^2r^2}} + \sum_{i=1}^{n} A_I E_I(x, y)$$

The parameter c=1/R, R represents a curvature radius, r represents a distance from a point on an optical surface to the optical axis, Z represents an aspherical sagittal height of the point along the optical axis, k represents a quadratic coefficient of the surface, and i represents an aspherical coefficient term, where i is 30 in this embodiment. Ai represents an aspherical coefficient.

Table 12.3 shows focal lengths of the lens elements and lens element units in the lens assembly according to Embodiment 12 of this application.

| f1/mm | f2/mm | f3/mm | f4/mm | f5/mm | f6/mm |
|---|---|---|---|---|---|
| 14.1 | -11.32 | 6.08 | -5.67 | 7.75 | -11.08 |

Herein, f1, f2, f3, f4, f5 and f6 are respectively focal lengths of the first lens element 11, the second lens element 12, the third lens element 13, the fourth lens element 14, the fifth lens element 15, and the sixth lens element 16.

The lens assembly 10 uses the foregoing architecture in which there are two lens element units. Focal powers of the two lens element units and the focal power of the first lens element are properly allocated, and a quantity of lens elements, and a focal length, a thickness, a refractive index, an Abbe number, and the like of each lens element are combined, so that features such as a wide aperture, a small size, low costs, and high resolution of the lens assembly 10 can be implemented. For optical parameters of the lens assembly 10 including the foregoing lens elements, refer to Table 12.4.

Table 12.4 shows optical parameters of the lens assembly according to Embodiment 12 of this application.

| | F# | EFL/mm | Mag | IMH/mm | TTL/mm | G1/mm | G2/mm |
|---|---|---|---|---|---|---|---|
| Infinity state | 1.88 | 15.35 | - | 3.86 | 18.9 | 8.64 | -8.71 |
| Macro state | 1.85 | 7.34 | 0.47x | | | | |

It can be learned from Table 12.4 that the lens assembly 10 provided in Embodiment 12 of this application has features of a wide aperture and a small total track length, can implement a long-focus telephoto function to ensure high-quality imaging in a scene like a distant image-shooting scene, and can also implement a macro function with a high magnification rate and high resolution to ensure high-definition imaging in a scene like a close-up image-shooting scene.

It should be noted that values and value ranges in embodiments of this application are approximate values, and there may be an error within a specific range. A person skilled in the art may consider that the error is negligible.

In descriptions of embodiments of this application, it should be noted that, unless otherwise explicitly stipulated and restricted, the terms "mount", "interconnect", and "connect" should be understood in a broad sense. For example, a connection may be a fixed connection, or may be an indirect connection through an intermediate medium, or may be an internal communication between two components, or may be an interaction relationship between two components. A person of ordinary skill in the art may understand specific meanings of the foregoing terms in embodiments of this application based on specific cases. The terms such as "first", "second", "third", "fourth", and the like (if any) are intended to distinguish between similar objects but do not necessarily indicate a specific order or sequence.

Finally, it should be noted that the foregoing embodiments are merely used to describe the technical solutions in embodiments of this application, but not to limit the technical solutions. Although embodiments of this application are described in detail with reference to the foregoing embodiments, a person of ordinary skill in the art should understand that the technical solutions recorded in the foregoing embodiments may still be modified, or some or all of technical features thereof may be equivalently replaced. However, these modifications or replacements do not depart from the scope of the technical solutions in embodiments of this application.

## Claims

1. A lens assembly, comprising at least a first lens element unit and a second lens element unit that are sequentially arranged along an optical axis from an object side to an image side, wherein the first lens element unit and the second lens element unit each comprise a lens element with a focal power, the first lens element unit has a positive focal power, and the second lens element unit has a negative focal power;

the second lens element unit is movably disposed along the optical axis, and the second lens element unit moves along the optical axis toward the image side, so that the lens assembly switches from an infinity state to a macro state; the lens element of the first lens element unit comprises at least a first lens element, and the first lens element is located on a side that is of the first lens element unit and that is close to the object side;

the first lens element satisfies a conditional expression: $|(R11+R12)/f1|>2.3$, wherein R11 is a curvature radius of an object side surface of the first lens element, R12 is a curvature radius of an image side surface of the first lens element, and f1 is a focal length of the first lens element; and

the lens assembly satisfies a conditional expression: $0.75<f1/EFL1<1$, wherein EFL1 is a focal length of the lens assembly in the infinity state.

2. The lens assembly according to claim 1, wherein an f-number F#1 of the lens assembly in the infinity state satisfies a conditional expression: $1.0<F\#1<2.5$.

3. The lens assembly according to claim 1 or 2, wherein an f-number F#2 of the lens assembly in the macro state satisfies a conditional expression: $1.0<F\#2<3$.

4. The lens assembly according to any one of claims 1 to 3, wherein a magnification rate Mag of the lens assembly in the macro state satisfies a conditional expression: $0.15x<Mag<0.5x$.

5. The lens assembly according to any one of claims 1 to 4, wherein the lens assembly further satisfies a conditional expression: $0.1<|G1/EFL1|<0.9$, wherein G1 is a focal length of the first lens element unit.

6. The lens assembly according to any one of claims 1 to 5, wherein the lens assembly further satisfies a conditional expression: $0.1<|G2/EFL1|<0.9$, wherein G2 is a focal length of the second lens element unit.

7. The lens assembly according to any one of claims 1 to 6, wherein the lens assembly further satisfies a conditional expression: $0.15<|EFL2/TTL|<0.95$, wherein TTL is a total track length of the lens assembly, and EFL2 is a focal length of the lens assembly in the macro state.

8. The lens assembly according to any one of claims 1 to 7, wherein the lens assembly further satisfies a conditional expression: $1.1<EFL1/EFL2<3.2$, wherein EFL2 is the focal length of the lens assembly in the macro state.

9. The lens assembly according to any one of claims 1 to 8, wherein a refractive index Nd1 of the first lens element satisfies a conditional expression: $1.4<Nd1<1.85$.

10. The lens assembly according to claim 9, wherein a molding material of the first lens element is glass or plastic.

11. The lens assembly according to any one of claims 1 to 10, wherein a shape of the lens element comprises at least one or a combination of the following: a circle, an ellipse, a track oval, and a square.

12. The lens assembly according to any one of claims 1 to 11, wherein the first lens element unit comprises the first lens element, a second lens element, and a third lens element that are sequentially arranged along the optical axis from the object side to the image side, the first lens element has a positive focal power, the second lens element has a negative focal power, and the third lens element has a positive focal power; and

the second lens element unit comprises a fourth lens element, a fifth lens element, and a sixth lens element that are sequentially arranged along the optical axis from the object side to the image side, the fourth lens element has a negative focal power, the fifth lens element has a positive focal power, and the sixth lens element has a negative focal power.

13. A camera module, comprising at least an image sensor and the lens assembly according to any one of claims 1 to 12, wherein the image sensor is located on a side that is of the lens assembly and that faces the image side.

14. An electronic device, comprising at least a housing and the camera module according to claim 13, wherein the camera module is disposed on the housing.

[FIG. 3]

[FIG. 4]

[FIG. 5]

[FIG. 6a]

[FIG. 6b]

[FIG. 7]

[FIG. 8]

[FIG. 9a]

EP 4 660 681 A1

[FIG. 9b]

diff.limit

Modulation
contrast

Frequency (cycles/mm)

[FIG. 10]

[FIG. 11]

[FIG. 12a]

diff.limit

Modulation contrast

Frequency (cycles/mm)

[FIG. 12b]

[FIG. 13]

[FIG. 14]

[FIG. 15a]

EP 4 660 681 A1

[FIG. 15b]

diff.limit

Modulation contrast

Frequency (cycles/mm)

- Diff. Limit
- F1: T (RIH) 0.0056 mm
- F1: R (RIH) 0.0056 mm
- F2: T (RIH) 0.3682 mm
- F2: R (RIH) 0.3682 mm
- F3: T (RIH) 0.7322 mm
- F3: R (RIH) 0.7322 mm
- F4: T (RIH) 1.0953 mm
- F4: R (RIH) 1.0953 mm
- F5: T (RIH) 1.4581 mm
- F5: R (RIH) 1.4581 mm
- F6: T (RIH) 1.8217 mm
- F6: R (RIH) 1.8217 mm
- F7: T (RIH) 2.1856 mm
- F7: R (RIH) 2.1856 mm
- F8: T (RIH) 2.5510 mm
- F8: R (RIH) 2.5510 mm
- F9: T (RIH) 2.9161 mm
- F9: R (RIH) 2.9161 mm
- F10: T (RIH) 3.2000 mm
- F10: R (RIH) 3.2000 mm

[FIG. 16]

[FIG. 17]

[FIG. 18]

[FIG. 19]

[FIG. 20]

[FIG. 21]

[FIG. 22]

[FIG. 23]

Modulation contrast

Frequency (cycles/mm)

diff.limit

EP 4 660 681 A1

[FIG. 24]

Object side

Image side

[FIG. 25]

Object side

Image side

[FIG. 26]

[FIG. 27]

[FIG. 28]

Modulation contrast

Frequency (cycles/mm)

diff.limit

[FIG. 29]

[FIG. 30]

[FIG. 31]

[FIG. 32]

[FIG. 33]

[FIG. 34]

[FIG. 35]

## INTERNATIONAL SEARCH REPORT

International application No.

**PCT/CN2024/114613**

| A. | CLASSIFICATION OF SUBJECT MATTER |
|---|---|

G02B15/14(2006.01)i

According to International Patent Classification (IPC) or to both national classification and IPC

| B. | FIELDS SEARCHED |
|---|---|

Minimum documentation searched (classification system followed by classification symbols)

IPC:G02B 15

Documentation searched other than minimum documentation to the extent that such documents are included in the fields searched

Electronic data base consulted during the international search (name of data base and, where practicable, search terms used)

CNABS: CNTXT; ENTXTC; VEN; WPABS; ENTXT; CJFD: 移动, 微距, 第一, 第1, 正, 第二, 第2, 负, first+, second+, positive, negative, micro 1w distance, mov+

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 117590559 A (HUAWEI TECHNOLOGIES CO., LTD.) 23 February 2024 (2024-02-23) claims 1-14 | 1-14 |
| X | CN 115561881 A (HUAWEI TECHNOLOGIES CO., LTD.) 03 January 2023 (2023-01-03) description, paragraphs 4-35 and 170-250, and figures 6-11 | 1-14 |
| X | CN 115248497 A (HUAWEI TECHNOLOGIES CO., LTD.) 28 October 2022 (2022-10-28) description, paragraphs 253-275, and figures 19a-22 | 1-11, 13-14 |
| X | JP 2000231056 A (CANON K.K.) 22 August 2000 (2000-08-22) description, paragraphs 11-42, and figures 1-10 | 1-11, 13-14 |
| A | CN 116482837 A (HUAWEI TECHNOLOGIES CO., LTD.) 25 July 2023 (2023-07-25) entire document | 1-14 |
| A | JP 2008191672 A (OLYMPUS CORP.) 21 August 2008 (2008-08-21) entire document | 1-14 |

☐ Further documents are listed in the continuation of Box C.      ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **26 November 2024** | **02 December 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/114613**

| Patent document cited in search report | | | Publication date (day/month/year) | Patent family member(s) | | | Publication date (day/month/year) |
|---|---|---|---|---|---|---|---|
| CN | 117590559 | A | 23 February 2024 | None | | | |
| CN | 115561881 | A | 03 January 2023 | None | | | |
| CN | 115248497 | A | 28 October 2022 | None | | | |
| JP | 2000231056 | A | 22 August 2000 | JP | 4365922 | B2 | 18 November 2009 |
| CN | 116482837 | A | 25 July 2023 | None | | | |
| JP | 2008191672 | A | 21 August 2008 | JP | 4509192 | B2 | 21 July 2010 |

Form PCT/ISA/210 (patent family annex) (July 2022)

**EP 4 660 681 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311129967